(19) Europäisches Patentamt
European Patent Office
Office européen des brevets

(11) **EP 2 351 057 B1**

(12) **EUROPÄISCHE PATENTSCHRIFT**

(45) Veröffentlichungstag und Bekanntmachung des Hinweises auf die Patenterteilung:
**25.02.2015  Patentblatt 2015/09**

(21) Anmeldenummer: **09752381.5**

(22) Anmeldetag: **18.11.2009**

(51) Int Cl.:
*H01F 27/28* (2006.01)    *H01F 38/12* (2006.01)
*H05B 41/04* (2006.01)

(86) Internationale Anmeldenummer:
**PCT/EP2009/065358**

(87) Internationale Veröffentlichungsnummer:
**WO 2010/060837 (03.06.2010 Gazette 2010/22)**

(54) **INTEGRIERTE GASENTLADUNGSLAMPE UND ZÜNDTRANSFORMATOR FÜR EINE INTEGRIERTE GASENTLADUNGSLAMPE**

INTEGRATED GAS DISCHARGE LAMP AND IGNITION TRANSFORMER FOR AN INTEGRATED GAS DISCHARGE LAMP

LAMPE À DÉCHARGE INTÉGRÉE ET TRANSFORMATEUR D'ALLUMAGE POUR UNE LAMPE À DÉCHARGE INTÉGRÉE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.11.2008   DE 102008059545**
**28.11.2008   DE 102008059561**

(43) Veröffentlichungstag der Anmeldung:
**03.08.2011   Patentblatt 2011/31**

(73) Patentinhaber: **OSRAM GmbH**
**80807 München (DE)**

(72) Erfinder:
• **RÖHL, Manfred**
**83052 Bruckmühl (DE)**
• **SIEßEGGER, Bernhard**
**81479 München (DE)**

(56) Entgegenhaltungen:
**EP-A- 0 886 286        EP-A- 1 635 619**
**WO-A-2007/087818    DE-A1- 10 317 945**
**US-A- 3 496 504        US-A- 3 826 967**
**US-A- 4 163 437**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die Erfindung betrifft eine integrierte Gasentladungslampe und einen Zündtransformator für eine integrierte Gasentladungslampe zum Erzeugen einer Zündspannung, mit einem Ferritkern und mindestens einer Primärwicklung sowie mindestens einer Sekundärwicklung, wobei die mindestens eine Sekundärwicklung von einem isolierten Metallband gebildet wird, das derart auf dem Ferritkern angeordnet ist, dass das Hochspannung führende Ende der mindestens einen Sekundärwicklung innen liegend angeordnet ist.

**Stand der Technik**

Die Erfindung geht aus von einer integrierten Gasentladungslampe und einem Zündtransformator für eine integrierte Gasentladungslampe nach der Gattung des Hauptanspruchs.

Aus der DE 199 13 942 C1 ist eine integrierte Gasentladungslampe bekannt, die ein integriertes Zündgerät mit einem Ringkerntransformator aufweist. Der Ringkerntransformator wird mit einer Sekundärwicklung, und dann mit einer Primärwicklung bewickelt. Da die Primärwicklung, um eine gute Kopplung des Transformators zu erreichen, einen großen Bereich der Sekundärwicklung überdeckt, muss die Isolation des Primärwicklungsdrahtes so ausgelegt sein, dass sie die gesamte von der Sekundärwicklung erzeugte Zündspannung isolieren kann. Dies ist aber aufwändig und teuer, da keine baulichen Maßnahmen vorgesehen sind, um die Spannung zu isolieren, sondern die Isolation des Drahtes selbst dies bewerkstelligen muss.

Aus der DE 10 2004 044 368 A1 ist ein verbesserter Zündtransformator bekannt, dessen Ferrit eine Topfkernform aufweist, und die Sekundärwicklung aus einem Metallband besteht. Dieser Transformator ist aber aufwändig zu produzieren, da die Sekundärwicklung nicht auf den Ferrit gewickelt werden kann, sondern auf einem Dorn gewickelt werden muss und erst als fertiger Wickel in den Topfkernförmigen Ferrit eingelegt werden kann. Aufgrund der Fertigungstoleranzen wird hier der zur Verfügung stehende Wickelraum nicht gut genutzt und auch die Kopplung ist nicht optimal.

Aus der WO 2007 / 087818 A, die als nächstliegender Stand der Technik angesehen wird, ist ein Scheibenförmiger Zündtransformator in der Form einer Filmspule bekannt, bei dem die Wicklung als isoliertes Metallband ausgeführt ist. Der Transformator weist zwar die Form einer Filmspule auf, jedoch ist keine konstruktive Lösung angegeben, wie der Zündtransformator einfach und kostengünstig gefertigt werden kann, da nicht klar ist, wie das Ende der Wicklung fixiert und verbunden wird.

**Aufgabe**

Es ist Aufgabe der Erfindung, einen verbesserten Zündtransformator für eine integrierte Gasentladungslampe zum Erzeugen einer Zündspannung anzugeben, der einen Ferritkern und mindestens eine Primärwicklung sowie mindestens einer Sekundärwicklung aufweist, wobei die mindestens eine Sekundärwicklung von einem isolierten Metallband gebildet wird, das derart auf dem Ferritkern angeordnet ist, dass das Hochspannung führende Ende der mindestens einen Sekundärwicklung innen liegend angeordnet ist, wobei der Ferritkern die Form einer Filmspule aufweist, und die Sekundärwicklung wie ein Film auf den Ferritkern aufgewickelt ist, wobei der Ferritkern zwei im wesentlichen parallele Seitenwände und einen Mittelkern aufweist, und die Außenkontur der Seitenwände rund oder im Wesentlichen quadratisch ist, und der Zündtransformator eine Primärwicklung mit mindestens einer Windung aufweist.

**Darstellung der Erfindung**

Die Lösung der Aufgabe bezüglich des Zündtransformators erfolgt erfindungsgemäß mit einem Zündtransformator zum Erzeugen einer Zündspannung für eine Gasentladungslampe, mit einem Ferritkern und mindestens einer Primärwicklung sowie mindestens einer Sekundärwicklung, wobei die mindestens eine Sekundärwicklung von einem isolierten Metallband gebildet wird, das derart auf dem Ferritkern angeordnet ist, dass das Hochspannung führende Ende der mindestens einen Sekundärwicklung innen liegend angeordnet ist, wobei der Ferritkern die Form einer Filmspule aufweist, und die Sekundärwicklung wie ein Film auf den Ferritkern aufgewickelt ist, wobei der Ferritkern zwei im wesentlichen parallele Seitenwände und einen Mittelkern aufweist, und die Außenkontur der Seitenwände rund oder im Wesentlichen quadratisch ist, und der Zündtransformator eine Primärwicklung mit mindestens einer Windung aufweist, wobei die Primärwicklung als bandförmiges, federndes Stanzbiegeteil so ausgeführt ist, dass die Sekundärwicklung durch die Federkraft der Primärwicklung gesichert wird, und das äußere Ende der Sekundärwicklung elektrisch mit der Primärwicklung verbunden ist. Dies stellt eine einfache und kostengünstige Fertigung des Zündtransformators sicher.

Die Lösung der Aufgabe bezüglich der integrierten Gasentladungslampe erfolgt erfindungsgemäß mit einer integrierten Gasentladungslampe, die einen erfindungsgemäßen Zündtransformator enthält.

Erfindungsgemäß weist der Ferritkern zwei im wesentlichen parallele Seitenwände und einen Mittelkern auf, wobei die Außenkontur der Seitenwände rund oder im Wesentlichen quadratisch ist. Dadurch kann die Sekundärwicklung direkt auf den Ferritkern aufgewickelt werden.

Der Ferritkern besteht dabei bevorzugt aus zwei Ferritkernhälften, die zusammengesetzt die Form einer Filmspule ergeben, wobei der Mittelkern des Ferritkerns eine hohlzylindrische Form aufweist und aus zwei Hälften besteht, und eine Ferritkernhälfte je eine Seitenwand und eine Mittelkernhälfte aufweist. Mit dieser Anordnung kann das innen liegende Ende der Sekundärwicklung zwischen den Mittelkernhälften beklemmt werden, was das Wickeln der Sekundärwicklung vereinfacht. Der Ferritkern kann aber auch drei Teile aufweisen, die zentrisch übereinander gelegt die Form einer Filmspule ergeben, wobei zwei der drei Teile im wesentlichen identisch sind und die beiden Seitenwände der Filmspule bilden und der dritte Teil eine hohlzylindrische Form aufweist, die den Mittelkern der Filmspule bildet, wobei der hohlzylindrische dritte Teil einen Schlitz in Längsrichtung aufweist. Dadurch ist die Sekundärwicklung enger vom Ferritkern umschlossen, was eine bessere Kopplung des Zündtransformators ergibt.

Weist der Zündtransformator einen Kontaktkörper auf, der sich im Inneren des hohlzylindrischen Bereichs des Ferritkerns befindet, so kann der Anfang des Metallbandes der Sekundärwicklung zwischen den beiden Kernhälften oder durch den Schlitz im hohlzylindrischen dritten Teil nach innen geführt werden und dort elektrisch mit dem Kontaktkörper verbunden werden. Der Kontaktkörper wiederum ist elektrisch mit einer Stromzuführung des Hochdruckentladungslampenbrenners verbindbar. Dies stellt eine effiziente und kurze Anbindung des Zündtransformators an den Gasentladungslampenbrenner sicher.

Der Kontaktkörper besteht dabei bevorzugt aus einem gebogenen Blechteil, wobei das gebogene Blechteil aus einer im wesentlichen Rechteckigen Fläche besteht, die zylinderförmig zusammengebogen ist und zwei lateral abstehende Laschen aufweist, die sich im gebogenen Zustand gegenüberstehen und wie zwei Dachflächen gegeneinander geneigt sind, und an dem Ende, an dem sich die beiden Dachflächen berühren so ausgeformt sind, dass ein Stromzuführungsdraht der Hochdruckentladungslampenelektrode zentriert geklemmt wird. Dies macht die Kontaktierung des Stromzuführungsdrahtes des Gasentladungslampenbrenners besonders einfach.

Erfindungsgemäß weist der Zündtransformator eine Primärwicklung mit mindestens einer Windung auf, die als bandförmiges, federndes Stanzbiegeteil so ausgeführt ist, dass die Sekundärwicklung durch die Federkraft der Primärwicklung gesichert wird, und das äußere Ende der Sekundärwicklung elektrisch mit der Primärwicklung verbunden ist. So kann der Zündtransformator einfacher produziert werden und ist leichter handelbar.

Ist das Stanzbiegeteil der Primärwicklung rund oder eckig ausgeformt, wobei im Fall der eckigen Ausformung an den Ecken das Stanzbiegeteil zylinderförmige, nach innen weisende Rundungen aufweist, in die Rückschlussferrite eingeklemmt sind, so ist der Zündtransformator besonders kompakt und kann im Falle einer eckigen Ausformung mit einem geschlossenen magnetischen Rückschluss versehen werden.

Besonders bevorzugt weist das Stanzbiegeteil der Primärwicklung dabei mindestens zwei spiralförmig übereinander liegende Windungen auf. Das verbessert den Stromfluss im Primärkreis im Augenblick der Zündung.

Wenn das Stanzbiegeteil der Primärwicklung lateral angeformte erste Laschen aufweist, die der mechanischen Befestigung des Zündtransformators dienen, so kann der Zündtransformator einfach und sicher auf einer Leiterplatte oder dergleichen befestigt werden. Weist das Stanzbiegeteil der Primärwicklung an beiden Enden nach außen weisende Rundungen zur mechanischen Entlastung von am jeweiligen Ende lateral angeformten zweiten Laschen auf, die wiederum der elektrischen Kontaktierung mit einer Zündelektronik dienen, so wird die Lötstelle der elektrischen Kontaktierung geschont. Die Lötstelle kann dann insbesondere bei grossen Temperaturschwankungen nicht mehr brechen.

Der Zündtransformator wird vorzugsweise mit einem geeigneten Mittel, insbesondere mit einem Tränklack, getränkt ist, oder mit Vergussmasse vergossen, um die mechanische Stabilität und die elektrische Isolationsfestigkeit zu erhöhen.

Wenn die Seitenwände des Zündtransformators auf der der Wicklung zugewandten Seite von außen nach innen verlaufende längliche Vertiefungen aufweisen, wird das Tränken oder das Vergießen deutlich erleichtert. Ein verbessertes Eindringen des Tränklacks oder der Vergußmasse ist die Folge.

Das Verhältnis aus Durchmesser zu Höhe des Ferritkerns ist dabei bevorzugter weise größer als 1 und kleiner als 9, insbesondere größer als 1,5 und kleiner als 5. Damit bleibt der Zündtransformator kompakt und erreicht eine hohe elektrische Effizienz.

Weitere vorteilhafte Weiterbildungen und Ausgestaltungen der erfindungsgemäßen integrierten Gasentladungslampe und des erfindungsgemäßen Zündtransformators ergeben sich aus weiteren abhängigen Ansprüchen und aus der folgenden Beschreibung.

**Kurze Beschreibung der Zeichnung(en)**

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:

Fig. 1    eine Schnittansicht einer erfindungsgemäßen integrierten Gasentladungslampe in einer ersten Ausführungsform,

Fig. 2    eine Explosionsansicht der mechanischen Bauteile der integrierten Gasentladungslampe in der ersten Ausführungsform,

Fig. 3    eine Schnittansicht einer erfindungsgemäßen integrierten Gasentladungslampe in einer zweiten Ausführungsform,

Fig. 4    eine perspektivische Ansicht einer erfindungsgemäßen integrierten Gasentladungslampe in einer zweiten Ausführungsform,

Fig. 5    eine Ansicht der Schnittstelle Scheinwerfer/Gasentladungslampe,

Fig. 6    eine Detailansicht der elektrischen Kontaktierung,

Fig. 7    eine Detailansicht der mechanischen Kontaktierung,

Fig. 8    eine Schnittansicht einer dritten Ausführungsform der integrierten Gasentladungslampe,

Fig. 9    eine perspektivische Ansicht einer erfindungsgemäßen integrierten Gasentladungslampe in einer vierten Ausführungsform,

Fig. 10   eine perspektivische Ansicht eines Zündtransformators der integrierten Gasentladungslampe,

Fig. 11   eine perspektivische Ansicht des oberen Teils des Zündtransformators,

Fig. 12   eine perspektivische Ansicht des unteren Teils des Zündtransformators,

Fig. 13   eine perspektivische Ansicht des unteren Teils des Zündtransformators mit sichtbarer Sekundärwicklung,

Fig. 14   eine Explosionsansicht des Zündtransformators in einer zweiten runden Ausführungsform,

Fig. 15   eine Schnittansicht des Zündtransformators in einer zweiten runden Ausführungsform,

Fig. 16   eine Explosionsansicht des Zündtransformators in einer dritten runden Ausführungsform mit zweiwindiger Primärwicklung,

Fig. 17   eine Schnittansicht des Zündtransformators in einer dritten runden Ausführungsform mit zweiwindiger Primärwicklung,

Fig. 18a  ein schematisches Schaltbild einer unsymmetrischen Impulszündung nach dem Stand der Technik,

Fig. 18b  ein schematisches Schaltbild eines symmetrischen Impulszündgerätes nach dem Stand der Technik,

Fig. 19   ein schematisches Schaltbild eines asymmetrischen Impulszündgerätes,

Fig. 20   ein schematisches Schaltbild einer erweiterten Schaltung der integrierten Gasentladungslampe,

Fig. 21   eine Schnittansicht des Gasentladungslampenbrenners der integrierten Gasentladungslampe mit der Sockelkonstruktion,

Fig. 22   ein Diagramm der Betriebsfrequenz des Gasentladungslampenbrenners über seiner Brenndauer,

Fig. 23   eine Schaltungstopologie für eine Betriebsweise mit begradigtem Entladungsbogen in einer ersten Ausführungsform,

Fig. 24   eine Schaltungstopologie für eine Betriebsweise mit begradigtem Entladungsbogen in einer zweiten Ausführungsform,

Fig. 25 eine Schaltungstopologie für eine Betriebsweise mit begradigtem Entladungsbogen in einer dritten Ausführungsform,

Fig. 26 eine Schaltungstopologie für eine vereinfachte Betriebsweise eines Gleichspannungswandlers,

Fig. 27 eine Graphik, die den funktionalen Zusammenhang zwischen der normierten Sollbrennleistung und der kumulierten gewichteten Brenndauer des Gasentladungslampenbrenners darstellt,

Fig. 28 eine graphische Darstellung der Gewichtsfunktion $\gamma$,

Fig. 29 eine graphische Darstellung der Funktion $\alpha$,

Fig. 30 eine graphische Darstellung des normierten Solllichtstromes in Abhängigkeit von der normierten kumulierten Brenndauer des Gasentladungslampenbrenners,

Fig. 31 eine Schnittansicht einer erfindungsgemäßen integrierten Gasentladungslampe in einer fünften Ausführungsform,

Fig. 32 ein Ablaufdiagramm einer Variante einer ersten Ausführungsform eines Verfahrens zum Betreiben einer integrierten Gasentladungslampe,

Fig. 33 ein Ablaufdiagramm einer weiteren Variante der ersten Ausführungsform des Verfahrens zum Betreiben einer integrierten Gasentladungslampe,

Fig. 34 ein Ablaufdiagramm einer zweiten Ausführungsform eines Verfahrens zum Betreiben einer integrierten Gasentladungslampe.

## Bevorzugte Ausführung der Erfindung

Mechanische Integration

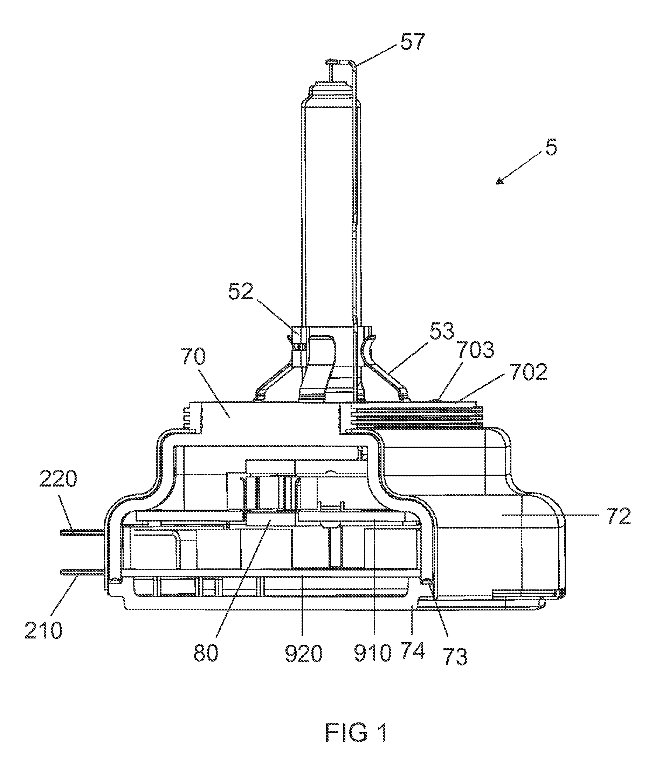

**Fig. 1** zeigt eine Schnittansicht einer ersten Ausführungsform der integrierten Gasentladungslampe 5. Als integrierte Gasentladungslampe 5 wird im Folgenden eine Gasentladungslampe 5 bezeichnet, die sowohl die Zündelektronik als auch die Betriebselektronik im Lampensockel der Gasentladungslampe 5 integriert hat. Die integrierte Gasentladungslampe 5 weist also nach außen hin keine spezifische Lampenschnittstelle mehr auf, sondern kann direkt an allgemein übliche und weit verbreitete Energieversorgungsnetze angeschlossen werden. In einer Ausgestaltung als Automobilscheinwerferlampe ist die Schnittstelle der integrierten Gasentladungslampe 5 somit die herkömmliche 12 V Versorgung des Automobilbordnetzes. In einer anderen Ausgestaltung als Automobillampe kann die Schnittstelle der integrierten Gasentladungslampe 5 auch eine zukünftige 42V-Versorgung eines modernen Automobil-Bordnetzes sein. Die integrierte Gasentladungslampe 5 kann aber ebenso dazu ausgelegt sein, an das Hochvoltbordnetz eines Elektroautos mit einer Akkuspannung von z.B. 48V, 96V, 120V bis hinauf zu beispielhaften 360V angeschlossen zu werden. Weiterhin kann die integrierte Gasentladungslampe dazu ausgelegt sein, an einer Notstromversorgung mit einem batteriegepufferten Niedervoltnetz zu arbeiten. Ebenso kann diese Lampe in Niedervolt-Inselnetzen zum Einsatz kommen, wie sie z.B. auf Berghütten verwendet werden. Auch konventionelle Niedervoltsysteme, in denen bisher Niedervolt-Halogenlampen zum Einsatz kamen sind hier als Anwendung denkbar. Selbst in tragbaren geräten wie Taschenlampen ist solch eine Lampe von Vorteil, da keine Verkabelung zwischen Lampe und Betriebsgerät notwendig ist. Dadurch, dass das Kabel entfällt, entfallen zusätzliche Kosten, Verkabelungsaufwand und unnötige Fehlerquellen. Als integrierte Gasentladungslampe 5 ist also im Folgenden eine Gasentladungslampe gemeint, die sämtliche zum Betrieb notwendige Elektronik in der Lampe selbst integriert hat, so dass sie direkt an eine konventionelle Netzversorgung angeschlossen werden kann.

Ein Lampenbrenner 50 wird von einer Metallklammer 52 gehaltert, die an 4 Halteblechen 53 angebracht ist. Die Halsbleche 53 sind in einen Lampensockel 70 eingegossen beziehungsweise eingespritzt. Der Lampensockel 70 besteht vorzugsweise aus Kunststoff, und wird über ein Spritzgussverfahren oder über ein Gießverfahren hergestellt. Um die elektrische Abschirmung zu verbessern, kann der Kunststoff des Lampensockels 70 elektrisch leitfähig oder metallisiert sein. Besonders vorteilhaft ist eine Metallisierung des Lampensockels auf der Außenseite, folglich auf dem der Zünd- und Betriebselektronik 910, 920 abgewandten Seite. Neben einer Metallisierung ist auch das Umspritzen von metallischen Leitern oder eines metallischen Geflechts möglich, so dass eine in der Wand des Lampensockels 70 befindliche elektrisch leitende Haut entsteht. Wird kein leitfähiger oder metallisierter Kunststoff verwendet, so ist der Kunststoffsockel mit einem elektrisch leitfähigen Gehäuse 72 aus einem leitfähigen Material wie z.B. Metall umschlossen. Das Metall kann z.B. ein korrosionsgeschütztes Eisenblech oder aber auch ein Buntmetall wie Aluminium, Magnesium oder Messing sein. Am brennerseitigen Abschluss des elektrisch leitfähigen Gehäuses 72 sitzt ein Dichtring 71, landläufig auch als O-Ring bezeichnet, der eine Abdichtung zum Reflektor hin bewerkstelligt. Durch diese Maßnahme kann ein dichtes Scheinwerfersystem aufgebaut werden, ohne die Lampe komplett in einen abgedichteten Scheinwerfer einbauen zu müssen. Dadurch, dass die Lampe außen am Scheinwerfer sitzt, ist die Kühlung einer im Sockel befindlichen Zünd und Betriebselektronik 910, 920 bedeutend besser und einfacher als mit einem herkömmlichen Aufbau, bei dem die Gasentladungslampe 5 in einen dichten Scheinwerfer eingebaut wird, bei dem nur eine schwach ausgeprägte kühlende Konvektion stattfinden kann. Die näherungsweise stehende Luft innerhalb des beschriebenen, dichten Scheinwerfers bedingt einen sogenannten Wärmestau, der zu deutlich höheren Temperaturen der Betriebselektronik führt, als in der vorgeschlagenen Ausführung, bei der die Lampe auf der von der Lichtaustrittsfläche abgewandten Seite ins Freie, beispielsweise in den Motorraum, steht.

Der Sockel 70 wird auf der dem Lampenbrenner 50 abgewandten Seite von einer Sockelplatte 74 abgeschlossen. Die Sockelplatte 74 besteht vorzugsweise aus einem thermisch wie elektrisch gut leitfähigem Material wie z.B. Aluminium oder Magnesium. Um eine mechanische Verbindung mit dem Sockel 70 sowie eine elektrische Verbindung mit dem elektrisch leitfähigen Gehäuse 72 herzustellen, weist dieses an der dem Lampenbrenner 50 abgewandten Seite mehrere Laschen 722 auf, die beim Zusammenbau der integrierten Gasentladungslampe 5 auf die Sockelplatte 74 umgebördelt werden, und so die benötigten Verbindungen herstellen. Unter anderem durch diese Art der Verbindungstechnik werden Lampenbrenner 50, Zündelektronik 910 und Betriebselektronik 920 untrennbar miteinander zu einer integrierten Gasentladungslampe 5 verbunden. Dies hat für den Kraftfahrzeug-Hersteller den Vorteil, dass im Gegensatz zu herkömmlichen Systemen, die aus Betriebsgerät und Gasentladungslampe bestehen, die integrierte Gasentladungslampe 5 von Seiten der Logistik als auch bei der Montage nur noch ein Teil ist, die geringere Komplexität führt zu reduzierten Kosten und eine Verwechslungsgefahr zwischen Komponenten mit gleicher Funktion aber unterschiedlicher Ausgestaltung, wie etwa unterschiedlichen Produktversionen der Betriebsgeräte, ist eliminiert. Für den Endkunden, beispielsweise den Fahrzeugeigentümer, ergibt sich hieraus der Vorteil, dass die reduzierte Komplexität den Austausch einer defekten integrierten Gasentladungslampe gegenüber dem Stand der Technik deutlich vereinfacht und beschleunigt, die Fehlersuche erleichtert und geringere Kenntnisse und Fähigkeiten für die Durchführung eines Lampenwechsels erforderlich sind. Der Wegfall der Kabel sowie Steckverbinder zwischen den Komponenten reduziert zudem die Kosten, erhöht die Zuverlässigkeit und reduziert das Gewicht.

Die Sockelplatte ist bevorzugt aus Aluminiumdruckguss oder aus Magnesiumdruckguss ausgeführt. Dies ist eine ebenso kostengünstige wie mechanisch sowie elektrisch hochwertige Variante. Eine elektrisch gut leitfähige Verbindung zwischen dem zumindest oberflächlich elektrisch leitfähigen Lampensockel 70 oder dem elektrisch leitfähigen Gehäuse 72 und der ebenfalls elektrisch leitfähigen Sockelplatte 74 ist insbesondere für eine gute elektromagnetische Abschirmung erforderlich. Diese Abschirmung verhindert die Störung benachbarter elektrischer oder elektronischer Baugruppen. Darüber hinaus gewährleistet die Abschirmung, dass die Baugruppen keinen negativen Einfluss auf die Funktion der Zünd- und Betriebselektronik 910, 920 haben. Zwischen die Sockelplatte 74 und den Sockel 70 ist ein Dichtungsring 73 angeordnet, der eine wasser- und luftdichte Verbindung zwischen dem Sockel 70 und der Sockelplatte 74 gewährleistet. In einer alternativen Ausführungsform ist der Sockel 70 sowie die Sockelplatte 74 derart ausgebildet, dass beide Teile ineinander einrastbar sind und in Rastlage gleichzeitig ein oder mehrere Kontaktpunkte zwischen dem elektrisch leitfähigem Gehäuse 72 und der Sockelplatte 74 bestehen, um eine gute Anbindung für die elektrische Abschirmung zu generieren. Auch hier ist wieder zwischen Sockel und Sockelplatte ein Dichtungsring angeordnet, der die Dichtheit des Sockels auf der dem Gasentladungslampenbrenner 50 abgewandten Seite gewährleistet.Im Inneren des Sockels 70 sind zwei Ebenen vorgesehen, die die Zünd- und Betriebselektronik aufnehmen. Eine erste kleinere Ebene, die dem Lampenbrenner 50 am nächsten liegt, nimmt die Zündelektronik 910 mit dem Zündtransformator 80 auf. Auf die Konstruktion des Zündtransformators 80 wird später noch eingegangen werden. Eine zweite größere Ebene nimmt die für den Betrieb des Entladungslampenbrenners 50 notwendige Betriebselektronik 920 auf. Die Zünd- sowie die Betriebselektronik kann auf jeder geeigneten Art von Leiterplatte, auch Platine genannt, angesiedelt sein. In Frage kommen konventionelle Leiterplatten, Metallkernleiterplatten, Leiterplatten in LTCC-Technologie, oxidierte oder beschichtete Metallplatten mit Leiterbahnen in Dickschichttechnik, Kunststoffleiterplatten in MID oder MID Heißprägetechnik oder geeignete andere mögliche Technologien zur Herstellung von temperaturfesten Leiterplatten. Die elektronischen Komponenten und Bauelemente welche die Zünd- und Betriebselektronik bilden, können sich dabei jeweils auf der Ober- und Unterseite sowie im Inneren der beiden Leiterplatten befinden. In der Figur 1 sind der Übersichtlichkeit halber außer dem Transformator 80 keine weiteren elektronischen Komponenten oder Bauelemente, auf der Leiterplatte dargestellt. Sofern die Leiterplatte für die Zündelektronik 910 und die Leiterplatte für die Betriebselektronik 920 aus demselben Material bestehen, können sie vorteilhafter Weise auf demselben Nutzen gefertigt werden. Dabei können zwischen den Platinen Brücken bestückt werden, die beim Vereinzeln und Einbringen in den Lampensockel 70 als elektrische Verbindungen zwischen den Platinen dienen. Als Brücken können beispielsweise Einzeldrähte, Flachbandleitungen oder starr-flexible Leiterplatten dienen. Die elektrische Verbindung der beiden Leiterplatten wird dabei so ausgeführt, dass sie eine Abstandsänderung zwischen den beiden Leiterplatten der Zünd- und Betriebselektronik durch thermische Ausdehnung, insbesondere durch eine thermische Zyklenbeanspruchung, unbeschadet übersteht. Hierzu sind beispielsweise die Drähte mit ausreichender Länge und entsprechender Verlegung innerhalb des Gehäuses zu versehen. Alternativ können beispielsweise eine oder mehrere Stift- und Buchsenleisten verwendet werden, die so bemessen und angeordnet sind, dass sie eine thermische Ausdehnung in Richtung der Längsachse des Gasentladungslampenbrenners der beiden Leiterplatten zulassen und dennoch in allen Fällen eine elektrische Verbindung gewährleisten. Hierzu sind beispielsweise die Stifte der Stiftleiste senkrecht zur jeweiligen Leiterplattenoberfläche angeordnet und die Einführlänge der Buchsen so bemessen, dass sie mehr Weg für die Stifte zur Verfügung stellen, als diese bedingt durch die thermische Ausdehnung innerhalb der Buchsen benötigen.

Die Leiterplatte für die Zündelektronik 910 weist auf der der Betriebselektronik zugewandten Seite eine elektrisch leitende Abschirmfläche auf, um Störungen, die durch die Hochspannung in der Zündelektronik zustande kommen, möglichst von der Betriebselektronik fernzuhalten. Bei einer metallischen oder Metallkernplatine ist diese Fläche inhärent vorhanden, bei anderen Platinenmaterialien wird vorzugsweise eine Kupferfläche oder Ähnliches auf dieser Seite aufgebracht. Wird eine Metallkernplatine verwendet, so kann mit dieser auch der Zündtransformator 80 gekühlt werden, der aufgrund der Nähe zum Gasentladungslampenbrenner 50 einer besonders hohen thermischen Belastung ausgesetzt ist. Eine elektrisch leitende Abschirmfläche zwischen der Zündelektronik 910 und der Betriebselektronik 920 kann alternativ auch durch ein metallisches Blech erfolgen, das zwischen den beiden Leiterplatten eingebracht ist und vorteilhafter Weise elektrisch leitend mit dem elektrisch leitfähigen Gehäuse 72 verbunden ist. Soll diese Abschirmfläche auch zur Kühlung des Zündtransformators 80 dienen, so ist es von Vorteil, wenn das metallische Blech auch eine gute thermische Anbindung beispielsweise durch eine Wärmeleitfolie oder Wärmeleitpaste an das elektrisch leitfähige Gehäuse 72 aufweist.

Die Leiterplatte für die Betriebselektronik 920 ist zwischen dem Sockel 70 und der Sockelplatte 74 eingeklemmt. Die Leiterplatte für die Betriebselektronik 920 weist an Ihrem Umfang jeweils auf der Ober- und Unterseite eine umlaufende Masseleiterbahn, so genannte Masseringe auf, die aufgrund von Durchkontaktierungen elektrisch leitend miteinander verbunden sind. Diese Durchkontaktierungen werden üblicherweise als Vias bezeichnet, und sind elektrische Kontaktierungen, die durch die Leiterplatte verlaufen. Diese Masseringe stellen durch die Einklemmung zwischen dem Sockel 70 und der Sockelplatte 74 einen elektrischen Kontakt zur Sockelplatte 74 her, wodurch die Masseanbindung der Betriebselektronik 920 zum elektrisch leitfähigem Gehäuse 72 über die umgebördelten Laschen 722 gewährleistet ist.

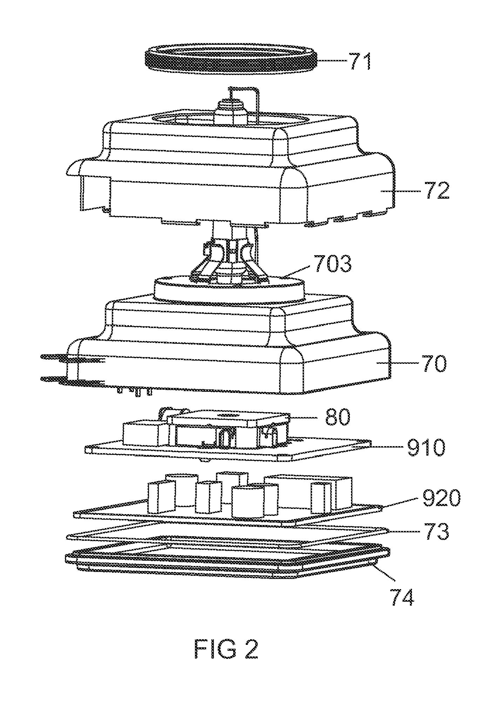

**Fig. 2** zeigt eine Explosionsansicht der mechanischen Bauteile der integrierten Gasentladungslampe 5 in der ersten Ausführungsform. Hier ist der Sockel quadratisch, im Prinzip kann er aber auch viele andere geeignete Formen aufweisen. Besonders günstige weitere Ausführungsformen wären rund, sechseckig, achteckig oder rechteckig. Zur Bestimmung der Außenkontur der Ausführungsform wird in Gedanken ein Schnitt senkrecht zur Längsachse des Gasentladungslampenbrenners 50 durch das die Elektronik beinhaltende Gehäuseteil durchgeführt, und die sich ergebende Außenkontur betrachtet, wobei Rundungen an den Gehäusekanten zu vernachlässigen sind. Im Fall der in **Fig. 1 und 2** dargestellten ersten Ausführungsform ergeben sich abhängig davon ob sich die gewählte Schnittfläche näher bei der Zündelektronik 910 oder näher bei der der Betriebselektronik 920 befindet, zwei Quadrate. Bei der ersten Ausführungsform handelt es sich deshalb um eine quadratische Ausführungsform. Die erste sich ergebende Außenkontur in der Nähe der Zündelektronik 910 ist kleiner als die zweite, was im Wesentlichen dadurch bedingt ist, dass die Leiterplatte der Zündelektronik 920 geringere Abmessungen besitzt als die der Betriebelektronik 910. Dies muss jedoch nicht zwingend der Fall sein und eine Ausführungsform in der beiden Außenkonturen die gleiche Größe besitzen und es folglich nur eine Einzige Außenkontur gibt, ist möglich. Auch müssen die beiden Geometrien der Außenkonturen in den verschiedenen Bereichen nicht identisch sein. Insbesondere eine im Bereich der Zündelektronik kleine, runde und eine im Bereich der Betriebselektronik größere, sechseckige Außenkontur erscheint als eine besonders vorteilhafte Ausführungsform.

Die Platine für die Betriebselektronik 920 ist dabei, wie oben schon dargelegt, zwischen den Sockel 70 und die Sockelplatte 74 eingeklemmt. Der Dichtungsring 73 kommt wie die Leiterplatte für die Betriebselektronik 920 zwischen dem Sockel 70 und der Sockelplatte 74 zu liegen, und ist außerhalb der Leiterplatte für die Betriebselektronik 920 angeordnet.

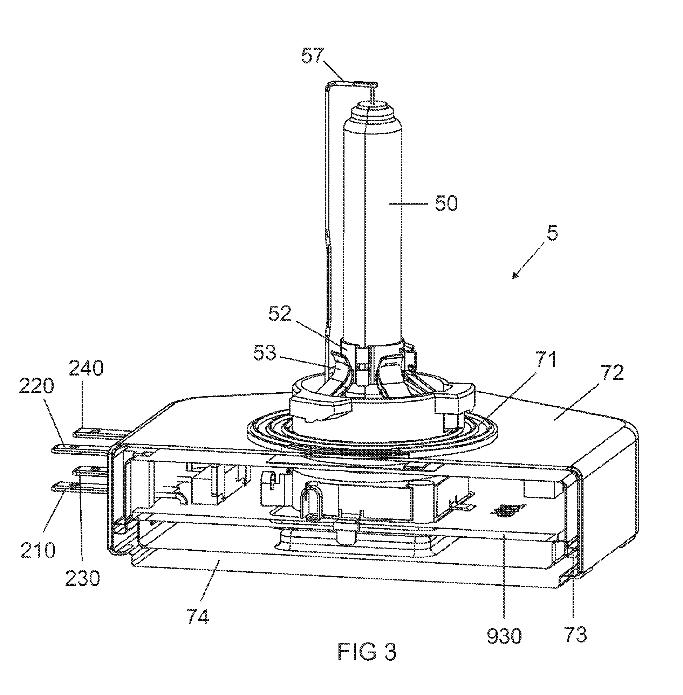

**Fig. 3** zeigt eine Schnittansicht einer zweiten Ausführungsform der integrierten Gasentladungslampe 5. Die zweite Ausführungsform ist ähnlich zur ersten Ausführungsform, es werden daher lediglich die Unterschiede zur ersten Ausführungsform beschrieben. In der zweiten Ausführungsform sind die Zündelektronik 910 und die Betriebselektronik 920 in einer gemeinsamen Ebene auf einer Leiterplatte als Gesamtbetriebselektronik 930 angeordnet. Durch diese Maßnahme kann der Sockel der erfindungsgemäßen Gasentladungslampe 5 flacher Ausfallen, wodurch auch ein Scheinwerfer, der diese Gasentladungslampe 5 verwendet ebenfalls weniger Tiefe zeigt. Der Zündtransformator 80 sitzt dabei mittig unter dem Gasentladungslampenbrenner 50. Dabei liegt der Mittelpunkt des Zündtransformators 80 bevorzugt in der Längsachse des Gasentladungslampenbrenners 50. Die Stromzuführung für die sockelnahe Gasentladungslampenbrennerelektrode ragt dabei in den mittleren Teil des Zündtransformators hinein. Der Zündtransformator ist nicht auf der Leiterplatte montiert, sondern sitzt mit seinem gasentladungslampenbrennerfernen Ende in etwa auf gleicher Höhe wie die gasentladungslampenbrennerabgewandte Seite der Leiterplatte. Die Leiterplatte der Gesamtbetriebselektronik 930 ist dazu an dieser Stelle ausgespart, so dass der Zündtransformator 80 in die Leiterplatte der Gesamtbetriebselektronik 930 eingesetzt ist. Zur Verbesserung der elektromagnetischen Verträglichkeit kann das Gehäuse, beispielsweise durch Stege aus Aluminiumblech oder Mu-Metall, mit Wänden und Kammern versehen sein und hierdurch eine elektrische, magnetische und elektromagnetische Schirmung von unterschiedlichen Schaltungsteilen gegeneinander sowie gegen die Umgebung erfolgen. Die Schirmung kann auch durch andere Maßnahmen erzielt werden, insbesondere ist die Ausbildung von Kavitäten in der Sockelplatte 74 sowie im Lampensockel 70 im Rahmen des Spritzgussverfahrens leicht realisierbar.

Die verbleibenden Hohlräume innerhalb des Gehäuses der integrierten Gasentladungslampe 5, insbesondere um den Zündtransformator 80 und auf beiden Seiten der Gesamtbetriebselektronik 930, sind mit Vergussmasse ausgefüllt. Dies hat mehrere Vorteile, so werden beispielsweise elektrische Überschläge, insbesondere durch die vom Zündtransformator erzeugte Hochspannung, sicher verhindert, eine gute Entwärmung der Elektronik gewährleistet, sowie eine mechanisch sehr robuste Einheit geschaffen, die insbesondere Umwelteinflüssen wie Feuchtigkeit und hohen Beschleunigungen sehr gut widersteht. Insbesondere zur Reduktion des Gewichts kann jedoch auch nur ein teilweiser Verguss, beispielsweise im Bereich des Zündtransformators 80, realisiert werden.

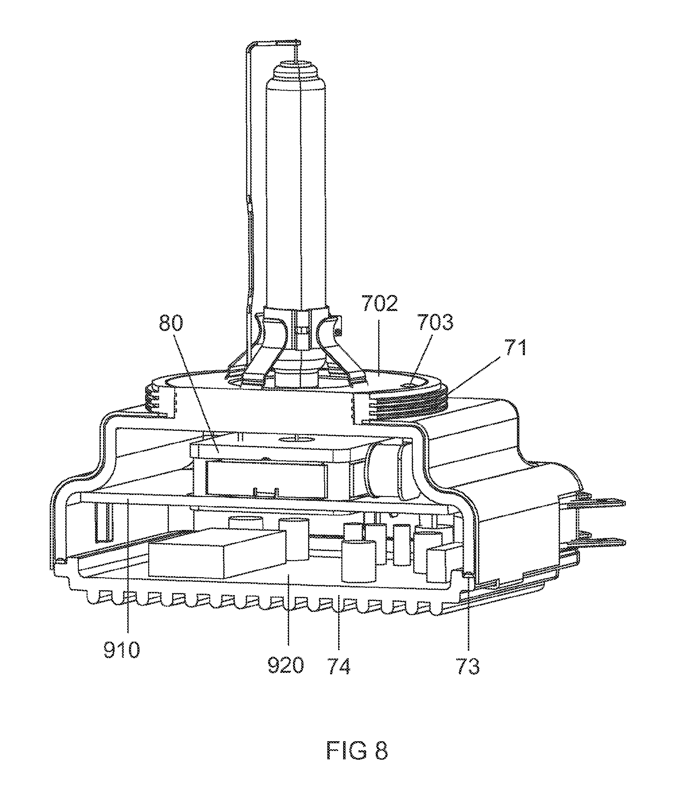

**Fig. 8** zeigt eine dritte Ausführungsform der erfindungsgemäßen integrierten Gasentladungslampe 5. Die dritte Ausführungsform ist ähnlich zur ersten Ausführungsform, daher werden nur die Unterschiede zur ersten Ausführungsform beschrieben. In der dritten Ausführungsform ist die Sockelplatte 74 auf ihrer Außenseite mit Kühlrippen versehen. Es ist auch denkbar, dass auch der Lampensockel 70 und das elektrisch leitfähige Gehäuse 72 jeweils mit Kühlrippen versehen werden. Zudem wird die Funktion der Leiterplatte der Betriebselektronik 920 ebenfalls durch die Sockelplatte erfüllt, da diese auf ihrer Innenseite elektrisch nicht leitende Bereiche aufweist, beispielsweise Bereiche aus anodisch oxidiertem Aluminium, die mit leitenden Strukturen versehen sind, beispielsweise Leiterbahnen in Dickschichttechnik, und die mit den Bauelementen der Gesamtbetriebselektronik elektrisch leitend, beispielsweise durch Löten, verbunden sind. Durch diese Maßnahme wird die Betriebselektronik 920 besonders gut gekühlt, da sie direkt auf einem Kühlkörper aufgebracht ist. Die Kühlrippen sind vorzugsweise so ausgestaltet, dass eine natürliche Konvektion in Einbaulage der integrierten Gasentladungslampe 5 begünstigt wird. Soll die integrierte Gasentladungslampe 5 in verschiedenen Einbaulagen betrieben werden können, so kann die kühlende Oberfläche auch dementsprechend ausgestaltet sein und z.B. aus runden, Hexagonalen, quadratischen oder rechteckigen Fingern bestehen, so dass eine natürliche Konvektion in mehreren Raumrichtungen stattfinden kann. Die Zündelektronik 910 findet wie bei der ersten Ausführungsform auf einer darüber liegenden Leiterplatte Platz, und ist mit der Betriebselektronik 920 durch geeignete Maßnahmen elektrisch verbunden. Dies kann durch Federkontakte oder Steckkontakte bewerkstelligt werden, aber auch durch in dem Sockel verlaufende Leiterbahnen oder auf der Innenseite des Sockels aufgeprägte Leiterbahnen, die mit der Zündelektronik 910 und der Betriebselektronik 920 verbunden werden.

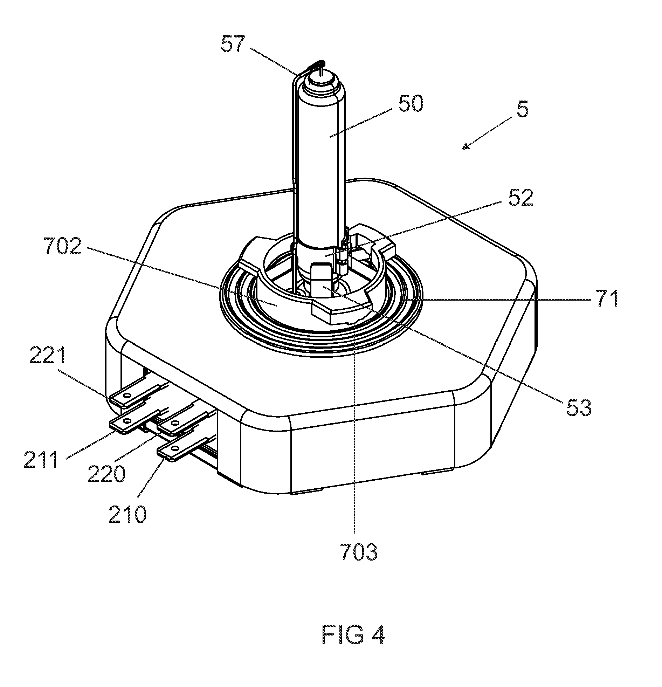

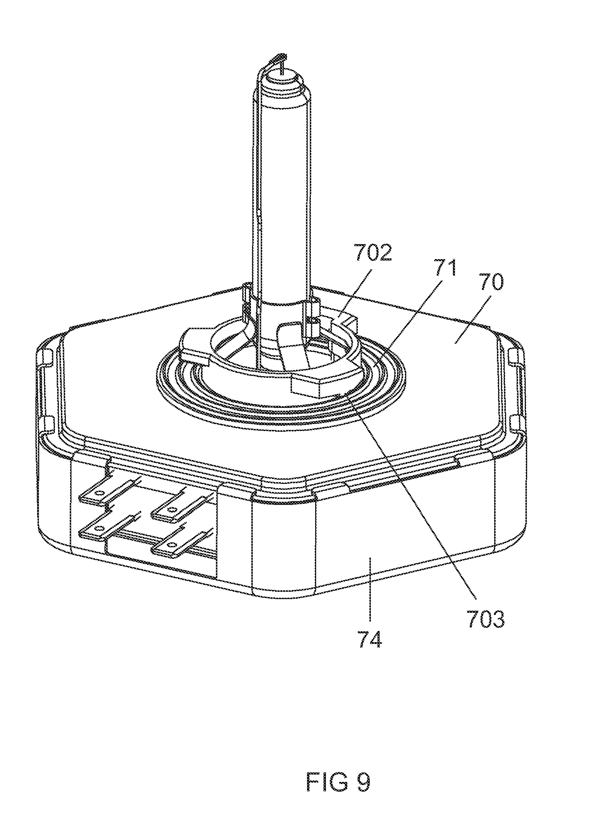

**Fig. 9** zeigt eine vierte Ausführungsform der erfindungsgemäßen integrierten Gasentladungslampe 5. Die vierte Ausführungsform ist ähnlich zur zweiten Ausführungsform, daher werden nur die Unterschiede zur zweiten Ausführungsform beschrieben. In der vierten Ausführungsform wird die Sockelplatte 74 durch eine auf der Innenseite, und damit wie im vorherigen Ausführungsbeispiel ebenfalls einseitig, bestückte Metallkernplatine realisiert. Die Sockelplatte 74 ist jedoch keine Platte wie in **Fig. 4** mehr sondern ein Sockelbecher mit hochgezogenen Seitenwänden. Im Folgenden wird die Sockelplatte daher aus Gründen der Übersichtlichkeit als Sockelbecher bezeichnet. Der Sockelbecher kann ebenfalls aus einem thermisch gut leitfähigem Material bestehen. Besonders gut geeignet sind Metalllegierungen, die gut, z.B. durch Tiefziehen, umgeformt werden können. Ebenfalls gut geeignet ist ein thermisch gut leitender Kunststoff, der durch Spritzgießen in Form gebracht werden kann. Der Sockel 70 mit dem Referenzring 702 und den Referenznoppen 703 besteht in dieser Ausführungsform im wesentlichen aus einer hexagonalen Platte, auf der der Brenner innerhalb des Referenzrings einjustiert und befestigt ist. Der Sockelbecher beherbergt die Gesamtbetriebselektronik 930, die auf einer eigenen Leiterplatte oder am Innenboden des Sockelbechers Platz findet. An den Stromzuführungen 56, 57 des Gasentladungslampenbrenners 50 sind Steckkontakte angebracht, die beim Zusammenbau des Sockelbechers und des Sockels 70 in entsprechende Gegenkontakte des Sockelbechers eingreifen und einen zuverlässigen Kontakt herstellen.

Sind der Sockelbecher und der Sockel 70 aus Metall, so können die beiden Teile durch Umbördeln wie bei einer Kaffeedose oder Konservendose verbunden werden. Es können aber auch, wie in der Fig. 9 gezeigt, lediglich mehrere Laschen des Sockelbechers auf den Sockel aufgebördelt werden, um eine mechanisch wie elektrisch gute Verbindung zu erzeugen. Zur Herstellung der Verbindung können aber auch die bekannten Löt- und Schweißverfahren verwendet werden.

Sind der Sockelbecher und der Sockel 70 aus Kunststoff, so kann die Verbindung bevorzugt durch Ultraschallschweißen erfolgen. Dies hat eine zuverlässige und feste Verbindung zur Folge, die im Falle eines leitfähigen Kunststoffes auch eine leitfähige Verbindung nach sich zieht. Die Verbindung kann aber ebenso durch entsprechende Verrastungen erfolgen, dazu sind dann am Sockelbecher beziehungsweise dem Sockel 70 entsprechende Rastnasen beziehungsweise Vertiefungen vorzusehen.

Im Folgenden soll der Durchmesser (D) und die Höhe (h) der integrierten Gasentladungslampe 5 weitgehend unabhängig von der Geometrie definiert werden, um in eine einfachere Beschreibung vornehmem zu können. Unter der Höhe (h) der integrierten Gasentladungslampe wird der maximale Abstand der Referenzebene, auf die weiter unten näher eingegangen wird, zur brennerabgewandten Außenseite der Sockelplatte (74) verstanden. Unter dem Durchmesser (D) wird die längste Strecke innerhalb der integrierten Gasentladungslampe verstanden, wobei die Stecke innerhalb einer beliebigen Ebene liegt, wobei diese Ebene parallel zur Referenzebene verläuft.

Nachfolgende Tabelle zeigt einige geometrische Größen verschiedener Ausgestaltungen der in **Fig. 9** dargestellten vierten Ausführungsform der Gasentladungslampe 5:

| Durchmesser | Länge bzw. Höhe h | Volumen | Masse | D/h |
|---|---|---|---|---|
| A. 50W-Lampe | | | | |
| 100 | 35 | 275 | 510 | 2,86 |
| B. 35W-Lampe | | | | |
| 100 | 25 | 196 | 178 | 4,00 |
| C. 25W-Lampe, Variante Standard | | | | |
| 70 | 25 | 99 | 139 | 2,80 |
| D. 18W-Lampe, Variante superflach | | | | |
| 100 | 15 | 120 | 168 | 6,67 |
| E. 45W-Lampe, Variante Kaffeedose | | | | |
| 40 | 50 | 63 | 52 | 0,80 |
| F. 7W-Lampe, für Einsatz in Taschenlampe | | | | |
| 40 | 35 | 44 | 36 | 1,14 |

Die in der Tabelle aufgeführten elektrischen Leistungen von 7 W bis 50 W der unterschiedlichen Ausgestaltungen beziehen sich auf die nominelle elektrische Leistung des Gasentladungslampenbrenners. Dabei werden unterschiedliche Geometrien und Größen des bauartgleichen Gasentladungslampenbrenners verwendet.

Wie in **Fig. 4** gut zu sehen ist, weist der Lampensockel der integrierten Gasentladungslampe 5 gemäß der zweiten und der vierten Ausführungsform eine hexagonale Form auf, die mehrere Vorteile mit sich bringt. Einerseits ist die integrierte Gasentladungslampe 5 so gut zu greifen, um sie an ihrem Bestimmungsort einzusetzen. Andererseits kann der Nutzen der Leiterplatte der integrierten Gesamtbetriebselektronik 930 so gestaltet werden, dass ein nur geringer Verschnitt auftritt und so eine gute Kosteneffizienz möglich wird. Durch die flache Ausgestaltung des Sockels kann ein sehr kurz bauender Scheinwerfer gestaltet werden, was insbesondere bei modernen Kraftfahrzeugen von Vorteil ist. Die punktsymmetrische hexagonale Form genießt in dieser Anwendung alle Vorteile einer runden Form, ohne aber deren Nachteile aufzuweisen.

Wie in **Fig. 3 und 4** dargestellt, ragen an einer Seite des Sockels 70 der Lampe Kontakte 210, 220 radial zur Längsachse des Gasentladungslampenbrenners 50 aus dem Sockel heraus. Sie dienen der elektrischen Kontaktierung der integrierten Gasentladungslampe 5 mit einem Scheinwerfer. Diese Kontakte werden bei der Herstellung des Lampensockels 70 in Rahmen eines Kunststoff-Spritzguss-Verfahrens umspritzt. Dies hat den Vorteil, dass kein besonders Steckersystem erforderlich ist, aber dennoch die wasser-und luftdichte Kapselung, wie sie bereits weiter oben beschrieben wurde, gewährleistet werden kann.

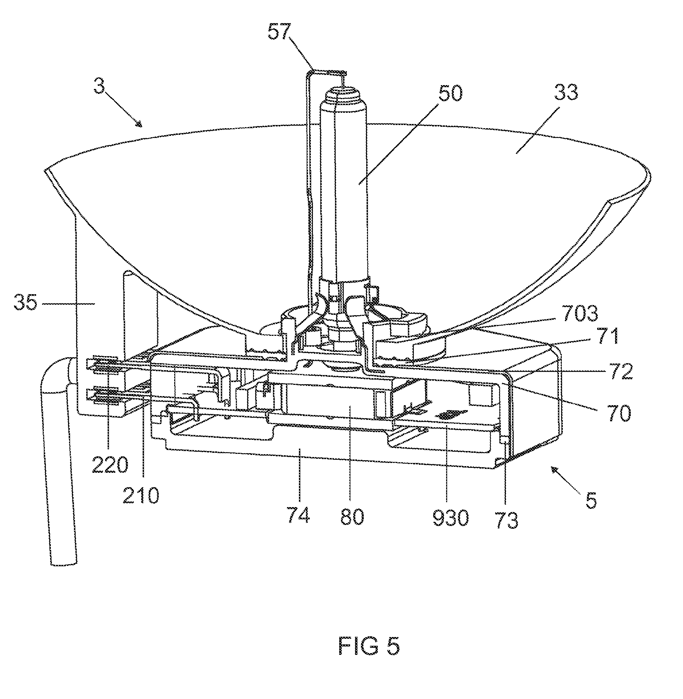

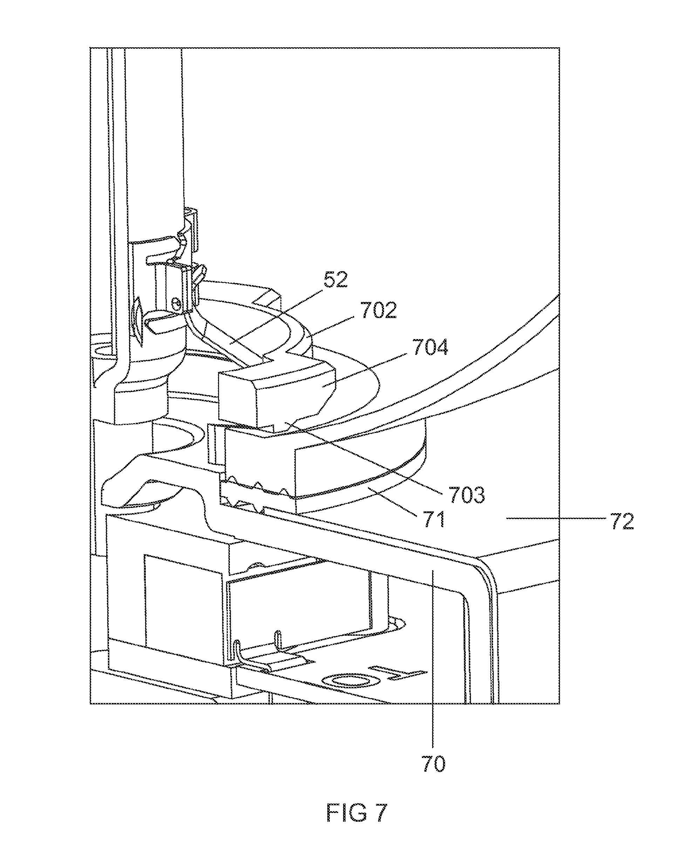

ScheinwerferschnittstelleDas Zusammenspiel zwischen integrierter Gasentladungslampe 5 und Scheinwerfer 3 ist in **Fig. 5** gezeigt. Die Gasentladungslampe 5 in der zweiten Ausführungsform besitzt eine spezielle elektrische Schnittstelle, über die sie mit elektrischer Leistung versorgt wird. Die elektrische Schnittstelle ist derart ausgebildet, dass beim Einsetzen der Gasentladungslampe 5 in einen Scheinwerfer 3 diese nicht nur mechanisch mit dem Scheinwerfer 3 verbunden wird, sondern auch gleichzeitig elektrisch. Eine ähnlich aufgebaute Schnittstelle wird auch in modernen Halogenglühlampen für Automobilscheinwerfer verwendet und z.B. von der Fa. Osram unter dem Namen "Snap Lite" vertrieben. Wird die integrierte Gasentladungslampe 5 also in einen Reflektor oder Scheinwerfer eingesetzt, so werden beim Vorgang des Einsetzens alle für den ordnungsgemäßen Betrieb benötigten mechanischen und elektrischen Kontakte mit ihren im Scheinwerfer 3 vorhandenen entsprechenden Gegenkontakten verbunden. Der Sockel 70 weist an seiner Schnittstelle zum Scheinwerfer 3 aus einem Referenzring 702 heraustretende Noppen 703 auf, die eine Referenzebene definieren. Eine Detaildarstellung ist in **Fig. 7** gezeigt. Diese drei Noppen liegen beim Einsetzen der integrierten Gasentladungslampe 5 am entsprechenden Gegenstück des Scheinwerfers 3 an. Die Elektroden beziehungsweise der Entladungsbogen des Gasentladungslampenbrenners 50 werden im Fertigungsprozess der integrierten Gasentladungslampe 5 gegenüber der Referenzebene justiert. Dadurch nimmt der Lichtbogen der integrierten Gasentladungslampe 5 im Reflektor bei ihrem Einsetzen in den Scheinwerfer eine definierte Position ein, die eine präzise optische Abbildung ermöglicht. Das Einsetzen in den Scheinwerfer erfolgt in der zweiten Ausführungsform nach **Fig. 3 & 4** durch ein Hindurchstecken der vom Referenzring lateral abstehenden Laschen 704 durch den Reflektorboden eines Reflektors 33 des Scheinwerfers 3. Danach erfolgt eine Drehung der integrierte Gasentladungslampe 5 relativ zum Reflektor 33, woraufhin die Noppen 703, die an der sockelseitigen Fläche der Laschen 704 angebracht sind, die integrierte Gasentladungslampe nach innen ziehen und am Ende der Drehung in dafür vorgesehene Referenzflächen am Reflektorgrund einrasten. Der Dichtungsring 71 wird dabei zusammengepresst und hält das System so auf Spannung, dass die Noppen 703 gegen die im Reflektorgrund befindlichen Referenzflächen gedrückt werden. Damit ist die Lage der integrierten Gasentladungslampe 5 und damit des Entladungsbogens des Gasentladungslampenbrenners 50 gegenüber dem Reflektor 33 präzise justiert und fixiert. Die hohe Wiederholgenauigkeit der mechanischen Positionierung von typischerweise besser als 0,1mm in allen drei Raumrichtungen der beschriebenen Scheinwerferschnittstelle ermöglicht die Realisierung eines optisch hervorragenden Scheinwerfersystems. Ein solches Scheinwerfersystem kann insbesondere in einem Kraftfahrzeug Anwendung finden, nachdem es sich in der entsprechenden Ausgestaltung durch eine ausgeprägte und wohl definierte Hell-Dunkel-Grenze auszeichnet.

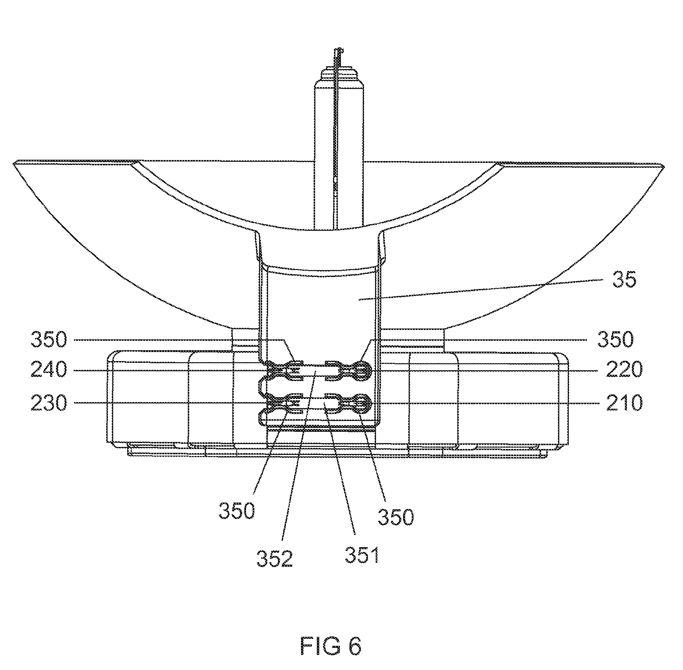

Ein geeigneter Scheinwerfer 3 weist hierzu ein Lichtlenkmittel in Form eines Reflektors 33, eine Aufnahme für die integrierte Gasentladungslampe 5, und ein Trägerteil 35 auf, wobei auf dem Trägerteil ein mit Gegenkontakten für die elektrischen Kontakte 210, 220, 230, 240 der integrierten Gasentladungslampe 5 versehenes Anschlusselement angeordnet ist. Die elektrischen Kontakte 210, 220, 230, 240 der integrierten Gasentladungslampe 5 ragen radial zur Längsachse des Gasentladungslampenbrenners 50 aus dem Lampensockel 70 heraus. Sie dienen der Versorgung der Gesamtbetriebselektronik 930 mit elektrischer Energie. Nach der Montage der integrierten Gasentladungslampe 5 im Scheinwerfer durch einen Montagevorgang, der im Wesentlichen auf einer Steckbewegung gefolgt von einer Rechts-Drehbewegung beruht, sind ihre Kontakte 210, 220, 230, 240 in den Schlitzen 351, 352 des Anschlusselements 35 angeordnet, wie in der Detailzeichnung in **Fig. 6** zu sehen ist. Bei diesen Schlitzen 351, 352 handelt es sich um die Schlitze für die elektrischen Gegenkontakte 350 zu den Kontakten 210, 220, 230, 240 der integrierten Gasentladungslampe 5. Dadurch entfallen die mit Anschlusskabeln versehenen Stecker zur Kontaktierung der integrierten Gasentladungslampe 5 im Scheinwerfer gemäß dem Stand der Technik. Insbesondere werden die elektrischen Kontakte der integrierten Gasentladungslampe 5 beim Einsetzen in den Scheinwerfer unmittelbar mit ihren Gegenkontakten 350 des Anschlusselements auf dem Trägerteil 35 kontaktiert. Dadurch wird die mechanische Belastung der elektrischen Anschlüsse durch frei schwingende Kabel reduziert. Ferner wird die Anzahl der benötigten Anschlusskabel pro Scheinwerfer verringert und damit auch die Verwechslungsgefahr während der Fertigung reduziert. Zusätzlich ermöglicht diese Maßnahme auch einen höheren Automatisierungsgrad bei der Fertigung des Scheinwerfers, da weniger Kabel von Hand montiert werden müssen. Anstatt wie bisher gemäß dem Stand der Technik alle Lichtquellen im Scheinwerfer mittels einem auf den Lampensockel aufgesteckten und einem Anschlusskabel versehenen Stecker mit Energie zu versorgen, genügt es, beim erfindungsgemäßen Scheinwerfer, vorhandene elektrische Versorgungskontakte des Scheinwerfers an die Bordnetzspannung anzuschließen, um die integrierte Gasentladungslampe 5 mit Energie zu versorgen. Die Versorgung der im Scheinwerfer vorhandenen Lampen durch die Versorgungskontakte des Scheinwerfers ist durch eine feste Verdrahtung im Scheinwerfer gegeben. Dadurch wird die Verkabelung des Scheinwerfers 3 bzw. der integrierten Gasentladungslampe 5 erheblich vereinfacht.

Eine andere Variante der mechanischen Justierung zeigt die erste Ausführungsform der Lampe in den **Fig. 1 & 2**. Hier sind die Noppen 703 an der dem Gasentladungslampenbrenner 50 zugewandten Seite des Referenzringes 702 angeordnet. In dieser Variante kommen die Noppen 703 auf entsprechenden Gegenflächen an der Rückseite des Reflektors zu liegen, um dadurch die Lage der integrierten Gasentladungslampe 5 gegenüber dem Reflektor 33 zu definieren. Die integrierte Gasentladungslampe 5 wird dabei von hinten an die Referenzflächen des Reflektors 33 gepresst. Diese Variante birgt aber den Nachteil, dass die Lage zwischen der optisch wirksamen Reflektorinnenseite und den Referenzflächen an der Rückseite des Reflektors sehr genau toleriert sein muss, um eine präzise optische Abbildung zu erreichen.

Das System der Scheinwerferschnittstelle der zweiten Ausführungsform ist ebenfalls geeignet, in modernen Bus-Systemen eine weiter vereinfachte Verkabelung zu realisieren. So besitzt die integrierte Gasentladungslampe 5 neben den beiden elektrischen Kontakten 210, 220 weitere Kontakte 230, 240, über die eine Kommunikation mit der Bordelektronik des Kraftfahrzeugs erfolgt. Das Anschlusselement 35 besitzt zwei Schlitze 351, 352 mit entsprechend je 2 Gegenkontakten. In einem weiteren nicht dargestellten Ausführungsbeispiel sind nur drei elektrische Kontakte an der Lampe vorhanden, zwei die im Wesentlichen zur Zuführung der elektrischen Lampenleistung dienen, und ein Logik-Eingang, auch als Remote-Enable-Pin bezeichnet, mit dessen Hilfe die Lampe durch die Bordelektronik des Kraftfahrzeugs nahezu leistungslos ein- und ausgeschaltet werden kann.

Diese "Snap Lite"-Schnittstelle weist neben dem Vorteil dass ein vertauschen von elektrischen Anschlüssen ausgeschlossen ist noch einen weiteren Vorteil auf: Dadurch, dass die Lampe erst dann mit Leistung versorgt wird wenn sie sich an ihrem bestimmungsgemäßen Platz im Scheinwerfer befindet, kann die dem Sockel abgewandte Stromzuführung 57 des Gasentladungslampenbrenners 50 nur dann berührt werden, wenn die integrierte Gasentladungslampe 5 sicher außer Betrieb ist. Die Sicherheit im Umgang mit solch einer Hochdruckentladungslampe wird dadurch drastisch erhöht. Durch die einfache Installation der integrierten Gasentladungslampe 5 im Scheinwerfer 3 wird der Endkunde in die Lage versetzt, eine solche Lampe zu ersetzen. Dadurch ist die integrierte Gasentladungslampe 5 für den Endkunden kostengünstiger, da zum Lampenwechsel keine Werkstatt aufgesucht werden muss.

Durch das Einsetzen der integrierten Gasentladungslampe 5 in den Reflektor 33 wird zudem die Masseanbindung der Lampe mit dem Scheinwerfergehäuse realisiert. Dies kann beispielsweise durch am Reflektor 33 befestigte und mit dem Massepotenzial des Fahrzeugs verbundene Federblechstreifen realisiert werden. Beim Einsetzen der Lampe in den Schweinwerfer berühren die Federblechstreifen die elektrisch leitende Gehäuseoberfläche der integrierten Gasentladungslampe 5 und stellen eine elektrische Verbindung zwischen der Fahrzeugmasse und der internen Masse bzw. dem Masseschirm der integrierten Gasentladungslampe her. Diese Kontaktierung kann beispielsweise an der Seitenwand oder an der Stirnseite des Gehäuses 72 erfolgen. Im vorliegenden Falle erfolgt die Masseanbindung mittels des Dichtringes 71, der leitfähig ist. Ist die Gehäuseoberfläche nicht oder nicht vollständig elektrisch leitfähig, erfolgt die Kontaktierung der Federblechstreifen an einer Kontaktfläche auf der Gehäuseoberfläche der integrierten Gasentladungslampe. Diese Kontaktfläche oder diese Kontaktflächen weisen eine elektrisch leitende Verbindung zur internen Masse bzw. dem Masseschirm der integrierten Gasentladungslampe auf.

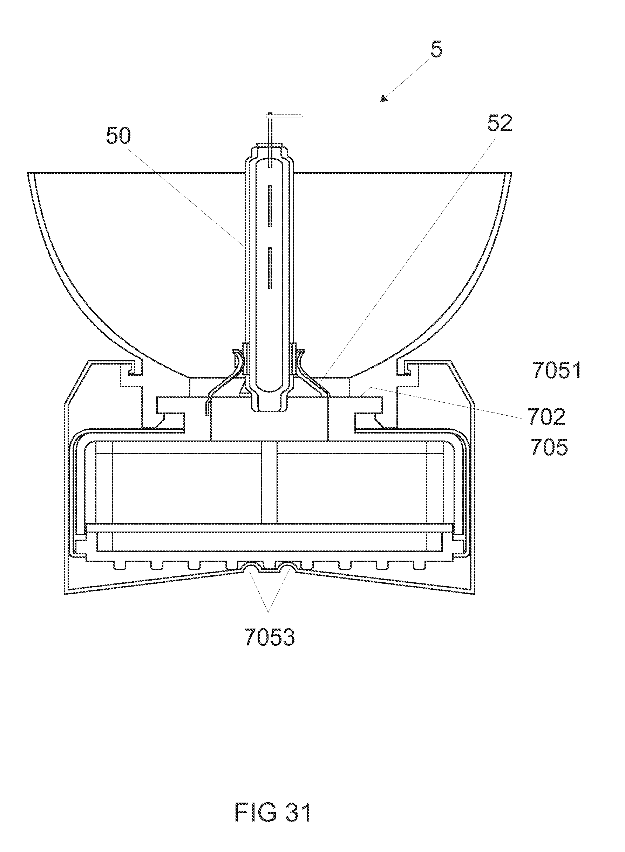

Eine weitere fünfte Ausführungsform mit einer konventionellen Schnittstelle zum Scheinwerfer zeigt **Fig. 31.** Hier wird die integrierte Gasentladungslampe 5 mit der Referenzfläche 702 mittels einer Halteklammer 705 auf eine entsprechende Gegenfläche der Scheinwerferaufnahme gedrückt. Die Integrierte Gasentladungslampe 5 wird in konventioneller Weise elektrisch mit dem Scheinwerfer verbunden. Der Haltebügel 705 sorgt dafür, dass die integrierte Gasentladungslampe 5 mit ihrer Referenzfläche 702 gut an die Aufnahme im Scheinwerfer angebunden ist, und damit eine präzise Ausrichtung der Elektroden im optischen System des Scheinwerfers gegeben ist. Die Elektroden 504 des Gasentladungslampenbrenners 50 der integrierten Gasentladungslampe 5 werden im Fertigungsprozess der integrierten Gasentladungslampe 5 gegenüber der Referenzfläche 702 justiert. Dadurch nimmt der Lichtbogen der integrierten Gasentladungslampe 5 im Reflektor bei ihrem Einsetzen in den Scheinwerfer eine definierte Position ein, die eine präzise optische Abbildung ermöglicht. Durch die Federwirkung der Halteklammer 705 wird diese Abbildung auch bei erschwerten Bedingungen wie Vibrationen, die in einem Automobilscheinwerfer auftreten können, sichergestellt. Die Halteklammer wiederum ist Scheinwerferseitig in einer Nut 7051 eingehakt, die sie sicher hält, aus der sie bei Lampenwechsel aber trotzdem leicht ausgehakt werden kann. Bodenseitig greift die Halteklammer 705 mit zwei Ausbuchtungen 7053 in die Sockelplatte 74 ein. Es ist aber auch denkbar, dass die Halteklammer 705 keine Ausbuchtungen aufweist und daher auf den Rippen der Sockelplatte aufliegt. Mit der fünften Ausführungsform der erfindungsgemäßen Gasentladungslampe 5 ist eine einfache und kostengünstige Anbindung an einen Scheinwerfer realisierbar, die bezüglich der Positioniergenauigkeit im optischen System des Scheinwerfers keinerlei Einschränkungen aufweist.

Zündtransformator

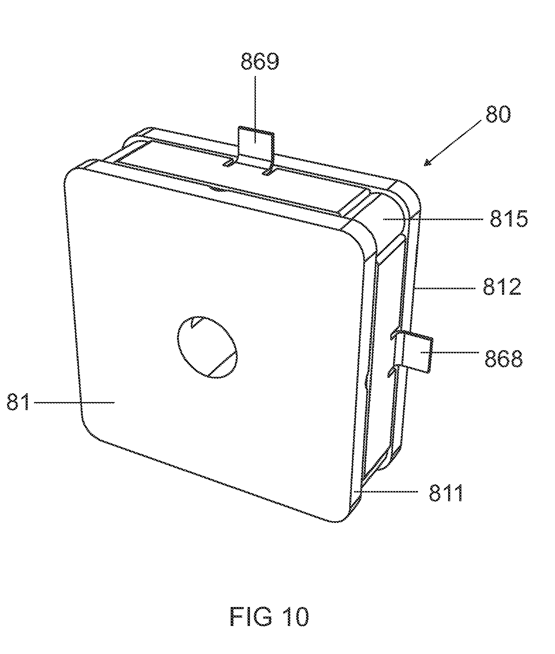

Im Folgenden wird nun die Konstruktion des Zündtransformators 80 der integrierten Gasentladungslampe 5 erklärt. **Fig. 10** zeigt eine perspektivische Ansicht des Zündtransformators 80 in einer ersten Ausführungsform, in der der Zündtransformator 80 eine quadratische flache Form hat. Es sind jedoch auch andere Ausführungsformen denkbar, in denen der Zündtransformator 80 eine runde, sechseckige, achteckige oder eine andere geeignete Form haben kann. Weitere Ausführungsformen werden weiter unten beschrieben. Unter der Form wird hierbei die Form der Grundfläche der im Wesentlichen prismatischen Außenabmessungen des Zündtransformators verstanden, wobei die Rundungen an den Körperkanten vernachlässigt werden. In der hier dargestellten besonders vorteilhaften Ausführungsform besitzt das Prisma eine geringe Höhe, insbesondere eine Höhe die kleiner als 1/3 der Diagonalen bzw. dem Durchmesser der die Grundfläche bildenden Geometrie ist.

Der Zündtransformator 80 weist einen Ferritkern 81 auf, der aus einer ersten Ferritkernhälfte 811 und einer identischen zweiten Ferritkernhälfte 812 zusammengesetzt ist. Der Zündtransformator 80 weist an den Seiten mehrere nach außen weisende Laschen 868, 869 auf, die der mechanischen Befestigung des Zündtransformators 80 dienen.

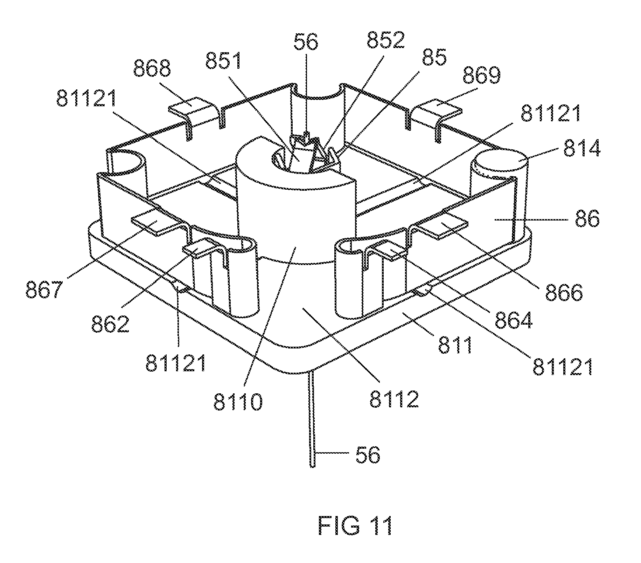

**Fig. 11** zeigt eine perspektivische Ansicht des oberen Teils des Zündtransformators, bei der die Primärwicklung und die zweite Ferritkernhälfte 812 nicht sichtbar sind. Die erste Ferritkernhälfte 811 ist aus einer quadratischen Seitenwand 8112 aufgebaut, aus der mittig nach innen ein halber Hohlzylinder 8110 herausragt. Die Innenseite der quadratischen Seitenwand 8112 weist von außen nach innen verlaufende längliche Vertiefungen 81121 auf der der Wicklung zugewandten Seite auf. Durch diese Vertiefungen kann ein Tränklack oder eine Vergussmasse, in den oder die der Zündtransformator 80 nach Komplettierung zur Hochspannungsisolierung eingebracht wird, von außen nach innen in den Zündtransformator 80 eindringen, um alle Windungen des Zündtransformators 80 gleichmäßig zu benetzen.

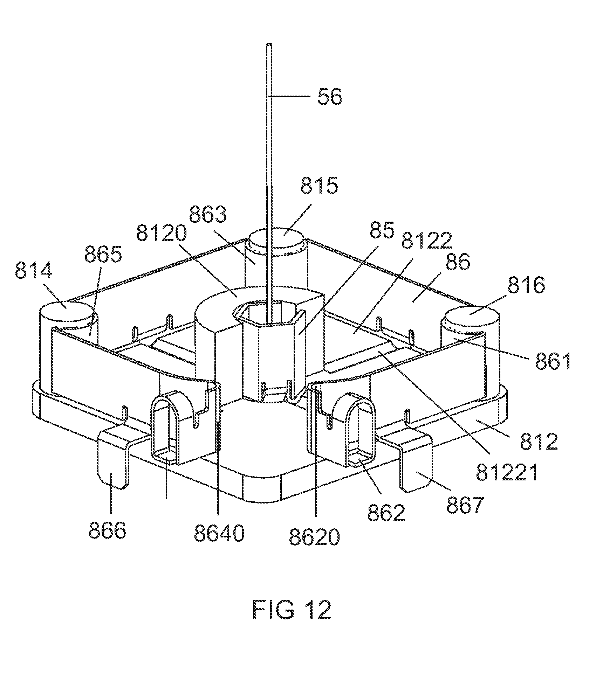

Am äußeren Rand zwischen den beiden Ferritkernhälften 811, 812 sitzt eine Primärwicklung 86, die aus einem aus Blech geformten Stanzbiegeteil besteht. Das Blech ist vorzugsweise aus einem Buntmetall wie Kupfer, Bronze oder Messing gefertigt. Das Blech ist dabei bevorzugt elastisch verformbar und federnd. Die Primärwicklung 86 ist im Wesentlichen ein langes Band, das außen zwischen beiden Ferritkernhälften 811 und 812 verläuft. Die Primärwicklung 86 geht in einer ersten Variante mit nur einer Windung über 3 Ecken des Zündtransformators 80, die vierte Ecke ist offen. Das Blechband der Primärwicklung 86 ist also eine dreiviertel Windung um die Außenkontur des Zündtransformators herumgelegt und endet jeweils ein Stückchen vor der vierten Ecke. Das Blechband der Primärwicklung 86 weist die oben schon erwähnten Laschen 866, 867, 868 und 869 auf, die in lateraler Richtung des Blechbandes angebracht sind. Die vier Laschen dienen der mechanischen Befestigung des Zündtransformators 80, dazu können sie z.B. auf eine Platine der Zündelektronik 910 als flache SMD-Lasche oder Lötfahne aufgelötet werden. Die Laschen können aber auch eine weitere 90°-Biegung aufweisen, wobei die Laschen dann durch die Platine der Zündelektronik 910 hindurch gesteckt werden, und auf der anderen Seite verclincht, verdreht oder verlötet werden, wie dies in **Fig. 12** gezeigt ist. Die beiden Enden des Blechbandes der Primärwicklung 86 sind mit einem Radius um etwa 180° nach Außen umgebogen, so dass die Enden wieder von der vierten Ecke weg weisen. In **Fig. 12** sind die beiden Enden um ca. 90° nach Außen gebogen und die Radien mit 8620 beziehungsweise 8640 gekennzeichnet. Am äußeren Ende des Blechbandes ist je eine lateral abstehende Lasche 862, 864 angebracht, die der elektrischen Kontaktierung dient. In **Fig. 12** ist eine alternative Ausführungsform der beiden Laschen 862, 864 gezeigt. Durch die weiche Anbindung mittels des 180° Radius der beiden Radien 8620 beziehungsweise 8640 werden Spannungen in der Verbindung zwischen Primärwicklung und Platine, die durch Temperaturschwankungen entstehen können, aufgefangen. Die Laschen werden bevorzugt wie ein SMD-Bauelement auf die Platine der Zündelektronik 910 aufgelötet. Durch die zuvor beschriebene 180° Biegung des Blechbandes wird die Lötstelle nicht mit den beschriebenen mechanischen Spannungen belastet, und die Bruch- und Ermüdungsgefahr der Lötstelle ist sehr stark vermindert. Die alternative Ausführungsform der Laschen 862, 864 hat einen weiteren 270° Radius in der Lasche selbst, der die mechanischen Spannungen im zusammengebauten Zustand weiter vermindert.

In der Mitte des hohlzylindrischen inneren Teils des Ferritkerns ist ein Kontaktkörper 85 eingebracht, der den elektrischen Kontakt zwischen dem Gasentladungslampenbrenner 50 und dem inneren Ende der Sekundärwicklung 87 (nicht gezeigt) herstellt. Der Kontaktkörper 85 besteht aus einem gebogenen Blechteil, welches mit der sockelnahen Stromzuführung 56 des Gasentladungslampenbrenners 50 verbunden ist. Der Kontaktkörper 85 weist an seinem brennerfernen Ende zwei Dachflächen zum Kontaktieren der Hochdruckentladungslampenelektrode auf. Bevorzugt weist der Kontaktkörper 85 an zwei gegenüberliegenden Seiten des brennerfernen Endes zwei Dachflächen 851 und 852 auf, die satteldachförmig gegeneinander geneigt sind, und an den Enden, an denen sich die beiden Dachflächen berühren so ausgeformt sind, dass ein Stromzuführungsdraht 56 des Hochdruckgasentladungslampenbrenners 50 zentriert geklemmt wird. Dazu sind die beiden Dachflächen 851 und 852 an den Enden, an denen sich die beiden Dachflächen 851, 852 berühren, mit einer V-förmigen Kontur versehen. Die Kontur kann aber ebenso rund oder in einer anderen geeigneten Weise ausgearbeitet sein. Zur Montage wird der Stromzuführungsdraht 56 durch den Kontaktkörper 85 hindurch gesteckt, auf einen vorbestimmten Überstand abgelängt, und dann bevorzugterweise mittels Laser mit dem Kontaktkörper 85 verschweißt.

**Fig. 12** zeigt eine perspektivische Ansicht des unteren Teils des Zündtransformators. Die Figur zeigt unter anderem die zweite Ferritkernhälfte 812, die identisch zur ersten Ferritkernhälfte 811 geformt ist. Auch sie ist aus einer quadratischen Seitenwand 8122 aufgebaut, aus der mittig nach innen ein halber Hohlzylinder 8120 herausragt. Die Innenseite der quadratischen Seitenwand 8122 weist von außen nach innen verlaufende längliche Vertiefungen 81221 auf. In der Figur ist die brennernahe Seite des Kontaktkörpers 85, mit seiner hexagonalen offenen Form, und dem hindurchlaufenden Stromzuführungsdraht 56 sichtbar. Werden die beiden Hälften zusammengesetzt, entsteht innen ein Hohlzylinder, in den der Kontaktkörper eingebracht ist. Der Ferritkern 81 besitzt nach dem Zusammensetzen die Form einer Tonband- oder Filmspule, nur dass die Außenkontur nicht rund ist, sondern quadratisch mit abgerundeten Ecken.

An der ersten Ecke weist der Zündtransformator einen ersten Rückschlussferrit 814 auf. Die zweite sowie dritte Ecke ist ebenfalls mit einem zweiten Rückschlussferrit 815 sowie dritten Rückschlussferrit 816 versehen. Die drei Rückschlussferrite werden von der Primärwicklung 86 gehalten. Dazu weist das Blechband der Primärwicklung 86 an den drei Ecken zylinderförmige, nach innen weisende Rundungen 861, 863 und 865 auf, in die die Rückschlussferrite 814-816 eingeklemmt sind. Durch das federnd elastisch verformbare Material bleiben die drei Rückschlussferrite 814-816 während der Produktion sicher an ihrem Platz. Die Rückschlussferrite stellen den magnetischen Rückschluss des Zündtransformators 80 dar, durch den die magnetischen Feldlinien im Magnetmaterial gehalten werden, und somit keine Störungen außerhalb des Zündtransformators verursachen können. Dies erhöht zudem die Effizienz des Zündtransformators, insbesondere auch die Höhe der erreichbaren Zündspannung deutlich.

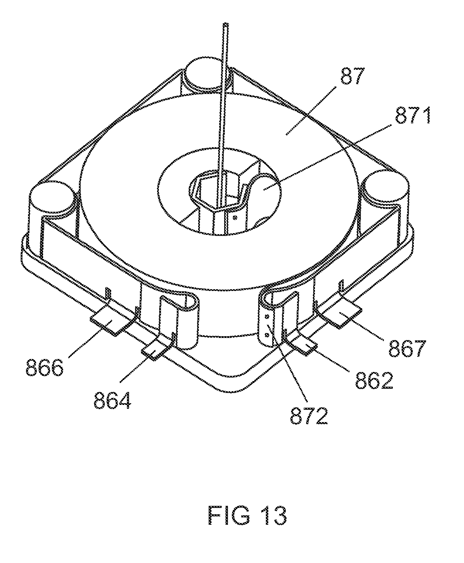

**Fig. 13** zeigt eine perspektivische Ansicht des unteren Teils des Zündtransformators 80 mit sichtbarer Sekundärwicklung 87, wie sie in die zweite Ferritkernhälfte 812 des Zündtransformators 80 eingelegt ist. Die Sekundärwicklung 87 besteht aus einem isolierten Metallband, das wie ein Film mit einer vorbestimmten Windungszahl auf den filmspulenförmigen Ferritkern aufgewickelt wird, wobei das hochspannungsführende Ende innen zu liegen kommt, durch den Mittelkern des filmspulenförmigen Ferritkerns hindurchgeführt ist und elektrisch leitend mit dem Kontaktkörper 85 verbunden wird. Die Isolation kann allseitig auf das Metallband aufgebracht sein, sie kann aber auch aus einer isolierenden Folie bestehen, die mit dem Metallband zusammen aufgewickelt wird. Die isolierende Folie ist dabei vorzugsweise breiter als das Metallband, um einen ausreichenden Isolationsabstand zu gewährleisten. Die Metallfolie ist dabei so mit der isolierenden Folie aufgewickelt, dass sie in der Mitte der isolierenden Folie zum liegen kommt. Dadurch entsteht im Wickelkörper ein spiralförmiger Spalt, der nach dem Tränken beziehungsweise Vergießen mit dem Tränklack beziehungsweise der Vergussmasse gefüllt ist und so eine exzellente Isolierung der Sekundärwicklung 87 bewirkt.

Die Sekundärwicklung 87 ist an ihrem inneren hochspannungsführenden Ende 871 mit dem Kontaktkörper 85 verbunden. Das äußere niederspannungsführende Ende 872 der Sekundärwicklung 87 ist mit der Primärwicklung 86 verbunden. Die Verbindungen können durch Löten, Schweißen oder eine andere geeignete Verbindungsart hergestellt werden. In der vorliegenden Ausführungsform werden die Verbindungen lasergeschweißt. Dazu werden pro Ende vorzugsweise zwei Schweißpunkte appliziert, die die beiden Teile sicher und elektrisch leitend miteinander verbinden. Das innere Ende 871 der Sekundärwicklung 87 geht dabei durch die beiden Hohlzylinderhälften 8110, 8120 des Ferritkerns 81 hindurch, und wird von ihnen beklemmt. Das äußere Ende 872 der Sekundärwicklung 87 ist dabei so mit dem Ende der Primärwicklung 86 verbunden, dass der Wickelsinn der Sekundärwicklung 87 dem Wickelsinn der Primärwicklung 86 entgegen gerichtet ist. Je nach Anforderung kann das äußere Ende der Sekundärwicklung 87 aber auch mit dem anderen Ende der Primärwicklung 86 verbunden werden, so dass der Wickelsinn der Primär- und der Sekundärwicklung gleich ist.

Im Folgenden soll der Durchmesser und die Höhe des Zündtransformators 80 welcher in der der integrierten Gasentladungslampe 5 untergebracht ist, weitgehend unabhängig von seiner Geometrie und basierend auf den Abmessungen des Ferritkerns definiert werden, um eine einfachere Beschreibung vornehmem zu können. Unter der Höhe des Zündtransformators wird der Abstand zwischen den beiden jeweils wicklungsfernen Außenflächen der beiden Seitenwände verstanden, was näherungsweise der Summe aus der doppelten Dicke einer Seitenwand sowie der Wicklungsbreite entspricht. Unter dem Durchmesser des Zündtransformators 80 wird im Folgenden unabhängig von der Form der Seitenwände die längste Strecke innerhalb einer der beiden Seitenwände verstanden, wobei die Stecke innerhalb einer beliebigen Ebene liegt, wobei diese Ebene parallel zur Außenfläche der jeweiligen Seitenwand verläuft.

In einer besonders vorteilhaften Ausführung besitzt der Ferritkern des Zündtransformators eine Höhe von 8 mm und einen Durchmesser von 26 mm. Dabei besitzen die Seitenwände einen Durchmesser von 26 mm und eine Dicke von 2 mm und der Mittelkern einen Durchmesser von 11,5 mm bei einer Höhe von 6 mm. Die Sekundärwicklung besteht aus 42 Windungen einer Kaptonfolie mit 5,5 mm Breite und 55 μm Dicke auf die eine in Längsrichtung zentrierte 4 mm breite und 35 μm dicke Kupferschicht aufgebracht ist. In einer weiteren besonders vorteilhaften Ausführung wird die Sekundärwicklung aus zwei getrennten, über einander gelegten Folien gewickelt, wobei eine 75 μm dicke Kupferfolie und eine 50 μm dicke Kaptonfolie verwendet wird. In beiden Ausführungen ist die Sekundärwicklung elektrisch leitend mit der eine Windung umfassenden Primärwicklung verbunden, wobei die Primärwicklung mit einer eine 800 V Funkenstrecke umfassenden Impulserzeugungseinheit angesteuert wird.

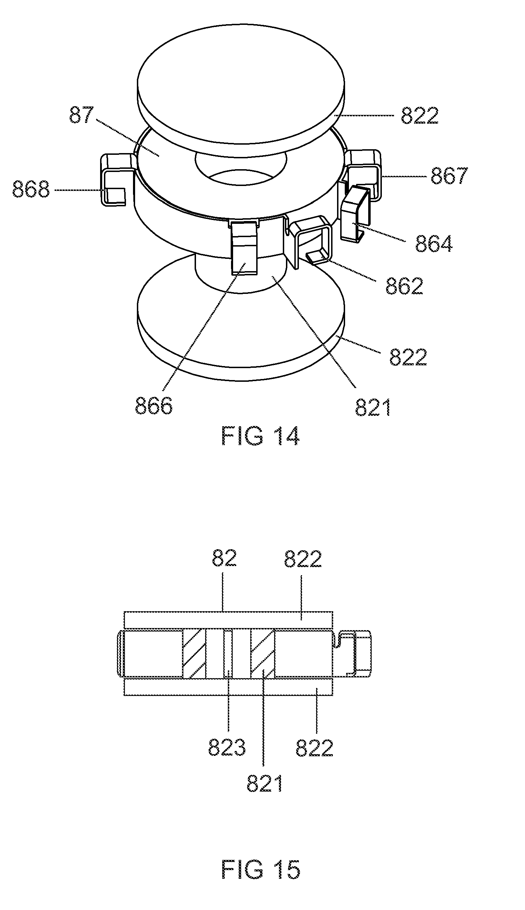

**Fig. 14** zeigt eine Explosionsansicht des Zündtransformators 80 in einer zweiten Ausführungsform. Da die zweite Ausführungsform ähnlich zur ersten Ausführungsform des Zündtransformators 80 ist, werden im Folgenden lediglich die Unterschiede zur ersten Ausführungsform beschrieben. Der Zündtransformator 80 in der zweiten Ausführungsform hat eine runde Form, ähnlich wie bei einer Filmspule. Durch die runde Form entfallen die Rückschlussferrite 814-816, und die Primärwicklung 86 weist eine einfachere Form auf. Die Lateral abstehenden Laschen für die mechanische Befestigung des Transformators sind hier als SMD-Laschen ausgeführt, die eine 270°-Biegung aufweisen, um die Lötstellen vor zu großen mechanischen Spannungen zu schützen. Die beiden Laschen 862, 864 zur elektrischen Kontaktierung sind in gleicher Weise ausgeführt und radial am Umfang des Zündtransformators 80 angeordnet. Der Ferritkern 82 der zweiten Ausführungsform ist dreiteilig ausgeführt, er weist einen hohlzylinderförmigen Mittelkern 821 auf, der an seinen beiden Enden von runden Platten 822 abgeschlossen wird. Die runden Platten 822 kommen zentrisch auf dem Hohlzylinder 821 zu liegen, somit ergibt sich die oben beschriebene Filmspulenform. Der Hohlzylinder weist einen Schlitz 823 auf (in der Fig. nicht zu sehen), um das Innere Ende der Sekundärwicklung 87 ins Innere des Hohlzylinders hindurchführen zu können.

**Fig. 15** zeigt eine Schnittansicht der zweiten Ausführungsform des Zündtransformators 80. Hier ist der Aufbau des Ferritkerns 81 gut nachzuvollziehen. In dieser Ansicht ist auch der Schlitz 823 zu erkennen, durch den das innere Ende der Sekundärwicklung 87 hindurchgeführt wird.

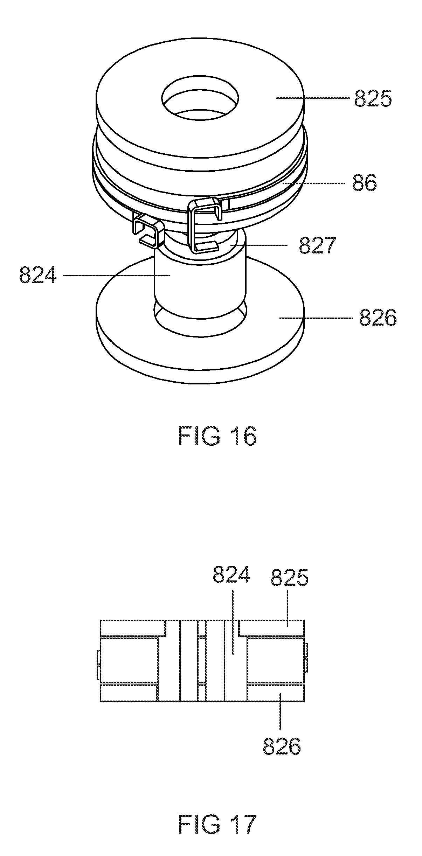

**Fig. 16** zeigt eine Explosionsansicht des Zündtransformators in einer dritten runden Ausführungsform mit zweiwindiger Primärwicklung. Da die dritte Ausführungsform sehr ähnlich zur zweiten Ausführungsform des Zündtransformators 80 ist, werden im Folgenden lediglich die Unterschiede zur zweiten Ausführungsform beschrieben. In der dritten Ausführungsform weist der Zündtransformator 80 eine Primärwicklung mit zwei Windungen auf. Das Metallband der Primärwicklung 86 geht also knapp zweimal um den Zündtransformator herum. An den beiden Enden sind wiederum Laschen zur elektrischen Kontaktierung des Zündtransformators 80 angebracht, die als SMD-Variante ausgeführt sind. Die Laschen zur mechanischen Befestigung des Zündtransformators 80 fehlen in dieser Ausführungsform, der Zündtransformator 80 muss also anderweitig mechanisch fixiert werden. Dies kann zum Beispiel durch eine Einklemmung des Zündtransformators 80 bewerkstelligt werden, wie dies in Fig. 3 angedeutet ist. Der Zündtransformator 80 ist hier zwischen den Sockel 70 und die Sockelplatte 74 geklemmt. Die Sockelplatte 74 weist hierzu einen Sockelplattendom 741 auf, eine Erhöhung auf der Sockelplatte, die den Zündtransformator 80 im eingebauten Zustand beklemmt. Der Vorteil dieser Bauweise ist die gute Entwärmung des Zündtransformators 80. Dieser kann im Betrieb sehr heiß werden, da er sehr nahe am Gasentladungslampenbrenner 50 der integrierten Gasentladungslampe 5 sitzt. Durch die thermisch gut leitfähige Sockelplatte 74 kann ein Teil der Wärme, die vom Gasentladungslampenbrenner 50 in den Zündtransformator 80 eingebracht wird, wieder abgeführt werden und der Zündtransformator 80 wirksam gekühlt werden.

**Fig. 17** zeigt eine Schnittansicht des Zündtransformators 80 in einer dritten runden Ausführungsform mit zweiwindiger Primärwicklung. Diese Schnittansicht zeigt wiederum sehr gut den Kernaufbau des Ferritkerns 82. Der Ferritkern 82 ist wie in der zweiten Ausführungsform aus drei Teilen aufgebaut, aus einem Mittelkern 824 und zwei Platten 825, 826. Der Mittelkern 824 ist ebenfalls Hohlzylindrisch und weist an einem Ende einen Absatz 827 auf, der in einen runden Ausschnitt der ersten Platte 825 eingreift und diese auf dem Mittelkern 824 fixiert. Eine zweite Platte 826 weist ebenfalls einen runden Ausschnitt auf, dessen Innenradius dem Außenradius des Mittelkerns 824 entspricht. Diese Platte wird nach der Montage der Sekundär- und der Primärwicklung auf dem Mittelkern aufgesteckt und dadurch fixiert. Die Platte wird soweit aufgesteckt, bis sie auf der Sekundärwicklung zu liegen kommt, um einen möglichst guten magnetischen Fluss im Zündtransformator 80 zu erreichen.

Asymmetrischer Zündpuls

Im Folgenden wird die Arbeitsweise des Zündgerätes der integrierten Gasentladungslampe 5 erklärt.

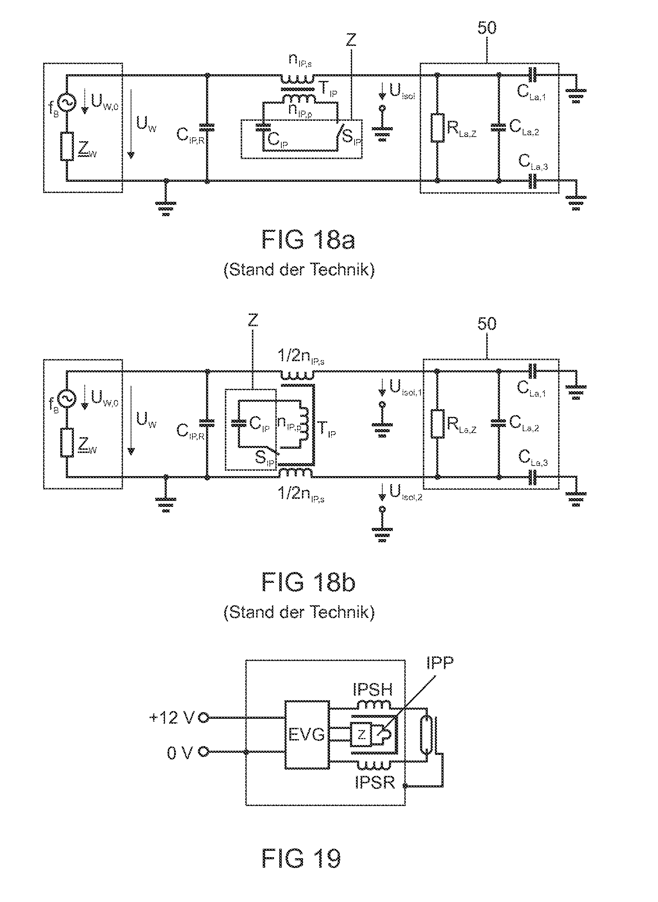

**Fig. 18a** zeigt das schematische Schaltbild eines unsymmetrischen Impulszündgerätes nach dem Stand der Technik. Beim unsymmetrischen Zündgerät ist der Zündtransformator $T_{IP}$ in eine der Zuleitungen des Gasentladungslampenbrenners 50, der hier als Ersatzschaltbild dargestellt ist, geschaltet. Dies hat einen Zündpuls zur Folge, der vom Massebezugspotential, das meistens mit der anderen Zuleitung des Gasentladungslampenbrenners verbunden ist, nur in eine ‚Richtung' eine Spannung erzeugt; es wird also entweder ein gegenüber dem Massebezugspotential positiver Spannungspuls oder ein gegenüber dem Massebezugspotential negativer Spannungspuls erzeugt. Die Funktionsweise eines unsymmetrischen Impulszündgerätes ist weithin bekannt und soll hier nicht weiter erläutert werden. Die unsymmetrische Spannung ist für einseitig gesockelte Lampen gut geeignet, da die Zündspannung lediglich an einer der beiden Gasentladungslampenbrennerelektroden anliegt. Hierfür wird regelmäßig die sockelnahe Elektrode gewählt, da sie nicht berührbar ist und somit bei einer unsachgemäßen Nutzung kein Gefährdungspotential für den Menschen darstellt. Am üblicherweise offen geführten Rückleiter liegt keine für den Menschen gefährliche Spannung an, somit gewährleistet eine mit einem unsymmetrischen Zündgerät betriebene Lampe eine gewisse Sicherheit. Das unsymmetrische Zündgerät weist jedoch den Nachteil auf, die komplette Zündspannung an eine Gasentladungslampenelektrode anzulegen. Damit steigen die Verluste durch Koronaentladungen und andere durch die Hochspannung bedingten Effekte. Dies bedeutet, dass nur ein Teil der erzeugten Zündspannung wirklich am Gasentladungslampenbrenner 50 anliegt. Es muss somit eine höhere Zündspannung erzeugt werden als notwendig, was aufwendig und teuer ist.

**Fig. 18b** zeigt das schematische Schaltbild eines symmetrischen Impulszündgerätes nach dem Stand der Technik. Das symmetrische Impulszündgerät weist einen Zündtransformator $T_{IP}$ auf, der zwei Sekundärwicklungen besitzt, die zusammen mit der Primärwicklung magnetisch gekoppelt sind. Die beiden Sekundärwicklungen sind so orientiert, dass sich die erzeugte Spannung beider Sekundärwicklungen an der Lampe aufaddiert. Damit ist die Spannung in etwa hälftig auf die beiden Gasentladungslampenelektroden verteilt.

Wie oben schon erwähnt, verringern sich damit die Verluste durch Koronaentladungen und andere parasitäre Effekte. Die Ursache für die i. A. höhere Zündspannung bei der symmetrischen Impulszündung wird erst bei einer näheren Betrachtung der parasitären Kapazitäten ersichtlich. Dazu wird das Lampenersatzschaltbild des Gasentladungslampenbrenners 50 in **Fig. 18b** betrachtet. Ein großer, wenn nicht sogar der größte Anteil der parasitären Lampenkapazität $C_{La}$ wird nicht durch die Lampe selbst, sondern durch die Verbindung zwischen Lampe und Zündeinheit verursacht, beispielsweise durch die Lampenleitungen. Diese besitzen jedoch nicht nur parasitäre Kapazitäten von Leiter zu Leiter, sondern auch zwischen Leiter und Umgebung. Geht man vereinfachend von einer Beschreibung mit konzentrierten Energiespeichern aus, lassen sich die parasitären Kapazitäten zwischen den beiden Leitern bzw. den beiden Gasentladungslampenelektrode zu $C_{La,2}$ zusammenfassen, wie in **Fig. 18b** gezeigt. Die jeweils zwischen Leiter und Umgebung vorhandenen parasitären Kapazitäten werden durch $C_{La,1}$ bzw. $C_{La,3}$ modelliert. Im Folgenden wird das Potential der Umgebung, beispielsweise des Gehäuses, als räumlich konstant angesehen und durch das Erdungssymbol dargestellt, auch wenn dies nicht mit dem PE bzw. PEN im Sinne eines Niederspannungsnetzes übereinstimmen muss. Darüber hinaus soll von einem symmetrischen Aufbau und damit von $C_{La,1} = C_{La,3}$ ausgegangen werden. Die parasitäre Lampenkapazität ergibt sich nach dem erweiterten Ersatzschaltbild zu $C_{La,2} + 1/2\ C_{La,1}$.

Der Unterschied zwischen der unsymmetrischen Impulszündung und der symmetrischen Impulszündung wird deutlich, wenn man berücksichtigt, dass auch der Wandler sowie die Zündeinheit parasitäre Kapazitäten gegenüber der Umgebung aufweisen. Diese werden teilweise absichtlich erhöht (z. B. Netzfilter) und sind im Allgemeinen wesentlich größer als die oben betrachteten parasitären Kapazitäten der Lampe gegenüber der Umgebung, und daher kann vereinfachend für die Betrachtung der Zündung von einer auf Umgebungspotential befindlichen Elektronik ausgegangen werden. Unter Vernachlässigung der Spannung UW sind damit im Fall der unsymmetrischen Zündung $C_{La,1}$ und $C_{La,2}$ auf die Zündspannung aufzuladen, wohingegen bei der symmetrischen Zündung $C_{La,2}$ auf die Zündspannung und $C_{La,1}$

sowie $C_{La,3}$ jeweils auf die halbe Zündspannung aufzuladen sind. Unter der Annahme eines symmetrischen Aufbaus, d.h. $C_{La,1} = C_{La,3}$, ist damit für die Aufladung der parasitären Kapazitäten bei der symmetrischen Impulszündung weniger Energie erforderlich als für die unsymmetrische Variante. Im Extremfall $C_{La,1} = C_{La,3} \gg C_{La,2}$ hat die Zündeinheit nach **Fig. 18a,** verglichen mit der nach **Fig. 18b,** nahezu die doppelte Energie bereit zu stellen.

Ein weiterer Vorteil der symmetrischen Zündung liegt in der geringeren erforderlichen Isolationsfestigkeit gegenüber der Umgebung, da die auftretenden Spannungen $U_{Isol,1}$ und $U_{Isol,2}$ nur den halben Wert im Vergleich zur Spannung $U_{Isol}$ im Fall der unsymmetrischen Zündung aufweisen. Dies zeigt zugleich den Nachteil der symmetrischen Impulszündung und den Grund dafür, weshalb sie häufig nicht eingesetzt werden kann: Im Fall der symmetrischen Zündung führen beide Lampenanschlüsse Hochspannung, was oftmals aus Sicherheitsgründen unzulässig ist, da bei vielen Lampen- bzw. Sockelkonstruktionen einer der beiden Lampenanschlüsse, üblicherweise der Lampenferne, der dann als "Lampenrückleiter" bezeichnet wird, berührt werden kann.

Dies zeigt, dass das symmetrische Zündverfahren optimal für zweiseitig gesockelte Gasentladungslampen geeignet ist, die schon vom mechanischen Aufbau her symmetrisch ausgelegt sind. Bei einer einseitig gesockelten Gasentladungslampe besteht, wie vorher schon erwähnt, das Problem der Zündspannung, die an der offenen, vom Benutzer erreichbaren sockelfernen Gasentladungslampenelektrode anliegt. Ein weiteres Problem ist die an der sockelfernen Gasentladungslampenelektrode anliegende Spannung bezüglich des Potentials des Reflektors. Der Reflektor, in den die Gasentladungslampe eingebaut ist, ist üblicherweise geerdet. Somit liegt im Zündmoment eine hohe Spannung zwischen dem Rückleiter der sockelfernen Elektrode und dem Reflektor an. Dies kann zu Überschlägen auf den Reflektor führen, die Fehlfunktionen zur Folge haben. Aus diesen Gründen ist eine symmetrische Zündung für einseitig gesockelte Gasentladungslampen ungeeignet.

Darüber hinaus ist anzumerken, dass der Isolationsaufwand nichtlinear mit der zu isolierenden Spannung ansteigt. Bedingt durch nichtlineare Effekte in Isolierstoffen muss typischerweise bei einer Verdoppelung der Spannung der Abstand zwischen zwei Leitern mehr verdoppelt werden um keinen Überschlag/Durchschlag zu erhalten.

Neben dem oben betrachteten, rein kapazitiven Verhalten der Umgebung bzw. der beteiligten Isolierstoffe, kann, ab einer bestimmten Spannung bzw. den sich ergebenden Feldstärken in den Isolierstoffen sowie an deren Grenzflächen, eine Wirkleistungsumsetzung in den Isolierstoffen z.B. durch Koronaentladungen, Teilentladungen etc. nicht mehr vernachlässigt werden. In den obigen Ersatzschaltbildern sind parallel zu den Kapazitäten zusätzliche nichtlineare Widerstände zu ergänzen. Auch unter diesem Aspekt ist die symmetrische Impulszündung der unsymmetrischen vorzuziehen.

Abschließend sei die Beobachtung angeführt, dass ab einer bestimmten Spannungsbelastung des Isolierstoffes dieser erheblich schneller altert und daher im Fall einer geringfügigen Spannungsreduktion bereits mit einer deutlich erhöhten Lebensdauer gerechnet werden kann.

Einen guten Kompromiss, der die Vorteile beider Zündverfahren in sich vereint, stellt die asymmetrische Impulszündung dar, wie sie in **Fig. 19** in schematischer Darstellung zu sehen ist. Sie besitzt einen ähnlichen Aufbau wie eine symmetrische Zündung, allerdings besitzen die beiden Sekundärwicklungen unterschiedlich große Windungszahlen. Der Nachteil des symmetrischen Zündverfahrens ist ja vor allem, dass ein versehentliches Berühren des Rückleiters während der Zündung und damit die Berührung eines hochspannungsführenden Metallteils durch den Anwender nicht ausgeschlossen werden kann. Bei der integrierten Gasentladungslampe 5, die die oben beschriebene Scheinwerferschnittstelle nach **Fig. 5** aufweist, kann dies ausgeschlossen werden, da die Spannungsversorgung der Elektronik erst mit dem Einsetzen in den Scheinwerfer erfolgt. Somit ist es unmöglich, bei intaktem Scheinwerfer den Rückleiter der sockelfernen Elektrode zu berühren, wenn er Spannung führt. Wie oben schon erwähnt, ist eine symmetrische Zündung auch hier nicht möglich, da Überschläge auf den üblicherweise geerdeten Reflektor befürchtet werden müssen. Es wird daher eine asymmetrische Zündung vorgeschlagen, die z.B. ¾ der Zündspannung auf die sockelnahe Elektrode gibt, und z.B. ¼ der Zündspannung auf die sockelferne Elektrode. Das genaue Spannungsverhältnis zwischen den Elektroden des Gasentladungslampenbrenners 50, also der der sockelnahen ersten Lampenelektrode und der sockelfernen zweiten Lampenelektrode hängt dabei von vielen Faktoren, der Lampengröße und der Sockelkonstruktion ab. Das Spannungsverhältnis zwischen der sockelnahen ersten Lampenelektrode und der sockelfernen zweiten Lampenelektrode kann dabei von 22:1 bis zu 5:4 reichen. Über der Rückleiter-Sekundärwicklung IPSR des Zündtransformators $T_{IP}$ werden bevorzugt Spannungen von 2..8 kV erzeugt, und über der Hinleiter-Sekundärwicklung IPSH des Zündtransformators $T_{IP}$ werden bevorzugt Spannungen von 23..17 kV erzeugt. Damit ergeben sich bevorzugte Übersetzungsverhältnisse zwischen den beiden Sekundärwicklungen ungleich 1, nämlich $n_{IPSR} : n_{IPSH} = 2{:}23 \ldots 8{:}17$. Dies kann auch als Gleichung $n_{IPSR} = 0{,}04..0{,}8 \cdot n_{IPSH}$ ausgedrückt werden. Damit ist der Aufbau zwar dem eines symmetrischen Zünders ähnlich, allerdings sind die Sekundärwicklungen nicht gleichmäßig verteilt.

Die Zahl der Primärwindungen $n_p$ des Zündtransformators $T_{IP}$ liegt dabei bevorzugt zwischen 1 und 4, die Summe der Windungszahlen beider Sekundärwicklungen IPSH und IPSR liegt bevorzugt zwischen 40 und 380.

Die Impulszündeinheit Z in **Fig. 19** ist aus dem Stand der Technik weithin bekannt und wird hier somit nicht näher erläutert. Sie besteht dabei aus mindestens einem Kondensator, welcher über ein Schaltelement an die Primärwicklung des Zündtransformators geschaltet wird. Dabei wird bevorzugt ein Schaltelement mit einer Nenn-Auslösespannung zwischen 350V und 1300V verwendet. Dies kann eine Schaltfunkenstrecke oder ein Thyristor mit entsprechender Ansteuerschaltung sein. In der vorliegenden ersten Ausführungsform besitzt der Zündtransformator $T_{IP}$ ein Übersetzungsverhältnis $n_{IPP}:n_{IPSR}:n_{IPSH}$ von 1:50:150 Windungen, der mit einer Zündeinheit Z basierend auf einer 400 V Funkenstrecke, das heißt mit einer Funkenstrecke mit einer nominellen Auslösespannung von 400 V, betrieben wird. Der Zündtransformator $T_{IP}$ liefert an der sockelfernen Elektrode des Gasentladungslampenbrenners 50 eine Spitzenspannung von +5 kV gegen Erde und an der sockelnahen Elektrode des Gasentladungslampenbrenners 50 eine Spitzenspannung von -15 kV gegen Erde.

In einer weiteren zweiten Ausführungsform ist der Zündtransformator mit einem Übersetzungsverhältnis von 3:50:100 Windungen ausgeführt, und wird mit einer Zündeinheit Z basierend auf einer 800 V Funkenstrecke betrieben. Dieser liefert an der sockelfernen Elektrode des Gasentladungslampenbrenners 50 eine Spitzenspannung von - 8 kV gegen Erde und an der sockelnahen Elektrode des Gasentladungslampenbrenners 50 eine Spitzenspannung von +16 kV gegen Erde.

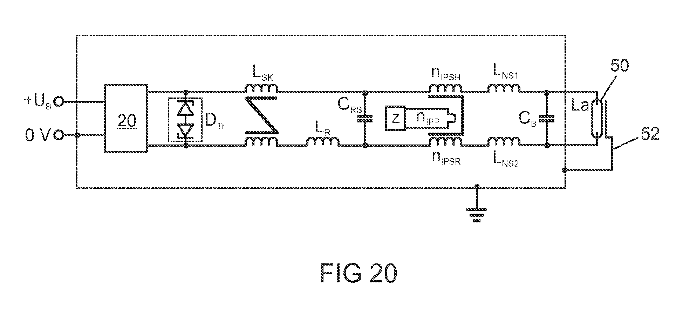

**Fig. 20** zeigt das schematische Schaltbild einer erweiterten Schaltung der integrierten Gasentladungslampe 5. Hier sind eine oder zwei nichtsättigende Drosseln $L_{NS1}$ und $L_{NS2}$ jeweils zwischen das hochspannungsführende Ende jeweils einer Sekundärwicklung und dem jeweiligen Brenneranschluss geschaltet, um Störimpulse mit hohen Spannungsspitzen (sogenannte Glitches) zu verhindern. Dabei werden Induktivitätswerte von 0,5uH bis 25uH, vorzugsweise von 1uH bis 8uH verwendet. Darüber hinaus kann direkt parallel zum Gasentladungslampenbrenner und somit zwischen den Gasentladungslampenbrenner und die nichtsättigenden Drosseln ein hochspannungsfester Kondensator $C_B$ (ein sogenannter "Brenner-Kondensator") geschaltet werden. Dieser besitzt üblicherweise eine Kapazität kleiner 22pF um den Zündimpuls nicht zu stark zu bedämpfen. Vorzugsweise weist er eine Kapazität zwischen 3pF und 15pF auf. Der Kondensator kann konstruktiv durch eine entsprechende Anordnung und Ausgestaltung der umspritzen Lampenstromzuführungen beispielsweise in Form von Platten realisiert werden. Der Kondensator hat zwei positive Einflüsse: Zum einen ist er für das EMV-Verhalten der Lampe von Vorteil, da hochfrequente Störungen die durch die Lampe erzeugt werden direkt am Ort der Entstehung kurzgeschlossen werden, zum anderen gewährleistet er einen niederohmigeren Durchbruch des Brenners, was insbesondere eine Übernahme durch die Betriebsschaltung 20 erleichtert.

Mittels eines Rückschluss-Kondensators $C_{RS}$, mit einem Kapazitätswert, der vorzugsweise zwischen 68pF und 22nF liegt, wird für die durch den Zündtransformator $T_{IP}$ erzeugten sehr schnellen Pulse ein Abschluss des Impulszünders gegenüber dem EVG erreicht, der eine sehr niedrige Impedanz aufweist. Dadurch liegen die erzeugten Hochspannungszündimpulse in sehr guter Näherung vollständig am Brenner an. Der Rückschluss-Kondensator $C_{RS}$ bildet zusammen mit einer Rückleiterdrossel $L_R$ einen Tiefpass. Dieser wirkt elektromagnetischen Störungen entgegen und schützt den EVG-Ausgang vor unzulässig hohen Spannungen. Die erweiterte Schaltung weist ebenfalls eine stromkompensierte Drossel $L_{SK}$ auf, die ebenfalls elektromagnetischen Störungen entgegen wirkt. Eine Suppressordiode $D_{Tr}$, auch Klemmdiode genannt, begrenzt die aufgrund des Zündvorgangs an der Betriebsschaltung 20 entstehende Spannung und schützt somit den Ausgang der Betriebsschaltung 20.

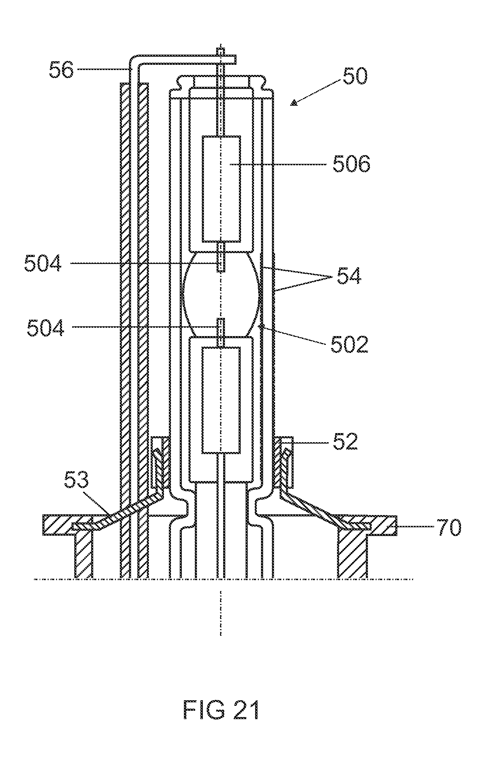

Der Gasentladungslampenbrenner 50 der integrierten Gasentladungslampe 5 wird mittels einer Metallklammer 52 und vier Halteblechen 53 am Sockel 70 befestigt (siehe z.B. Fig. 1). Wie in **Fig. 20** schon angedeutet, wird nun diese Metallklammer 52 geerdet, d.h. bei einer integrierten Gasentladungslampe für Automobile z.B. auf Karosseriemasse gelegt. Durch die Erdung der Metallklammer wird ein Überschlag von der Metallklammer zum Scheinwerfer sicher unterbunden, da sich beide Teile auch während der Zündung auf demselben Potenzial befinden. Weiterhin wird durch die Erdung der Metallklammer eine besonders gute kapazitive Kopplung zu einer auf dem Gasentladungslampenbrennergefäß befindlichen Zündhilfsbeschichtung hergestellt. Solche Zündhilfsbeschichtungen werden bei Hochdruckentladungslampenbrennern oftmals aufgebracht, um die hohen Zündspannungen zu senken. Diese Maßnahme erhöht die zündspannungssenkende Eigenschaft der auf dem Gasentladungslampenbrennergefäß befindlichen Zündhilfsbeschichtung. Besonders Vorteilhaft ist es, wenn der kapazitive Einfluss der Metallklammer auf den Gasentladungslampenbrenner (gegebenenfalls inklusive seiner Zündhilfsbeschichtung) erhöht wird. Hierzu werden weitere elektrisch leitende Teile galvanisch oder kapazitiv an der Metallklammer angekoppelt. Dadurch ergibt sich eine Art "dritte Elektrode", welche aus mehreren "miteinander gekoppelten Einzelelektroden" besteht und einseitig geerdet ist. Beispielsweise kann diese dritte Elektrode neben der Metallklammer zusätzlich eine metallische Beschichtung 54 auf dem Außenkolben umfassen, wie dies in **Fig. 21** angedeutet ist. Die Beschichtung kann dabei auf der Außenseite und/oder auf der Innenseite des Außenkolbens aufgebracht sein. Die Beschichtung besteht aus elektrisch leitfähigem beispielsweise metallischem Material und ist vorzugsweise in einem Streifen parallel zum Rückleiter angebracht. Dadurch tritt die metallische Beschichtung 54 optisch nicht in Erscheinung und zudem ergibt sich ein minimaler Abstand und damit eine maximale Koppelkapazität zur Zündhilfsbeschichtung auf dem Brennergefäß. Die Beschichtung auf dem Außenkolben kann kapazitiv oder galvanisch an die Metallklammer angekoppelt sein. Für eine galvanische Kopplung ist es besonders vorteilhaft wenn die elektrische Kontaktierung der äußeren Beschichtung mit der Metallklammer durch das Fixieren des Brenners in der Metallklammer erfolgt, was ohne zusätzliche Mehraufwand durch eine gängige Montagetechnik nach dem Stand der Technik realisiert werden kann. Die Beschichtung erstreckt sich vorzugsweise über 1% bis 20% des Außenkolbenumfangs.

Die positive Wirkung der geerdeten Metallklammer auf die Zündspannung einer Gasentladungslampe entsteht durch folgenden physikalischen Zusammenhang: Dadurch dass bei einem geerdeten Metallklammer und einer asymmetrischen Impulszündung zwischen der Metallklammer und beiden Gasentladungslampenelektroden eine hohe Spannung anliegt, wird in der Nähe _beider_ Gasentladungslampenelektroden eine dielektrisch behinderte Entladung im Außenkolben begünstigt. Die dielektrisch behinderte Entladung im Außenkolben begünstigt einen Durchschlag im Brennergefäß. Dieser wird durch das UV-Licht begünstigt, welches bei der dielektrisch behinderten Entladung entsteht und durch das Brennergefäß kaum absorbiert wird, und an den Elektroden sowie im Entladungsraum die Erzeugung freier Ladungsträger begünstigt und somit die Zündspannung reduziert.

Die Metallklammer und die Referenzebene zum Reflektor der integrierten Gasentladungslampe 5 können aus einem Metallteil bestehen, welches entsprechende Anker besitzt, die durch Kunststoff umspritzt werden und eine gute mechanische Verbindung zum Sockel 70 sicherstellen. Die Erdung der Metallklammer erfolgt dann automatisch durch das Einsetzen der Lampe in den Reflektor respektive in den Scheinwerfer. Dies macht die Referenzebene nun robuster gegenüber mechanischer Abnutzung, was bedingt durch das erhöhte Gewicht einer integrierten Gasentladungslampe 5, vorteilhaft ist. Die Ausbildung nach dem Stand der Technik sieht nur ein Kunststoff-Spritzgussteil als Referenzebene vor.

In einer bevorzugten Ausbildung der integrierten Gasentladungslampe 5 besteht der Sockel aus 2 Teilen. Einem ersten Teil mit einem bereits justiertem Gasentladungslampenbrenner 50, der mittels der Metallklammer 52, und den Halteblechen 53 in einen Sockel aus Kunststoff eingebettet ist, der wie oben beschrieben eine metallverstärkte Referenzebene aufweist. Dieses erste Teil wird mit einem zweiten Teil verbunden, welches die Zünd- und Betriebselektronik enthält. Die Verbindungen für die Lampe sowie die Stromzuführungen können durch Schweißen, Löten, oder durch eine mechanische Verbindung wie einem Steckkontakt oder einem Schneidklemmkontakt bewerkstelligt werden.

**Fig. 21** zeigt einen Gasentladungslampenbrenner 50, der im Folgenden beschrieben wird. Der Gasentladungslampenbrenner 50 ist bevorzugt ein quecksilberfreier Gasentladungslampenbrenner, es kann jedoch ebenfalls ein quecksilberhaltiger Gasentladungslampenbrenner verwendet werden. Der Gasentladungslampenbrenner 50 beherbergt ein gasdicht verschlossenes Entladungsgefäß 502, in dem Elektroden 504 und eine ionisierbare Füllung zwecks Erzeugung einer Gasentladung eingeschlossen sind, wobei die ionisierbare Füllung vorzugsweise als quecksilberfreie Füllung ausgebildet ist, die Xenon und Halogenide der Metalle Natrium, Scandium, Zink und Indium umfasst, und das Gewichtsverhältnis der Halogenide von Zink und Indium im Bereich von 20 bis 100, vorzugsweise bei 50, liegt und wobei der Kaltfülldruck des Xenongases im Bereich von 1,3 Megapascal bis 1,8 Megapascal liegt. Es hat sich gezeigt, dass dadurch die Abnahme des Lichtstroms mit der Betriebsdauer des Gasentladungslampenbrenners 50 und die Zunahme der Brennspannung des Gasentladungslampenbrenners 50 mit ihrer Betriebsdauer verringert werden können. Das heißt, der Gasentladungslampenbrenner 50 besitzt im Vergleich zu einem Gasentladungslampenbrenner gemäß dem Stand der Technik eine verbesserte Lichtstrom-Maintenance und zeigt, aufgrund des geringeren Brennspannungsanstiegs über die Betriebsdauer, eine längere Lebensdauer. Außerdem zeigt der Gasentladungslampenbrenner 50 über seine Betriebsdauer nur eine geringe Verschiebung des Farbortes des von ihm emittierten Lichts. Insbesondere wandert der Farbort nur innerhalb der gemäß der ECE Regel 99 erlaubten Grenzen. Sowohl der vergleichsweise hohe Kaltfülldruck des Xenons als auch der vergleichsweise hohe Gewichtsanteil der Halogenide des Zinks tragen wesentlich zur Einstellung der Brennspannung des Gasentladungslampenbrenners 50, das heißt der Spannung, die sich nach Beendigung der Zündphase, im quasistationären Betriebszustand über der Entladungsstrecke des Gasentladungslampenbrenners 50 einstellt, bei. Die Halogenide des Indiums sind in einem so geringen Gewichtsanteil vertreten, dass sie zwar zur Einstellung des Farbortes des von dem Gasentladungslampenbrenner emittierten Lichts beitragen, aber keinen nennenswerten Beitrag zur Einstellung der Brennspannung des Gasentladungslampenbrenners 50 leisten. Die Halogenide des Indiums dienen bei dem Gasentladungslampenbrenner 50, ebenso wie die Halogenide von Natrium und Scandium, hauptsächlich der Lichtemission.

Vorteilhafterweise liegt der Gewichtsanteil der Halogenide von Zink im Bereich von 0,88 Mikrogramm bis 2,67 Mikrogramm pro 1 mm$^3$ Entladungsgefäßvolumen und der Gewichtsanteil der Halogenide von Indium im Bereich von 0,026 Mikrogramm bis 0,089 Mikrogramm pro 1 mm$^3$ Entladungsgefäßvolumen. Als Halogenide können Jodide, Bromide oder Chloride verwendet werden.

Der Gewichtsanteil der Halogenide von Natrium liegt vorteilhafterweise im Bereich von 6,6 Mikrogramm bis 13,3 Mikrogramm pro 1 mm$^3$ des Entladungsgefäßvolumens und der Gewichtsanteil der Halogenide von Scandium im Bereich von 4,4 Mikrogramm bis 11,1 Mikrogramm pro 1 mm$^3$ des Entladungsgefäßvolumen, um zu gewährleisten, dass der Gasentladungslampenbrenner 50 weißes Licht mit einer Farbtemperatur von ca. 4000 Kelvin erzeugt und der Farbort während der Lebensdauer des Gasentladungslampenbrenners 50 im Bereich des weißen Lichts, vorzugsweise in engen Grenzen bleibt. Bei einem geringeren Gewichtsanteil können die Verluste an Natrium (bedingt durch Diffusion durch die Gefäßwand des Entladungsgefäßes) und Scandium (bedingt durch chemische Reaktion mit dem Quarzglas des Entladungsgefäßes) nicht mehr ausgeglichen werden und bei einem höheren Gewichtsanteil werden der Farbort und die Farbtemperatur verändert.

Das Volumen des Entladungsgefäßes ist vorteilhafterweise kleiner als 23 mm$^3$, um dem Ideal einer Punktlichtquelle möglichst nahe zu kommen. Für die Verwendung als Lichtquelle in einem Fahrzeugscheinwerfer oder einem anderen optischen System, sollte der lichtemittierende Teil des Entladungsgefäßes 502, das heißt, der Entladungsraum mit den darin eingeschlossenen Elektroden, möglichst geringe Abmessungen besitzen. Idealerweise sollte die Lichtquelle punktförmig sein, um sie im Brennpunkt eines optischen Abbildungssystems anordnen zu können. Die erfindungsgemäße Hochdruckentladungslampe 5 kommt diesem Ideal näher als eine Hochdruckentladungslampe gemäß dem Stand der Technik, da sie vorzugsweise ein Entladungsgefäß 502 mit einem kleineren Volumen aufweist. Das Volumen des Entladungsgefäßes 502 der Hochdruckentladungslampe 5 liegt daher vorteilhafterweise im Bereich von größer gleich 10 mm$^3$ bis kleiner als 26 mm$^3$.

Der Abstand zwischen den Elektroden 504 des Gasentladungslampenbrenners ist vorzugsweise kleiner als 5 Millimeter, um dem Ideal einer Punktlichtquelle möglichst nahe zu kommen. Für die Verwendung als Lichtquelle in einem Kraftfahrzeugscheinwerfer beträgt der Elektrodenabstand vorzugsweise 3,5 Millimeter. Dadurch ist der Gasentladungslampenbrenner 50 optimal an die Abbildungsverhältnisse im Fahrzeugscheinwerfer angepasst.

Die Dicke beziehungsweise der Durchmesser der Elektroden 502 des Gasentladungslampenbrenners liegt vorteilhafterweise im Bereich von 0,20 Millimeter bis 0,36 Millimeter. Elektroden mit einer Dicke in diesem Wertebereich lassen sich noch hinreichend sicher im Quarzglas des Entladungsgefäßes einbetten und besitzen zugleich eine ausreichende Stromtragfähigkeit, die insbesondere während der sogenannten Anlaufphase der Hochdruckentladungslampe bedeutsam ist, während der sie mit dem 3 bis 5-fachen ihrer Nennleistung und ihres Nennstroms betrieben wird. Im Fall von dünneren Elektroden wäre bei der vorliegenden Ausführungsform mit quecksilberfreier Füllung keine ausreichende Stromtragfähigkeit mehr gewährleistet und im Fall von dickeren Elektroden 504 bestünde die Gefahr von Rissbildungen im Entladungsgefäß, bedingt durch das Auftreten von mechanischen Spannungen aufgrund der deutlich unterschiedlichen thermischen Ausdehnungskoeffizienten von dem Entladungsgefäßmaterial, bei dem es sich um Quarzglas handelt, und dem Elektrodenmaterial, bei dem es sich um Wolfram oder mit Thorium bzw. Thoriumoxid dotiertem Wolfram handelt.

Die Elektroden sind jeweils mit einer im Material des Entladungsgefäßes eingebetteten Molybdänfolie 506 verbunden, die eine gasdichte Stromdurchführung ermöglichen. und der geringste Abstand der jeweiligen Molybdänfolie 506 zu dem in den Innenraum des Entladungsgefäßes 502 hineinragenden Ende der mit ihr verbundenen Elektrode beträgt vorteilhafterweise mindestens 4,5 mm, um einen möglichst großen Abstand zwischen der jeweiligen Molybdänfolie 506 und der an den in das Entladungsgefäß 502 hineinragenden Elektrodenspitzen ansetzenden Gasentladung zu gewährleisten. Dieser dadurch bedingte, vergleichsweise große Mindestabstand zwischen den Molybdänfolien 506 und der Gasentladung hat den Vorteil, dass die Molybdänfolien 506 einer geringeren thermischen Belastung und einer geringeren Korrosionsgefahr durch die Halogene in den Halogenverbindungen der ionisierbaren Füllung ausgesetzt sind.

Frequenzanpassung

Im Folgenden wird ein Verfahren zum Vermeiden von Flicker- oder Flackererscheinungen beschrieben, das die Betriebselektronik der integrierten Gasentladungslampe 5 ausführt.

Die hier betrachteten Gasentladungslampen müssen mit Wechselstrom betrieben werden, der primär von der Betriebselektronik 920 erzeugt wird. Dieser Wechselstrom kann ein hochfrequenter Wechselstrom, insbesondere mit einer Frequenz oberhalb der in Gasentladungslampen auftreten akustischen Resonanzen sein, was bei den hier betrachteten Lampen einer Frequenz des Lampenstromes oberhalb von etwa 1 MHz entspricht. Üblicherweise verwendet man jedoch den niederfrequenten Rechteckbetrieb, der in Folgenden betrachtet wird.

Gasentladungslampen, insbesondere Hochdruckentladungslampen neigen bei falscher Betriebsweise grundsätzlich zu Abrissen des Lichtbogens beim Richtungswechsel des Lampenstroms, der so genannten Kommutierung, was auf eine zu niedrige Temperatur der Elektroden zurückzuführen ist. Üblicherweise werden Hochdruck-Entladungslampen mit einem niederfrequenten Rechteckstrom betrieben, was auch "wackelnder Gleichstrombetrieb" genannt wird. Dabei wird ein im Wesentlichen rechteckförmiger Strom mit einer Frequenz von üblicherweise 100 Hz bis zu einigen kHz an die Lampe angelegt. Bei jedem Umschalten zwischen positiver und negativer treibender Spannung, die im Wesentlichen durch die Betriebelektronik bereitgestellt wird, kommutiert der Lampenstrom, was ein kurzzeitiges zu Null werden des Lampenstromes mit sich bringt. Dieser Betrieb stellt sicher, dass die Elektroden der Lampe trotz eines Quasi-Gleichstrombetriebs gleichmäßig belastet werden.

Der Bogenansatz, das heißt der Ansatz des Lichtbogens auf der Elektrode, ist beim Betrieb einer Gasentladungslampe mit Wechselstrom grundsätzlich problematisch. Beim Betrieb mit Wechselstrom wird während einer Kommutierung die Kathode zur Anode und umgekehrt eine Anode zur Kathode. Der Übergang Kathode-Anode ist prinzipbedingt relativ unproblematisch, da die Temperatur der Elektrode näherungsweise keinen Einfluss auf ihren anodischen Betrieb hat. Beim Übergang Anode-Kathode hängt die Fähigkeit der Elektrode, einen ausreichend hohen Strom liefern zu können, von deren Temperatur ab. Ist diese zu niedrig, wechselt der Lichtbogen während der Kommutierung, meistens nach dem Nulldurchgang, von einer punktförmigen Bogenansatzbetriebsweise in eine diffuse Bogenansatzbetriebsweise. Dieser Wechsel geht mit einem oft sichtbaren Einbruch der Lichtemission einher, was als Flackern wahrgenommen werden kann.

Sinnvollerweise wird die Lampe also in punktförmiger Bogenansatzbetriebsweise betrieben, da der Bogenansatz hier sehr klein und damit sehr heiß ist. Das hat zur Folge, dass hier aufgrund der höheren Temperatur am kleinen Ansatzpunkt weniger Spannung benötigt wird, um ausreichend Strom liefern zu können.

Als Kommutierung wird im Folgenden der Vorgang betrachtet, bei dem die Polarität der treibenden Spannung des Gasentladungslampenbrenners 50 wechselt, und bei dem daher eine starke Strom- oder Spannungsänderung auftritt. Bei einer im Wesentlichen symmetrischen Betriebsweise der Lampe befindet sich bei der Mitte der Kommutierungszeit der Spannungs- oder Stromnulldurchgang. Hierbei ist zu bemerken, dass die Spannungskommutierung üblicherweise immer schneller abläuft als die Stromkommutierung.

Aus ‚The boundary layers of ac-arcs at HID-electrodes: phase resolved electrical measurements and optical observations', O. Langenscheidt et al., J. Phys D 40 (2007), S. 415-431 ist bekannt, dass bei einer kalten Elektrode und diffusem Bogenansatz die Spannung nach der Kommutierung zunächst ansteigt, da die zu kalte Elektrode den benötigten Strom nur durch eine höhere Spannung liefern kann. Kann die Vorrichtung zum Betrieb der Gasentladungslampe diese Spannung nicht liefern, so tritt das o.g. Flackern auf.

Das Problem des wechselnden Bogenansatzmodus betrifft vor allem Gasentladungslampen, die gegenüber ähnlichen Lampen gleicher Nennleistung vergleichsweise große Elektroden besitzen. Typischerweise werden Lampen dann mit Überlast betrieben, wenn "Sofortlicht" gefordert ist, wie beispielsweise bei Xenon-Entladungslampen im KfZ-Bereich, bei denen aufgrund der gesetzlichen Bestimmungen 80% der Lichtabgabe nach 4 Sekunden erreicht sein müssen. Diese Lampen werden während einem sogenannten "Schnellstarts", auch als Anlaufphase bezeichnet, mit einer deutlich höheren Leistung als ihrer Nennleistung betrieben, um den geltenden Automobilnormen bzw. Bestimmungen gerecht zu werden. Daher ist die Elektrode auf die hohe Startleistung dimensioniert, ist aber bezogen auf den normalen Betriebszustand zu groß. Da nun die Elektrode hauptsächlich durch den durch sie hindurch fließenden Lampenstrom geheizt wird, tritt das Problem des Flackerns vor allem bei gealterten Gasentladungslampen auf, deren Brennspannung am Lebensdauerende erhöht ist. Durch die erhöhte Brennspannung fließt ein kleinerer Lampenstrom, da die Betriebselektronik während das stationären Lampenbetriebs mittels Regelung die Lampenleistung konstant hält, weswegen die Elektroden der Gasentladungslampe am Lebensdauerende nicht mehr genügend geheizt werden.

Bei einer integrierten Gasentladungslampe besteht nun ein Vorteil darin, dass die Betriebselektronik untrennbar mit dem Gasentladungslampenbrenner verbunden ist, so dass die bisherige Brenndauer, auch als kumulierte Brenndauer $t_k$ bezeichnet, die sich durch Summation aller Zeitdauern in denen der Gasentladungslampenbrenner betrieben wurde, ungeachtet der dazwischen liegenden Zeitdauern in denen der Gasentladungslampenbrenner nicht betrieben wurde, ergibt, von der Betriebselektronik auf einfache Weise erfasst werden kann. Diese Erfassung kann beispielsweise durch ein Zeitmessgerät mit nichtflüchtigem Speicher erfolgen, das immer dann die Zeit misst, wenn der Gasentladungslampenbrenner 50 betrieben wird, folglich ein Lichtbogen zwischen den Elektroden brennt. Da das Problem des Flackerns vornehmlich bei älteren Lampen auftritt, wird nun ein Verfahren vorgeschlagen, bei dem die Betriebsfrequenz, mit der der Gasentladungslampenbrenner betrieben wird, derart an die Brenndauer des Gasentladungslampenbrenners angepasst wird, dass mit zunehmender Brenndauer auch die Betriebsfrequenz erhöht wird. Dies bietet folgende Vorteile: Der Wechsel von anodischer und kathodischer Betriebsphase, welcher mit einer Temperaturmodulation der Elektrodenspitzen einhergeht, erfolgt bei höherer Frequenz schneller. Folglich ist bei höherer Frequenz der Temperaturhub der Elektrodenspitzen aufgrund ihrer thermischen Trägheit geringer. Erstaunlicherweise hat sich gezeigt, dass bei einer Elektrodentemperatur, die über einer "kritischen Minimaltemperatur" der Lampenelektroden, liegt, ein Flackern unterbleibt.

Die Frequenz darf allerdings nicht beliebig erhöht werden, da es sonst zu einer Anregung von akustischen Resonanzen in der Lampe, die mit einer Deformation des Bogens sowie ebenfalls Flackern eingehen können, kommen kann. Dieser Effekt ist bereits ab Frequenzen von 1 kHz möglich, weshalb man üblicherweise für den Normalbetrieb, d.h. nach der Zündungs- und Anlaufphase im der stationären Betriebsphase, eine Frequenz von 400 Hz bzw. 500 Hz wählt. Diese Frequenz wird im Folgenden als untere Grenzfrequenz bezeichnet. Im Folgenden wird der Begriff ‚niedrige kumulierte Brenndauer' als eine Brenndauer angesehen, in der der Brenner 50 der Gasentladungslampe 5 noch keine oder wenige Alterungseffekte zeigt. Dies ist der Fall, bis die kumulierte Brenndauer etwa die ersten 10% der spezifizierten Lebensdauer der Gasentladungslampe 5 erreicht. Der Begriff ‚in der Nähe der spezifizierten Lebensdauer' wird im Folgenden als eine Lebensdauer angesehen, bei der die kumulierte Brenndauer langsam die spezifizierte Lebensdauer erreicht, z.B. zwischen 90% und 100% der spezifizierten Lebensdauer liegt. Als spezifizierte Lebensdauer wird die vom Hersteller angegebene Lebensdauer angesehen.

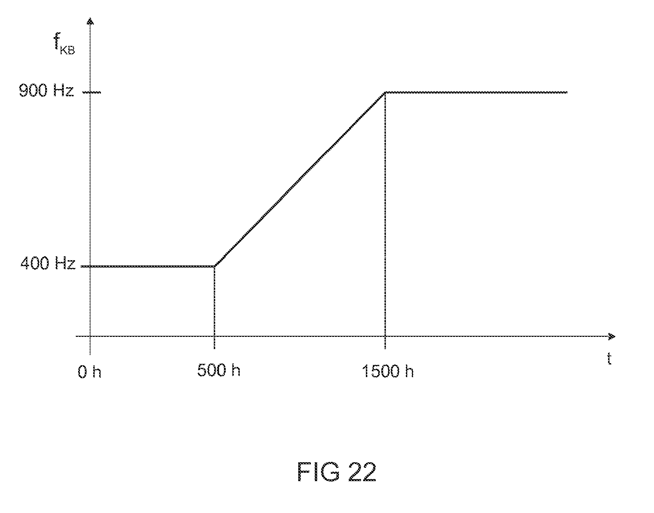

**Fig. 22** zeigt das Diagramm einer ersten Ausführungsform des Verfahrens, bei dem die Betriebsfrequenz des Gasentladungslampenbrenners über seiner Brenndauer aufgetragen ist. Es ist gut zu erkennen, dass die Betriebsfrequenz bis zu einer Brenndauer von 500 h konstant bei 400 Hz bleibt, dann während der Brenndauer von 500 h bis 1500 h sukzessive um 0,5 Hz/h bis auf 900 Hz erhöht wird, um ab dann bei 900 Hz zu bleiben.

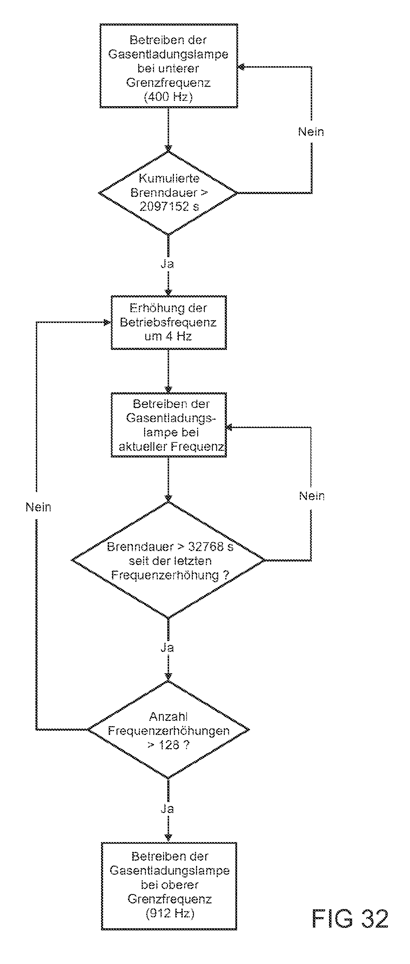

Die Frequenzerhöhung im Bereich 500 h bis 1500 h muss jedoch nicht kontinuierlich erfolgen, sondern kann auch in Stufen erfolgen. So wird in einer zweiten Variante der ersten Ausführungsform des Verfahrens, die in **Fig. 32** dargestellt ist, ab einer kumulierten Brenndauer von 2097152 s, was etwa 583 h entspricht, immer nach Ablauf von 32768 s, was etwa 9,1 h entspricht, die Frequenz um 4 Hz erhöht. Es wird so lange die Frequenz erhöht, bis 128 Erhöhungen durchgeführt wurden. Dann hat die Frequenz - ausgehend vom ursprünglichen Startwert von 400 Hz - den Wert 912 Hz erreicht. Die zweite Variante der ersten Ausführungsform des Verfahrens ist insbesondere für die Realisierung mittels digitaler Logik, beispielsweise durch einen Mikrocontroller oder eine Digitalschaltung in einem ASIC, geeignet da sie nur diskrete Zeit- und Frequenzschritte erfordert.

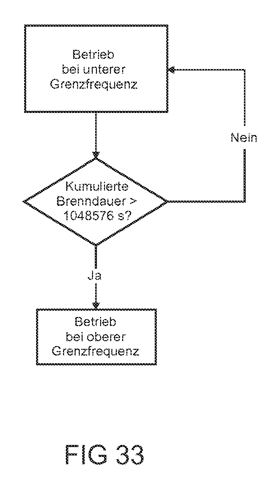

In der dritten Variante der ersten Ausführungsform, die in **Fig. 33** dargestellt ist, wird eine besonders einfache Realisierung angewandt. Hier wird nach einer Zeit von 1048576 s, was etwa 291 h entspricht, die Frequenz in einem Schritt von 400 Hz auf 800 Hz verdoppelt. Anschließend wird die Lampe immer mit der hohen Frequenz betrieben. Im Gegensatz zur zweiten Variante der ersten Ausführungsform erfolgt lediglich ein einziger Frequenzschritt.

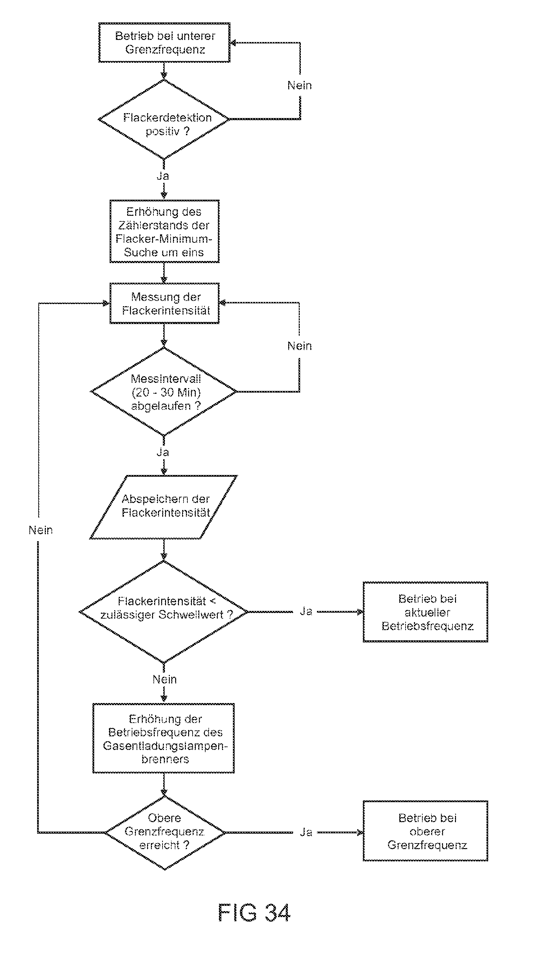

In einer zweiten Ausführungsform, die in **Fig. 34** dargestellt ist, wird das obige Verfahren mit einer Schaltungsanordnung zum Detektieren von Flackern (nicht gezeigt) kombiniert, um eine bedarfsgerechte Anpassung der Frequenz an die Erfordernisse des Lampenbrenners vornehmen zu können. Die Schaltungsanordnung zum Detektieren von Flackern basiert dabei auf einer Detektionsschaltung, die zur Detektion die Lampenspannung und/oder den Lampenstrom heranzieht. Alternativ können auch geeignete korrelierende Größen vor dem Wechselrichter zur Detektion herangezogen werden. Ein elektronisches Betriebs- oder Vorschaltgerät wie es üblicherweise im Kraftfahrzeug zur Anwendung kommt und als Betriebselektronik 920 in der integrierten Gasentladungslampe 5 enthalten sein kann, besitzt einen zweistufigen Aufbau bestehend aus Gleichspannungswandler und Wechselrichter die über einen Gleichspannungszwischenkreis miteinander gekoppelt sind, wobei die zeitliche Spannungsänderung des Gleichspannungszwischenkreises und/oder die zeitliche Stromänderung des in den Wechselrichter aus den Zwischenkreis hinein fließenden Stromes als Maß für das Flackern der Lampe betrachtet werden können.

Die Schaltungsanordnung zum Detektieren von Flackern detektiert nun, ob ein Flackern bei der Lampe auftritt. Ist dies der Fall und die bisherige Brenndauer der Lampe größer als 500 h, so wird ein Flacker-Kartierungsverfahren in Gang gesetzt.

Das Verfahren umfasst folgende Schritte:

- Erhöhung des Zählerstands einer Flacker-Minimum-Suche um eins
- Schrittweise Erhöhung der Betriebsfrequenz des Gasentladungslampenbrenners ausgehend von der unteren Grenzfrequenz,
- Messung der Flackerintensität bei der gewählten Betriebsfrequenz.

Dabei wird jeweils mindestens die Flackerintensität bei der gewählten Betriebsfrequenz abgespeichert. Erforderlichenfalls werden weitere, bei der Betriebsfrequenz gemessene Parameter abgespeichert. Die Messung der Flackerintensität muss dabei über einen vergleichsweise großen Zeitraum erfolgen, um statistische Schwankungen, die während des Betriebes auftreten können, auszugleichen. In der zweiten Ausführungsform ist z.B. eine Messzeit von 20-30 Minuten vorgesehen. Die Frequenz wird dabei um je 100 Hz erhöht, und dann die Flackerintensität gemessen. In einer ersten Stufe wird die Frequenz bis zu einer ersten oberen Grenzfrequenz von 900 Hz erhöht. Sobald das Flackern verschwindet bzw. die Flackerintensität unter einen zulässigen Schwellwert absinkt wird mit der Erhöhung der Frequenz nicht weiter fortgefahren, die aktuelle Frequenz auch für den zukünftigen Betrieb in einem nichtflüchtigen Speicher gesichert, so dass beim nächsten Wiedereinschalten der integrierten Lampe gleich mit der zuletzt betriebenen Frequenz gestartet wird.

Konnte das Flackern trotz einer Erhöhung bis zur ersten Obergrenze nicht beseitigt werden bzw. die Flackerintensität nicht unter einen zulässigen Schwellwert gesenkt werden, so wird der Zählerstand der Flacker-Minimum-Suche um eins erhöht und die Frequenz weiter erhöht, bis der dreifache Wert der ersten oberen Grenzfrequenz, in diesem Fall also 2700 Hz, der sogenannten zweiten oberen Grenzfrequenz erreicht ist. Danach wird gezielt die Frequenz aus dem gesamten gemessenen Bereich zwischen der unteren Grenzfrequenz und der zweiten oberen Grenzfrequenz ausgewählt, bei der sich das geringste Flackern gezeigt hat. Der zum geringsten Flackern gehörige Flackerintensität wird mit einem Faktor größer 1 multipliziert und als neuen zulässigen Schwellwert die sogenannte aktuelle Flackergrenze abgespeichert.

Im Folgenden bleibt die Überwachung und Messung des Flackerns aktiviert und es wird periodisch überprüft ob die aktuelle Flackerintensität oberhalb der aktuellen Flackergrenze liegt. Sollte das der Fall sein, wird zur der Frequenz gesprungen, die die zweitniedrigsten Flackerintensitäten bei der zuvor beschriebenen Untersuchung der Lampe im Rahmen dieses Verfahrens gezeigt hat. Bei dieser Frequenz wird dann die Lampe betrieben wobei auch weiterhin die Überwachung und Messung des Flackerns aktiviert bleibt. Sollte nun abermals die aktuelle Flackerintensität oberhalb der aktuellen Flackergrenze liegen wird zu der Frequenz mit der drittniedrigsten Flackerintensität gewechselt. Sollte im nachfolgenden Betrieb auch hier die die aktuelle Flackerintensität oberhalb der aktuellen Flackergrenze liegen, so wird der Zählerstand der Flacker-Minimum-Suche erneut um eins erhöht und mit einem neuen Durchlauf der Minimumssuche begonnen, wobei der gesamte Frequenzbereich zwischen der unteren Grenzfrequenz und der zweiten oberen Grenzfrequenz untersucht wird.

Der Zählerstand, wie oft die Flacker-Minimum-Suche bereits aktiviert wurde sowie die aktuelle Flackergrenze werden im dem nichtflüchtigen Speicher der Betriebselektronik (920, 930) abgelegt. Diese beiden Werte sind über die Kommunikationsschnittstelle der integrierten Gasentladungslampe beispielsweise über einen LIN-Bus auslesbar. Im Rahmen der Wartung des Kraftfahrzeugs, beispielsweise im Rahmen der Inspektion nach Ablauf eines Service-Intervalls, oder weil sich das Kraftfahrzeug wegen eines Defekts in der Werkstatt befindet, werden die beiden Werte ausgelesen und mit Grenzwerten verglichen, welche die noch zu tolerierende Werte repräsentieren. Die Grenzwerte können ebenfalls in der integrierten Gasentladungslampe gespeichert sein und über den Kommunikationsbus ausgelesen werden, sind jedoch der Einfachheit halber in der bevorzugten Ausführung im Diagnosegerät der Werkstatt abgelegt. Liegt einer der ausgelesenen Werte oberhalb des zugehörigen Grenzwerts ist die integrierte Gasentladungslampe (5) gegen eine neue integrierte Gasentladungslampe auszutauschen. Dieses Vorgehen erhöht die Verfügbarkeit des Beleuchtungssystems erheblich, ohne dabei nennenswerte Kosten zu verursachen, da die Lampe nicht unnötig frühzeitig ausgewechselt wird und während der Wartung kein nennenswerter zeitlicher Mehraufwand entsteht, da das Fahrzeug ohnehin an das Diagnosegerät angeschlossen wird.

Die Grenzwerte mit denen die Daten aus dem nichtflüchtigen Speicher der Betriebselektronik verglichen werden, können abhängig von der ebenfalls aus dem nichtflüchtigen Speicher ausgelesenen kumulierten Brenndauer ($t_k$) oder der kumulierten gewichteten Brenndauer ($t_{kg}$) verändert werden, so dass beispielsweise die Flackergrenze einer alten Lampe höher liegen darf als einer neuen Lampe ohne dass die Lampe ausgetauscht werden müsste. Die Abhängigkeiten der Grenzwerte abhängig von der Brenndauer der Lampe werden durch den Lampenhersteller dem Kraftfahrzeughersteller zur Verfügung gestellt, so dass dieser die Daten beispielsweise in Form einer Tabelle oder Datenmatrix in sein Diagnosegerät einpflegen kann.

In einer dritten Ausführungsform wird analog zur zweiten Ausführungsform vorgegangen, allerdings wird, insbesondere um Speicherplatz im Mikrocontroller zu sparen, bei der oben beschriebenen Suche nur der Wert der bisher minimal aufgetretenen Flackerintensität und die zugehörige Betriebsfrequenz abgespeichert. Das heißt anstelle einer echten Kartierung wird nur eine Minimumssuche bzgl. der Flackerintensität durchgeführt. Sollte beim ersten Suchvorgang bis zur ersten oberen Grenzfrequenz keine oben ausgeführter Abbruch der Suche erfolgt sein, wird wie im zweiten Ausführungsform auch bis zur zweiten oberen Grenzfrequenz weitergesucht. Anschließend kann direkt an die im Minimumspeicher abgelegten Frequenz gesprungen werden. Anschließend wird die Lampe für mindestens 30 min bei dieser Frequenz betrieben und während dieser Zeit die Flackerintensität über diesen Zeitraum bestimmt. Ist diese um mehr als einen zulässigen Faktor beispielsweise 20% gegenüber dem ursprünglichen erhöht wird eine neue Suche nach der bestmöglichen Betriebsfrequenz gestartet und so verfahren wie oben beschrieben.

Durch die Erhöhung der Betriebsfrequenz des Gasentladungslampenbrenners über seiner Brenndauer kann eine Flackerneigung des Brenners deutlich reduziert werden, ohne dass kostenintensive Maßnahmen an der Schaltungsanordnung selbst notwendig wären. Dadurch, dass die Betriebselektronik der integrierten Gasentladungslampe 5 einen Mikrocontroller enthält, kann das gesamte Verfahren in der Software des Mikrocontrollers implementiert werden, und verursacht somit keine zusätzlichen Kosten. Auch die Schaltungsanordnung zum Detektieren von Flackern der zweiten Ausführungsform kann bei geschickter Auslegung rein in Software ausgeführt werden. Dadurch, dass die zur Detektion von Flackern notwendigen Messgrößen aus anderen Gründen schon am Mikrocontroller anliegen, kann durch geeignete Auswertung dieser Größen eine Detektionseinheit in Software ausgeführt werden. Die in Hardware notwendigen Schaltungsteile sind dabei schon aus anderen Gründen vorhanden und verursachen so keine zusätzlichen Kosten.

Kommunikationsschnittstelle

Wie bereits oben ausgeführt, kann die integrierte Gasentladungslampen 5 über Kommunikationsmittel bzw. mindestens eine Kommunikationsschnittstelle verfügen, die insbesondere eine Kommunikation mit der Bordelektronik des Kraftfahrzeugs ermöglicht. Besonders vorteilhaft erscheint ein LIN-Bus, aber auch die Anbindung der integrierten Gasentladungslampe mittels eines CAN-Bus and die Bordelektronik ist möglich.

Durch die Kommunikationsschnittstelle kann die Lampe in vorteilhafter Weise mit dem übergeordneten Steuersystem, z.B. einem Lichtmodul in einem Kfz kommunizieren. Dabei können über die Kommunikationsschnittstelle vielfältige Informationen über die integrierte Gasentladungslampe 5 an das übergeordnete Steuersystem übermittelt werden. Diese Informationen sind in einem nichtflüchtigen Speicher in der Lampe abgelegt. Bei der Produktion der integrierten Gasentladungslampe 5 fallen vielfältige Informationen an, die von der Produktionsanlage gesammelt werden können und gegen Ende der Produktion der Lampe in den nichtflüchtigen Speicher der Lampe programmiert werden. Die Informationen können aber auch direkt in den nichtflüchtigen Speicher der Betriebselektronik der integrierten Gasentladungslampe 5 geschrieben werden, daher ist eine hierfür eine Kommunikationsschnittstelle nicht unbedingt notwendig.

Bei der Produktion wird z.B. der Gasentladungslampenbrenner 50 exakt vermessen und beim Sockeln auf den Sockel 70 gegenüber einer Referenzebene des Sockels in einer exakt definierten Lage am Sockel befestigt. Dies stellt eine hohe Güte des optischen Systems aus integrierte Gasentladungslampe 5 und Scheinwerfer 3 sicher, da der zwischen den Gasentladungslampenelektroden 504 brennende Lichtbogen eine exakte Raumlage gegenüber der Referenzebene, die die Schnittstelle zum Scheinwerfer darstellt, einnimmt. Der Produktionsmaschine ist dadurch z.B. der Abstand und die Lage der Elektroden bekannt. Der Elektrodenabstand kann aber für die Betriebselektronik eine wichtige Größe darstellen, da der Elektrodenabstand des Gasentladungslampenbrenners 50 mit der Brennspannung korreliert. Weiterhin kann eine einmalige Seriennummer oder alternativ eine Produktionschargennummer im nichtflüchtigen Speicher der Lampe abgelegt werden, um eine Rückverfolgbarkeit zu gewährleisten. Über die Seriennummer können über eine vom Hersteller gepflegte Datenbank die in der integrierte Gasentladungslampe 5 verbauten Teile mit allen verfügbaren Daten abgefragt werden, um bei Produktionsfehlern einzelner Teile die betroffenen Lampen ausfindig machen zu können.

In einer bevorzugten Ausführungsform der integrierten Gasentladungslampe 5 können weitere im Lampenbetrieb gemessene und im nichtflüchtigen Speicher der integrierten Gasentladungslampe 5 abgespeicherte Parameter über die Bordelektronik mittels der Kommunikationsschnittstelle abgefragt und auch eingespeichert werden. Es kann zum Beispiel sinnvoll sein, die Daten des optischen Systems, aus dem der Scheinwerfer besteht, in der integrierten Gasentladungslampe 5 abzuspeichern, da diese damit die Leistung des Gasentladungslampenbrenners 50 so steuern kann, dass eine gleichmäßig hohe Lichtabgabe des Scheinwerfersystems erreicht wird.

Als Kommunikationsparameter kommen insbesondere folgende Kommunikationsparameter in Frage:

- Die kumulierte Brenndauer des Gasentladungslampenbrenners 50,
- die Anzahl der aufgetretenen Flacker-Effekte, also die Anzahl der Überschreitungen des zulässigen Grenzwertes,
- die Anzahl der Starts der Flacker-Minimum-Suche,
- die aktuelle Lampenleistung,
- die aktuelle Frequenz des Wechselrichters,
- der Sollwert der Lampenleistung (=Lampenzielsollleistung),
- der Istwert der Lampenleistung,
- die Temperatur der Elektronik,
- die Seriennummer beziehungsweise die Chargennummer,
- die Anzahl der Lampenverlöscher insgesamt sowie die Anzahl der Lampenverlöscher innerhalb einer zurückliegenden Zeitspannung z.B. 200 h,
- die Anzahl der Nicht-Zündungen.

Prinzipiell hätte auch eine herkömmliche, nicht im Lampensockel der Entladungslampe integrierte, Betriebselektronik diese Parameter erfassen und über eine Kommunikationsschnittstelle zur Verfügung stellen können. Allerdings wären diese Parameter für eine Diagnose im Rahmen des Service des Kraftfahrzeugs nicht brauchbar gewesen, da die Lampe jederzeit unabhängig von der Betriebselektronik hätte gewechselt werden können und die ausgelesenen Parameter folglich nicht zwingend das derzeitig vorhandenen System aus Lampe und Betriebselektronik beschreiben müssen. Diesen Nachteil besitzt das beschriebene System einer integrierten Gasentladungslampe, bei der ein Gasentladungslampenbrenner sowie eine Betriebselektronik für den Gasentladungslampenbrenner von einander untrennbar in einer Lampe integriert sind, nicht.

Die Kommunikationsschnittstelle ist dabei bevorzugt ein LIN-Bus oder alternativ ein CAN-Bus. Beide Schnittstellenprotokolle sind im Automobilsektor weit verbreitet und eingeführt. Wird die integrierte Gasentladungslampe 5 nicht in einem Automobil verwendet, so kann die Kommunikationsschnittstelle der integrierten Gasentladungslampe 5 auch ein in der Allgemeinbeleuchtung verbreitetes Protokoll wie DALI oder EIB/Instabus aufweisen.

Aufgrund dieser Daten (vor allem der kumulierten Brenndauer) kann das im Kfz vorhandene übergeordnete Steuersystem z.B. den voraussichtlichen Austauschzeitpunkt der integrierten Gasentladungslampe 5 berechnen. Bei einem Inspektionstermin des Kfz kann dann entschieden werden, ob die integrierte Gasentladungslampe 5 noch bis zum nächsten Inspektionstermin ordnungsgemäß arbeiten wird, oder ob sie ausgetauscht werden muss, da beispielsweise eine schlechte Lichtqualität oder gar ein Ausfall der Lampe befürchtet werden muss.

Dadurch dass die Daten über eine Kommunikationsschnittstelle der integrierten Gasentladungslampe auslesbar sind kann ein Servicetechniker die Daten aus der integrierten Gasentladungslampe auslesen und die Lampe bei Bedarf vor einem Ausfall ersetzen, wie dies bereits weiter oben im Hinblick auf eine flackernde Lampe dargestellt wurde.

Wenn in dem nichtflüchtigen Speicher der Betriebselektronik Daten aus der Produktion der integrierten Gasentladungslampe unabänderlich gespeichert sind, kann die Lampe in ihren Lebensdauerberechnungen jederzeit auf diese Daten zurückgreifen, womit die Lebensdauerberechnungen, das heißt die Schätzung der Zeitdauer wie lange die integrierte Gasentladungslampe ordnungsgemäß arbeiten wird, deutlich genauer werden. Bevorzugterweise sind in dem nichtflüchtigen Speicher der Betriebselektronik Daten gespeichert, aus denen der Produktionszeitraum erschließbar ist. Damit können eventuelle Fehlproduktionen oder erst später festgestellte Mängel in einer Charge auch im Feld noch ausgetauscht werden, bevor die Lampe ausfällt. Dies ist für den Nutzer des Kraftfahrzeugs von sehr großem Nutzen, denn insbesondere beim Einsatz der integrierten Gasentladungslampe in einem Frontscheinwerfer handelt es sich um eine besonders sicherheitsrelevante Anwendung. Wenn in dem nichtflüchtigen Speicher der Betriebselektronik Daten gespeichert sind, durch die die integrierte Gasentladungslampe eindeutig identifiziert ist, können die bei der Produktion in einer Datenbank hinterlegten Daten einfach und zuverlässig der Lampe zugeordnet werden. Besonders effizient funktioniert das, wenn in dem nichtflüchtigen Speicher der Betriebselektronik eine eindeutige und einmalige Seriennummer gespeichert ist. Diese beinhaltet unter anderem auch einen unter allen Herstellern abgestimmten Herstellercode, so dass verschiedene Hersteller der gleichen Type der integrierten Gasentladungslampe zwar eine laufende Nummer in ihrer jeweiligen Produktion vergeben können, dennoch sichergestellt ist, dass es keine zweite Lampe geben wird, die die gleiche Seriennummer besitzt.

Während des Betriebes der integrierten Gasentladungslampe werden in dem nichtflüchtigen Speicher bevorzugt eine oder mehrere Zahlen gespeichert, welche mit der Brenndauer und/oder mit der Anzahl der Zündungen der Gasentladungslampe monoton ansteigen. Dabei wird die Brenndauer des Gasentladungslampenbrenners erfasst, aufsummiert und als kumulierte Brenndauer in den nichtflüchtigen Speicher der Betriebselektronik gespeichert. Die kumulierte Brenndauer wird bevorzugt als Zahl im nichtflüchtigen Speicher abgelegt. Die Brenndauer kann aber auch durch Betriebsparameter gewichtet werden und in dem nichtflüchtigen Speicher der Betriebselektronik als Zahl abgelegt werden, wobei diese Zahl dann der kumulierten gewichteten Brenndauer entspricht. Auf die verschieden Arten der kumulierten Brenndauer wird weiter unten noch näher eingegangen. Damit kann die bisherige Brenndauer zuverlässig mit der vom Hersteller spezifizierten Lebensdauer abgeglichen werden, und eine genaue Aussage über die Restlebensdauer der Lampe getroffen werden. Die vom Hersteller spezifizierte Lebensdauer kann dabei eine Funktion weiterer ebenfalls aus dem nichtflüchtigen Speicher ausgelesenen Daten ein, so dass diese beispielsweise von der Anzahl der Starts oder dem geforderten Lichtstrom der Lampe abhängen kann. Die Entscheidung darüber ob die integrierte Lampen ausgetauscht werden muss, kann aus ökonomischen Gründen zudem von dem im Diagnosegerät der Service-Werkstatt gespeicherten Daten welche im Rahmen der zurückliegenden Werkstatt-Besuche ermittelt wurden, erfolgen, und so kann beispielsweise die Information, wie intensiv das Licht innerhalb der zurückliegenden Service-Intervalle benutzt wurde in die zu treffenden Entscheidung mit einfließen.

Wenn eine in dem nichtflüchtigen Speicher der Betriebselektronik abgelegte Zahl eine Aussage über das Flackern der Lampe macht, insbesondere der Anzahl der Starts der Flacker-Minimum-Suche oder der aktuellen Flackergrenze, so kann der Zustand der integrierten Gasentladungslampe genau erfasst werden und bei Bedarf ausgelesen werden. Diese Werte können bei einem Service des Kraftfahrzeugs, in dem sich die integrierte Gasentladungslampe befindet, zur Beurteilung der Restlebensdauer mit herangezogen werden. Für den Servicetechniker ebenso interessant kann die in dem nichtflüchtigen Speicher der Betriebselektronik abgelegte Zahl der Anzahl der Zündungen des Gasentladungslampenbrenners sein, da die Anzahl der Zündungen ebenso Einfluss auf die Lebensdauer hat wie die Brenndauer. Bei einem Servicetermin des Kfz. werden also Daten aus dem nichtflüchtigen Speicher der Betriebselektronik ausgelesen und abhängig von den Daten erfolgt ein unterschiedliches Vorgehen bei der Wartung. Die Wartung wird dadurch effizienter und besser, Frühausfälle werden selten und die Kundenzufriedenheit steigt. Die Entscheidung, ob die integrierte Gasentladungslampe ausgetauscht werden muss kann sich zusätzlich zur Erfahrung des Servicetechnikers auf die aus dem nichtflüchtigen Speicher der Betriebselektronik ausgelesenen Daten stützen. Die Entscheidung zum Austausch der integrierten Gasentladungslampe wird bevorzugt dann getroffen, wenn die kumulierte Brenndauer und/oder die kumulierte gewichtete Brenndauer und/oder die Anzahl der Zündungen des Gasentladungslampenbrenners über einem bestimmten Grenzwert liegt. Der Grenzwert hängt dabei bevorzugt von dem Produktionszeitraum und/oder von den Daten welche eine eindeutige Identifikation der integrierten Gasentladungslampe zulassen, ab. Damit wird eine zuverlässige und einfache Entscheidung über den Austausch der integrierten Gasentladungslampe möglich.

Lumenkonstanz

Die im nichtflüchtigen Speicher der integrierten Gasentladungslampe 5 abgelegten Informationen können aber auch dazu benutzt werden, die Lichtabgabe der integrierten Gasentladungslampe 5 über ihrer Lebensdauer konstant zu halten. Die Lichtabgabe bei Nennleistung von Gasentladungslampen ändert sich über deren Lebensdauer. Mit zunehmender Brenndauer sinkt der Wirkungsgrad der Lampe durch Schwärzung und Entglasung des Entladungsgefäßes, durch den Rückbrand der Elektroden und die dadurch bedingte Veränderung des Entladungsbogens. Der Wirkungsgrad des gesamten optischen Systems wird dadurch weiter verschlechtert, da diese Systeme üblicherweise auf eine Punktlichtquelle bzw. für den kürzesten, sich aus dem minimalen Elektrodenabstand ergebenden Entladungsbogen, dimensioniert sind, und bei einer Verlängerung des Entladungsbogens mehr Licht im optischen System verloren geht. Auch das optische System selbst verliert während seiner Betriebsdauer an Effizienz, sei es durch Linsentrübungen oder durch Defokussierung aufgrund von Temperaturzyklen oder den bei einem Automobilscheinwerfer auftretenden permanenten Vibrationen. Im Folgenden wird von einer Lampenbrenndauer $t_k$, und von einer kumuliert gewichteten Brenndauer $t_{kg}$ gesprochen, wobei die kumuliert gewichtete Brenndauer $t_{kg}$ mit einer weiter unten erläuterten Gewichtsfunktion $\gamma$ gewichtet wird.

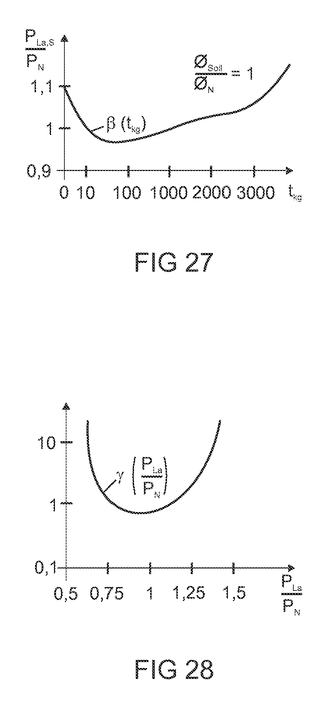

Da die Betriebselektronik der integrierten Gasentladungslampe 5 die relevanten Parameter des Gasentladungslampenbrenners 50 im nichtflüchtigen Speicher abgelegt hat, kann sie die am Gasentladungslampenbrenner 50 anliegende Betriebsleistung $P_{LA}$ an seine kumulierte Brenndauer anpassen. Da der Alterungsprozess nicht linear verläuft, ist in der Betriebselektronik in einer einfachen Ausführungsform eine Kompensationsfunktion β abgespeichert, wie sie in **Fig. 27** dargestellt ist. Hier ist die kumuliert gewichtete Brenndauer $t_{kg}$ der Lampe über dem Quotienten aus der Lampenleistung $P_{LA}$ zur Nennleistung $P_N$ des Gasentladungslampenbrenners 50 aufgetragen. Im unteren Bereich unter 10h Brenndauer ist die Leistung leicht erhöht. Dies soll helfen, denn Gasentladungslampenbrenner 50 zu konditionieren. Man spricht hier auch gerne vom "Einbrennen" des Gasentladungslampenbrenners 50 der integrierten Gasentladungslampe 5. Ist die Lampe eingebrannt, wird sie mit leicht verminderter Leistung betrieben (etwa 90% der Nennleistung), da der Wirkungsgrad der Lampe wie auch der Optik noch sehr gut ist. Ab einer kumuliert gewichteten Brenndauer $t_{kg}$ von etwa 100 h steigt die Leistung wieder langsam an, um bei Erreichen des spezifizierten Lebensdauerendes von 3000 h eine Lampenleistung $P_{La}$ zu erreichen, die etwa 10% über der spezifizierten nominalen Lampenbrennernennleistung liegt. Damit ist die Lichtabgabe der Gasentladungslampenbrenners über seine Brenndauer im Wesentlichen konstant. Die in der Betriebselektronik abgespeicherte Funktion kann von im nichtflüchtigen Speicher bei der Produktion abgelegten Brennerparametern, wie z.B. dem Elektrodenabstand beeinflusst werden.

Bei einem fortgeschrittenem System mit einer Steuerung der integrierten Gasentladungslampe 5 durch ein übergeordnetes Steuersystem können weitere Lichtfunktionen, wie z.B. die geschwindigkeitsabhängige Steuerung der abgegebenen Lichtmenge realisiert werden. In solch einer fortgeschrittenen Ausführungsform ist die Betriebselektronik so ausgelegt, dass sie den Gasentladungslampenbrenner 50 mit einer Unter- oder Überleistung betreiben kann. Wird der Gasentladungslampenbrenner 50 aber nicht mit Nennleistung betrieben, so altert er anders als bei einem Betrieb mit Nennleistung. Dies muss in der Berechnung der kumulierten Brenndauer berücksichtigt werden. Dazu ist in der Betriebselektronik eine Gewichtsfunktion γ abgespeichert, die einen von der Über- oder Unterleistung abhängigen Faktor darstellt. **Fig. 28** zeigt die Gewichtsfunktion γ für eine für den Einsatz im Frontscheinwerfer eines Kraftfahrzeugs ausgelegte integrierte Gasentladungslampe 5. Wird der Gasentladungslampenbrenner 50 mit Überleistung betrieben, so altert er schneller, da die Elektroden zu heiß werden und Elektrodenmaterial abdampft. Wird der Gasentladungslampenbrenner 50 mit deutlicher Unterleistung betrieben, so altert er ebenfalls schneller, da die Elektroden zu kalt sind und in Folge Elektrodenmaterial absputtert, folglich Elektrodenmaterial durch Sputtern abgetragen wird, was unerwünscht ist da dies die Lebensdauer der Lampe sowie die Lichtausbeute reduziert. Daher muss die Betriebselektronik der integrierten Gasentladungslampe 5 diese Alterung in die kumuliert gewichtete Brenndauer $t_{kg}$ mit einrechnen. Dies kann z.B. durch folgende Formel bewerkstelligt werden: $t_{kg}(t) = \int\limits_{0h}^{t} f(\tau) \cdot \gamma\left(\frac{P_{LA}(\tau)}{P_N}\right) d\tau$ ; die Funktion f(τ) steht dabei lediglich für die Brennfunktion, d.h. sobald der Gasentladungslampenbrenner 50 in Betrieb ist, ist f(τ)=1, ist der Gasentladungslampenbrenner 50 nicht in Betrieb, ist f(τ)=0. Wird die integrierte Gasentladungslampe 5 also mit Über- oder Unterleistung betrieben, so altert sie um einen Faktor, der den Wert 10 erreichen kann schneller.

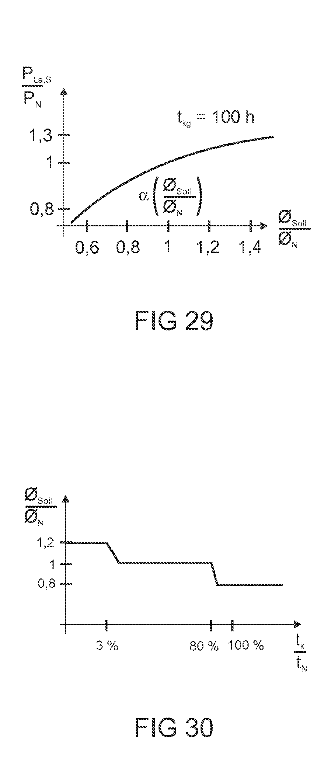

Bei einem fortgeschrittenen Steuerungssystem, das den Gasentladungslampenbrenner 50 mit Über- oder Unterleistung betreiben kann, kann auch eine fortgeschrittene Kommunikation mit dem übergeordneten Steuergerät implementiert werden. Dies kann sich dahingehend äußern, dass das übergeordnete Steuergerät nicht mehr eine bestimmte Leistung von der integrierten Gasentladungslampe 5 anfordert, sondern eine vorbestimmte Lichtmenge. Um dies bewerkstelligen zu können, ist in der Betriebselektronik der integrierten Gasentladungslampe 5 eine Dimmkurve abgespeichert. **Fig. 29** zeigt eine solche Dimmkurve α am Beispiel einer integrierten Gasentladungslampe 5 für die Automobiltechnik. Die Dimmkurve zeigt die Abhängigkeit des von dem Gasentladungslampenbrenner 50 abgegebenen Lichtstroms $\phi_{Soll}$, beziehungsweise wie in Fig. 29 dargestellt den auf den Nennlichtstrom $\phi_N$ normierten Lichtstrom $\frac{\phi_{Soll}}{\phi_N}$, von der elektrischen Brennerleistung $P_{La,S}$, beziehungsweise wie in Fig. 29 dargestellt die auf die elektrische Nennbrennernennleistung $P_N$ normierte elektrische Brennerleistung $\frac{P_{La,S}}{P_N}$. In der **Fig. 29** ist dies bei einer kumuliert gewichteten Brenndauer $t_{kg}$ des Gasentladungslampenbrenners 50 von 100h aufgetragen. Für eine andere kumuliert gewichtete Brenndauer $t_{kg}$ des Gasentladungslampenbrenners 50 ergeben sich andere Kurvenverläufe. Im Idealfall ist in der Betriebselektronik der integrierten Gasentladungslampe 5 also ein dreidimensionales Kennfeld abgespeichert, das das Alter des Gasentladungslampenbrenners 50 mit berücksichtigt. Die **Fig. 29** ist somit lediglich ein Schnitt durch das Kennfeld für eine kumuliert gewichtete Brenndauer $t_{kg}$ des Gasentladungslampenbrenners von 100 h. Das Kennfeld zur Bestimmung der Lampenleistung kann neben dem Lichtstrom und der kumuliert gewichtete Brenndauer weitere Dimensionen enthalten, beispielsweise die Brenndauer seit der letzten Zündung der Lampe oder die geschätzte Brennertemperatur um insbesondere Effekte im Bereich bis zu wenigen Minuten nach der Zündung, bedingt durch thermische Transienten während des sog. "Hochlaufs" der Lampe, in dem es unter anderem zum Verdampfen der Füllung kommt, abzubilden. Die Dimmkurve muss nicht zwingend als Kennfeld in der Betriebselektronik der integrierten Gasentladungslampe 5 abgespeichert sein, sie kann auch als Funktion abgelegt werden, so dass sie von einem in der Betriebselektronik integrierten Mikrocontroller ausgerechnet werden kann. Um die Berechnung der einzustellenden Lampenleistung möglichst einfach implementieren zu können, kann die zugrundeliegende Funktion bzw. das entsprechenden Kennlinienfeld näherungsweise durch ein Produkt ausgedrückt werden, wobei als Faktoren neben der Nennleistung $P_N$ des Gasentladungslampenbrenners jeder einzelne Faktor den Einfluss einer der oben genannten Größen beschreibt. Somit kann die erforderliche Brennerleistung $P_{La}$ für eine bestimmte Lichtmenge beispielhaft durch folgende Formel dargestellt werden: $P_{La} = P_N \cdot \alpha(\frac{\phi_{Soll}}{\phi_N}) \cdot \beta(t_{kg})$ ; der Faktor $\beta$ berücksichtigt hier die Alterung des Gasentladungslampenbrenners 50. Die Funktion $\beta$ kann auch die Alterung des optischen Systems beinhalten, wobei diese Daten vorzugsweise über den Kommunikationsschnittstelle der integrierten Gasentladungslampe mitgeteilt werden, so dass diese Einflüssen ebenfalls in der Berechung von der Betriebselektronik der integrierten Gasentladungslampe berücksichtigt werden können. Die vom Steuergerät vorgegebene Lichtmenge kann dabei z.B. von der Geschwindigkeit eines Kraftfahrzeugs abhängen, in dem die integrierte Gasentladungslampe 5 betrieben wird. Bei langsamer Fahrt wird die Lampe z.B. gedimmt betrieben, wohingegen sie bei schneller Fahrt etwa auf der Autobahn etwas über der Nennleistung betrieben wird, um eine weite Sicht und eine gute Ausleuchtung der Fahrbahn zu gewährleisten.

Bei einer fortgeschrittenen Betriebselektronik einer weiteren Ausführungsform der integrierten Gasentladungslampe 5 kann auch oder zusätzlich die bisherige Brenndauer des Gasentladungslampenbrenners 50 beim Betrieb berücksichtigt werden. Wenn die kumuliert gewichtete Brenndauer $t_{kg}$ sich dem spezifiziertem Lebensdauerende des Gasentladungslampenbrenners nähert, kann die Betriebselektronik den Brenner mit einer Leistung betreiben, die ihn am wenigsten altern lässt und somit seine Lebensdauer gegenüber einem herkömmlichen Betrieb effektiv verlängert.

**Fig. 30** zeigt eine solche beispielhafte Brennerschonkurve, in der der Lichtstromquotient $\frac{\phi_{Soll}}{\phi_N}$ über der kumulierten normierten Lebensdauer $\frac{t_k}{t_N}$ aufgetragen ist. Letztere berechnet sich aus der Lampenbrenndauer $t_k$ geteilt durch die Nennlebensdauer $t_N$ der Lampe von beispielsweise 3.000 Stunden. Bis zu 3% seiner Nennlebensdauer wird der Gasentladungslampenbrenner 50 mit dem 1,2-fachen seiner Nennleistung betrieben, um den Gasentladungslampenbrenner 50 zu Konditionieren und Einzubrennen. Danach wird der Gasentladungslampenbrenner 50 für geraume Zeit mit Nennleistung betrieben. Erreicht der Gasentladungslampenbrenner 50 80% seiner Lebensdauer, wird die Leistung sukzessive auf etwa das 0,8-fache der Nennleistung reduziert. Die Gewichtsfunktion in **Fig. 28** offenbart bei näherer Betrachtung, dass die Lampe beim Betrieb mit in etwa dem 0,8-fachen ihrer Nennleistung am meisten geschont wird. Daher wird die integrierte Gasentladungslampe 5 gegen Ende ihrer Lebensdauer mit dieser Leistung betrieben, um eine möglichst lange Restlebensdauer zu gewährleisten und einen plötzlichen Lampenausfall, der gerade im Automobilbereich fatale Folgen haben kann zu vermeiden. Anstelle der Lampenbrenndauer $t_k$ kann entgegen der Darstellung in der **Fig. 30** auch die kumuliert gewichtete Brenndauer $t_{kg}$ verwendet werden.

Die integrierte Gasentladungslampe 5 kann aufgrund der oben genannten Daten und Berechnungen die voraussichtliche Restlebensdauer ihres Gasentladungslampenbrenners berechnen und in einem nichtflüchtigen Speicher der Betriebselektronik 220, 230 ablegen. Ist das Kraftfahrzeug bei einer Inspektion in der Werkstatt, so können für die Inspektion interessante Lampendaten, insbesondere die gespeicherte Restlebensdauer ausgelesen werden. Anhand der ausgelesenen Restlebensdauer kann dann darüber entschieden werden, ob die integrierte Gasentladungslampe 5 ausgetauscht werden muss. Es ist auch denkbar, dass in der integrierten Gasentladungslampe 5 die Seriennummer der integrierten Gasentladungslampe und/oder die Seriennummer des Gasentladungslampenbrenners 50 abgespeichert ist. Anhand der Seriennummer kann der Mechaniker in der Werkstatt über eine Herstellerdatenbank abfragen, ob die Lampe in Ordnung ist oder evtl. aufgrund von Mängeln in der Herstellung bzw. in den in ihr verbauten Komponenten ausgetauscht werden muss.

In einer weiteren vorteilhaften Ausführung der integrierte Gasentladungslampe 5 wird entgegen zur zuvor beschriebenen Ausführung in der Werkstatt nicht die voraussichtliche Restlebensdauer ausgelesen, sondern es werden die Daten ausgelesen wie die Lampe tatsächlich betrieben wurde. Diese Daten werden dann vom Diagnosegerät basierend auf den zur jeweiligen Seriennummer gehörigen Nenndaten aus der Herstellerdatenbank bewertet. So ist beispielsweise die Nennlebensdauer $t_N$ einer Lampe mit einer gegebenen Seriennummer in der Herstellerdatenbank hinterlegt. Im Fall von Produktmängeln wäre diese entsprechend gering. Nachdem auch weitere Daten über den Betrieb in der Betriebselektronik gespeichert werden, wie beispielsweise die Anzahl der Zündungen, können auch diese Parameter mit der Herstellerdatenbank verglichen werden, die dann beispielsweise die Anzahl an Nennzündungen für jede Lampe enthält. Eine aus der Betriebselektronik ausgelesene hohe Anzahl an Zündungen die in die Nähe der Nennzündungen kommt, führt so zur Entscheidung, dass die Lampe auszutauschen ist, obwohl beispielsweise die Nennlebensdauer der Lampe noch nicht erreicht ist. Durch Verwendung solcher Kriterien erhöht sich auf ökonomischer Weise die Verfügbarkeit der Lichtquelle. Dieses Vorgehen ist insbesondere deshalb als ökonomisch anzusehen, da eine Lampe erst dann ausgetauscht wird, wenn die Wahrscheinlichkeit groß wird, dass ihr Ausfall bevorsteht. In den ersten Bit der Seriennummer der Lampe wird den Hersteller der Lampe codiert, so dass sichergestellt ist, dass die Seriennummer eindeutig bleibt, obwohl gegebenen Falls mehrere Lampenhersteller gegeneinander austauschbare Produkte herstellen. Beim Abfragen von Nenndaten wie beispielsweise der Nennlebensdauer oder der Nennzündungen aus der Herstellerdatenbank, über eine Kommunikationsverbindung zwischen der Werkstatt und dem Lampenhersteller, beispielsweise über eine Internetverbindung, wird im Gegenzug die aus der Betriebselektronik ausgelesenen Daten über den Betrieb an den Lampenhersteller übermitteln. Es erfolgt somit ein bidirektionaler Datenaustausch zwischen Betriebselektronik der Lampe und der Herstellerdatenbank. Dies ermöglicht zum einen die Verfolgung von Produkten im Feld insbesondere eine statistische Erhebung der Einsatzweise des Produktes, was insbesondere für eine Produktweiterentwicklung von großem Vorteil ist, aber auch eine individuelle Datenerhebung ist möglich sofern beispielsweise neben der Seriennummer noch die VIN (Vehicle Identification Number) des Fahrzeugs mit übertragen wird. Darüber hinaus eröffnet sich die Möglichkeit des Schutz gegen Produktfälschungen. Letzterer wird dadurch erreicht, dass bei einer Produktfälschung die Seriennummer ebenfalls kopiert werden muss, was sich letztlich bei der Übermittlung der Daten an den Hersteller zu einer scheinbaren Inkonsistenz der Daten führt, da beispielsweise die Betriebsstunden welche einer Seriennummer zugerechnet werden nicht wieder geringer werden können, was eine entsprechende Schlussfolgerung auf gefälschte Produkte zulässt.

Bogenbegradigung

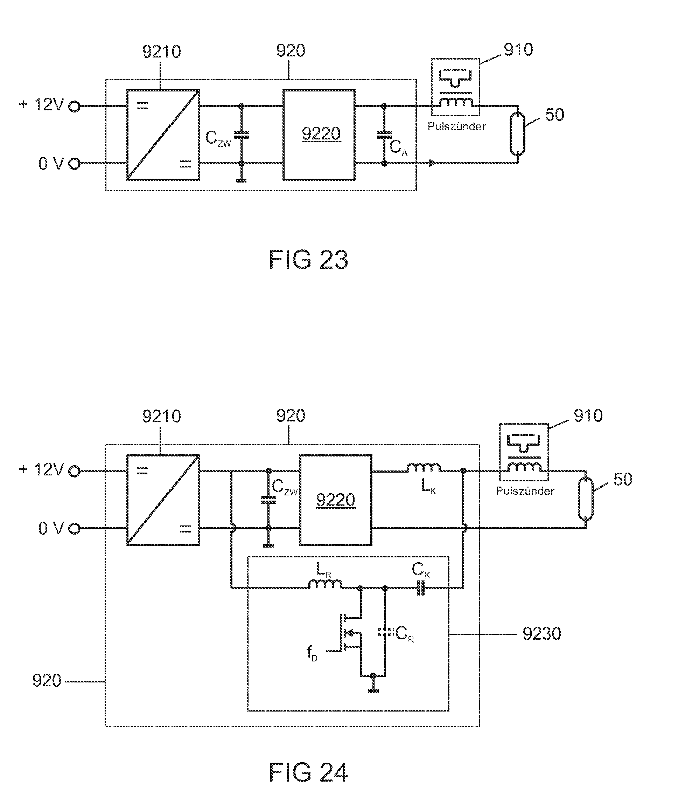

Im Folgenden wird nun ein Verfahren zur Begradigung des Entladungsbogens des Gasentladungslampenbrenners beschrieben, welches in einer Ausführungsform der integrierten Gasentladungslampe 5 implementiert ist. Für eine erste Ausführungsform wird eine Betriebselektronik 920 zugrunde gelegt, die eine Topologie nach **Fig. 23** aufweist. Dabei weist die Betriebselektronik 920 einen Gleichspannungswandler 9210 auf, der von der Batteriespannung eines Automobils versorgt wird. Dem Gleichspannungswandler 9210 ist über einen Zwischenkreiskondensator $C_{ZW}$ ein Wechselrichter 9220 nachgeschaltet, der über einen Lampenkreis einen Gasentladungslampenbrenner 50 mit einer Wechselspannung versorgt. Der Lampenkreis besteht aus einem Ausgangskondensator $C_A$ und der Zündelektronik 910, mit der Primärwicklung des Zündtransformators im Lampenkreis, sowie dem Gasentladungslampenbrenner 50. Mittels dieser Topologie, die aus dem Stand der Technik weithin bekannt ist, kann bei geschickter Auslegung der Komponenten eine Begradigung des Entladungsbogens erreicht werden.

Ein begradigter Entladungsbogen bietet viele Vorteile. Ein erster bedeutender Vorteil ist der bessere thermische Haushalt des Gasentladungslampenbrenners 50, gewonnen durch eine gleichmäßigere thermische Wandbelastung des Brennergefäßes. Dies führt zu einer besseren thermischen Ausnutzung und damit längeren Lebensdauer des Brennergefäßes. Ein zweiter bedeutender Vorteil ist ein kontrahierter Lichtbogen, der eine verringerte Diffusität besitzt. Mit solch einem ,schmaleren' Bogen kann z.B. die Optik eines Scheinwerfers präziser ausfallen und die Lichtausbeute des Scheinwerfers deutlich erhöht werden.

Da bei der integrierte Gasentladungslampe 5 die Zünd- und Betriebselektronik 910, 920 beziehungsweise die Gesamtbetriebselektronik 930 (im Folgenden ebenfalls Betriebselektronik genannt) untrennbar mit dem Gasentladungslampenbrenner 50 verbunden ist, kann sich die Betriebselektronik auf den Gasentladungslampenbrenner 50 kalibrieren um einen stabil brennenden geraden Bogen zu erzeugen. Da aufgrund der Untrennbarkeit von Betriebselektronik 920, 930 und Gasentladungslampenbrenner 50 der Betriebselektronik 920, 930 auch die Brenndauer des Gasentladungslampenbrenners 50 bekannt ist, können Alterungseffekte des Gasentladungslampenbrenners 50 die Betriebsweise des Gasentladungslampenbrenners 50 beeinflussen.

Die grundsätzliche Vorgehensweise zur Begradigung des Bogens der integrierten Gasentladungslampe 5 ist folgende: Die Betriebselektronik 920, 930 vermisst beim ersten Einschalten den Gasentladungslampenbrenner 50 bezüglich akustischer Resonanzen und detektiert die zur Bogenbegradigung geeigneten Frequenzen. Dies geschieht mittels einem durchscannen der Frequenzbereiche zwischen einer Minimalfrequenz und einer Maximalfrequenz. Die Frequenzen werden auf die Betriebsfrequenz des integrierten Gasentladungslampenbrenners aufmoduliert. Während des Scannens wird die Impedanz des Gasentladungslampenbrenners vermessen und jeweils die niedrigste Impedanz mit der dazugehörigen Frequenz abgespeichert. Diese Frequenz mit der niedrigsten Impedanz kennzeichnet die maximal erreichbare Bogenbegradigung. Je nach Lampentyp kann die Minimalfrequenz bis auf eine Frequenz von 80kHz sinken, die Maximalfrequenz eine Frequenz von etwa 300kHz erreichen. Bei einer typischen Hochdruckentladungslampe für die Automobiltechnik liegt die Minimalfrequenz bei etwa 110 kHz und die Maximalfrequenz bei etwa 160 kHz. Das Vermessen ist zum Ausgleich von Fertigungstoleranzen des Gasentladungslampenbrenners 50 notwendig. Die typische Alterung bezüglich der Resonanzfrequenzen der Lampe ist in einem Mikrocontroller (nicht gezeigt) der Betriebselektronik 920, 930 z.B. in einer Tabelle abgelegt. Die Werte in der Tabelle können gegebenenfalls abhängig von der Betriebsweise des Gasentladungslampenbrenners (Zyklenform, Anlauf- oder gedimmter Betrieb) abgelegt sein. Zusätzlich kann der gesteuerte Betrieb in einer weiteren Ausführungsform um einen geregelten Modulationsbetrieb mit einer Modulationsfrequenz in einem schmalen Bereich um die errechnete Frequenz (gemäß des gesteuerten Betriebs) erweitert werden. Die errechnete Frequenz wird mit einer Modulationsfrequenz von z.B. 1 kHz moduliert, um eventuellen Flackererscheinungen durch Anregung akustischer Resonanzen im Gasentladungslampenbrenner 50 vorzubeugen. Ein Vorteil im Vergleich zu bisherigen Betriebsgeräten nach dem Stand der Technik ist, dass nun der Frequenzbereich (innerhalb dessen die Frequenz variiert werden darf) sehr klein ist, und die Probleme bezüglich verlöschender Lampen oder instabilem Reglerverhalten kleiner sind. Nichtsdestotrotz kann es bei bestimmten Lampentypen sinnvoll sein, die Frequenzbereiche um die eigentliche Modulationsfrequenz bezüglich ihres Flackerverhaltens zu vermessen, um einen stabilen Lampenbetrieb gewährleisten zu können. Dazu wird in einer Ausführungsform die Schaltungsanordnung zum Detektieren von Flackern verwendet, und nahe an der Modulationsfrequenz liegenden Frequenzen auf ihr Flackerverhalten hin vermessen.

In einer ersten Ausführungsform nach **Fig. 23** wird die Frequenz des Gleichspannungswandlers 9210 nun gleich der Modulationsfrequenz gewählt. Durch entsprechende Auslegung des Zwischenkreiskondensators $C_{ZW}$ bleibt ein Hochfrequenzrippel als aufmodulierte hochfrequente Wechselspannung auf der vom Gleichspannungswandler 9210 ausgegebenen Gleichspannung. Die Gleichspannung mit der aufmodulierten hochfrequenten Wechselspannung dient als Eingangsspannung für den Wechselrichter 9220. Der Wechselrichter 9220 ist hier als Vollbrücke ausgebildet, die die Gleichspannung in eine rechteckförmige Wechselspannung umwandelt. Die Amplitude des Modulationssignals, also der aufmodulierten hochfrequenten Wechselspannung, ist durch die Dimensionierung des Ausgangsfilters der Vollbrücke (Ausgangskondensator $C_A$) sowie durch die Induktivität der Sekundärwicklung (IPSH, IPSR) des Impulszündtransformators festgelegt. Dadurch, dass bei der integrierten Gasentladungslampe 5 diese Komponenten untrennbar miteinander verbunden sind, ist eine gute Abstimmung der Komponenten auf die gewünschte Betriebsweise möglich. Durch die überlagerte hochfrequente Spannung tritt die gewünschte Begradigung des Entladungsbogens ein. Der Nachteil dieser Ausführungsform ist die festfrequente Betriebsweise des Gleichspannungswandlers, die keine effektive Schaltentlastung ermöglicht, so dass die Verluste des Systems steigen.

In einer zweiten Ausführungsform nach **Fig. 24** wird die überlagerte hochfrequente Spannung durch einen Signalgenerator 9230 erzeugt. Dieser koppelt die hochfrequente Spannung im Lampenkreis zwischen einer Drossel $L_K$ und der Primärwicklung des Zündtransformators der Zündelektronik 910 ein. Die Einkopplung vor dem Zündtrafo ist wichtig, da der Signalgenerator 9230 sonst hochspannungsfest ausgeführt sein müsste. Die Drossel dient dazu, den Zwischenkreiskondensator $C_{ZK}$ zu entkoppeln, da er sonst die eingekoppelte hochfrequente Spannung zu sehr bedämpfen würde. Aus diesem Grund sollte auch die Induktivität des Zündtransformators der Zündelektronik 910 möglichst klein sein. Der Signalgenerator kann dabei so ausgelegt sein, dass die Frequenz der eingekoppelten hochfrequenten Spannung wiederum moduliert wird, um einen sichereren und flackerfreien Betrieb des Gasentladungslampenbrenners 50 zu erreichen.

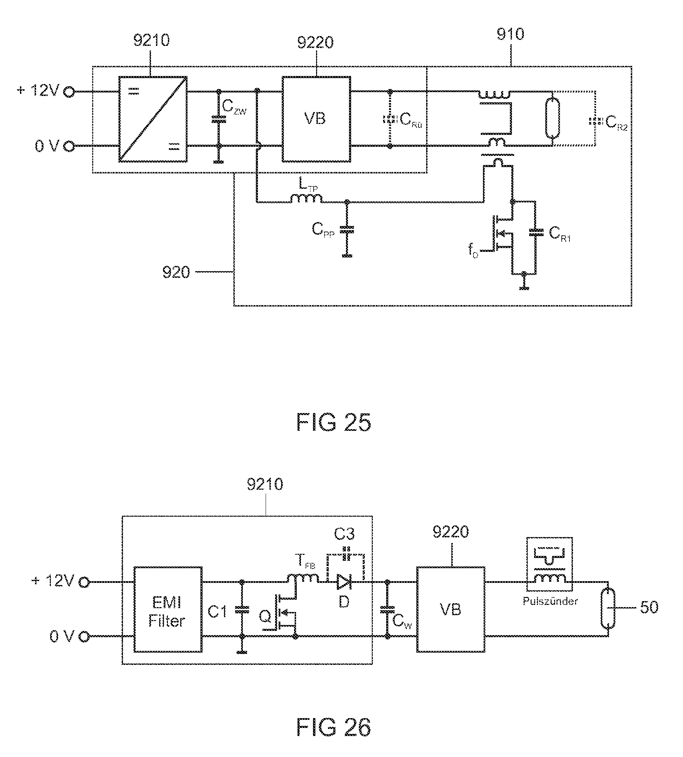

In einer dritten Ausführungsform, die in **Fig. 25** gezeigt ist, ist der Signalgenerator in die Zündelektronik 910 integriert. Hier wird der Gasentladungslampenbrenner 50 durch eine Resonanzzündung gestartet. Die Zündelektronik weist einen für hochfrequenten Betrieb ausgelegten Zündtransformator $T_{IR}$ auf, der von einem Signalgenerator, der als Klasse-E Wandler ausgeführt ist, angesteuert wird. Der Zündtransformator $T_{IR}$ ist so zu dimensionieren, dass der zumindest die Grundschwingung der auftretenden Hochfrequenz und die identisch mit der Schaltfrequenz des Klasse-E-Wandler ist noch hinreichend gut übertragen kann, insbesondere sein Wirkungsgrad bei dieser Frequenz besser als 10% ist. Die Schaltfrequenz des Klasse-E-Wandlers während der Zündung beträgt einen Wert zwischen 80 kHz und 10 MHz. Vorzugsweise wählt man die Frequenz jedoch oberhalb von 300 kHz da hier eine kleine Bauform möglich ist und unterhalb von 4 MHz da hier die erreichbaren Wirkungsgrade besonders hoch sind. Die Ansteuerung des Zündtransformators erfolgt über eine galvanisch getrennte Primärwicklung. Die Sekundärwicklung ist auf zwei galvanisch getrennte Wicklungen aufgeteilt, die jeweils zwischen eine Lampenelektrode und den Wechselrichter 9220 geschaltet sind. Der Signalgenerator erzeugt hier einen hochfrequenten Strom durch die Primärwicklung des Zündtransformators $T_{IR}$, der auf der Sekundärseite eine Resonanz in einem Resonanzkreis anregt, die den Gasentladungslampenbrenner 50 durchbrechen lässt. Der Resonanzkreis besteht dabei aus der Sekundärinduktivität des Zündtransformators $T_{IR}$ und einer über der Lampe liegenden Kapazität $C_{R2}$. Da die Kapazität $C_{R2}$ sehr klein ist, muss sie nicht unbedingt als Bauteil in die Zündelektronik 910 integriert sein, sondern kann durch bauliche Maßnahmen erzeugt werden.

Sobald der Gasentladungslampenbrenner 50 gezündet hat, wird die Betriebsweise des Signalgenerators umgestellt, so dass er nun ein hochfrequentes Signal über den Zündtransformator $T_{IR}$ einkoppelt, dass zur Bogenbegradigung auf die Lampenspannung aufmoduliert wird. Dies birgt den Vorteil, dass die Frequenz und die Amplitude der aufmodulierten Spannung relativ frei einstellbar ist, ohne dass auf eine optimierte Betriebsweise des Gleichspannungswandlers 9210 oder des Wechselrichters 9220 verzichtet werden muss. Durch diese Schaltungstopologie kann von der Zündelektronik 910 auch eine über den Resonanzkreis erzeugte erhöhte Übernahmespannung für den Gasentladungslampenbrenner 50 zur Verfügung gestellt werden, so dass diese nicht vom Gleichspannungswandler 9210 erzeugt werden muss. Mit dieser Maßnahme kann die Betriebsweise des Gleichspannungswandlers 9210 weiter optimiert werden, da der notwendige Ausgangsspannungsbereich des Gleichspannungswandlers 9210 kleiner wird. Auch muss der Wechselrichter 9220 weniger Leistung umsetzen, da ein Teil der Lampenleistung über die aufmodulierte Lampenspannung eingekoppelt wird. Diese Ausführungsform bietet somit die größte Freiheit bei der Umsetzung der Betriebsparameter, so dass ein optimierter und zuverlässiger Betrieb des Gasentladungslampenbrenners 50 bei begradigtem Entladungsbogen möglich wird.

Fig. 26 zeigt eine gegenüber dem Stand der Technik vereinfachte Ausführungsform eines Gleichspannungswandlers 9210. Die im Stand der Technik üblichen Gleichspannungswandler für Vorschaltgeräte, die an einem Bordnetz eines Automobils betreibbar sind, weisen eine Sperrwandlertopologie, die auch als Flyback bezeichnet wird, auf, da die Bordspannung von 12V auf eine größere Spannung hochgesetzt werden muss. Dadurch, dass bei der integrierten Gasentladungslampe 5 die elektrische Kontaktierung erst beim Einsetzen der Lampe in den Scheinwerfer 3 erfolgt, kann ein vereinfachter Wandler in Form eines Hochsetzstellers, auch als Boost-Wandler bezeichnet, mit einem Spartransformator $T_{FB}$ verwendet werden. Dies ist möglich, da bei der verwendeten elektromechanischen Schnittstelle eine versehentliche Kontaktierung des Wandlerausgangs mit Fahrzeugmasse, die eine Zerstörung des Boost-Wandlers zur Folge hätte, ausgeschlossen werden kann. Die bisher im Stand der Technik eingesetzten Gleichspannungswandler in Sperrwandlertopologie erlauben eine Unterbrechung des Energieflusses trotz ausgangsseitigem Kurzschluss. Dies ist im vorliegenden Wandlerkonzept nach Fig. 26 nicht der Fall, da hier keine galvanische Trennung im Leistungspfad des Wandlers vorhanden ist, der den Energiefluss vom Eingang, also dem 12V Bordnetz, zum Ausgang, also zur Stromzuführung des Gasentladungslampenbrenner 50 die versehentlich mit der Fahrzeugmasse verbunden wurde, unterbrechen könnte. Ansonsten ist der Gleichspannungswandler in üblicher Weise aufgebaut. Er besteht aus einem eingangsseitigem EMI-Filter, einem Eingangskondensator C1, einem Wandlerschalter Q, einer als Spartransformator ausgeführten Induktivität $T_{FB}$, die über eine Diode D auf den Zwischenkreiskondensator $C_{ZW}$ arbeitet. Dieser Wandler ist gegenüber den im Stand der Technik verwendeten Sperrwandlern erheblich kostengünstiger, somit ist die integrierte Gasentladungslampe 5 gegenüber einem Lampensystem nach dem Stand der Technik, mit einer Gasentladungslampe und einem externen elektronischen Betriebsgerät in der Systembetrachtung erheblich kostengünstiger.

Bezugszeichenliste

| | |
|---|---|
| 20 | elektronisches Betriebsgerät |
| 210 | elektrischer Kontakt |
| 220 | elektrischer Kontakt |
| 230 | elektrischer Kontakt |
| 240 | elektrischer Kontakt |
| 3 | Scheinwerfer |
| 33 | Reflektor des Scheinwerfers |
| 35 | Trägerteil mit Gegenkontakten |
| 350 | Gegenkontakte |
| 351, 352 | Schlitze |
| 5 | Integrierte Gasentladungslampe |
| 50 | Gasentladungslampenbrenner |
| 502 | Entladungsgefäß |
| 504 | Elektroden |
| 506 | Molybdänfolie |
| 52 | Metallklammer zum Halten des Gasentladungslampenbrenners |
| 53 | Halteblech für Metallklammer |
| 54 | metallische Beschichtung des Außenkolbens |
| 56 | sockelnahe Stromzuführung des Gasentladungslampenbrenners |
| 57 | sockelferne Stromzuführung |
| 70 | Lampensockel |
| 702 | Referenzring |
| 703 | aus dem Referenzring heraustretende Noppen |
| 705 | Halteklammer für Gasentladungslampe |
| 7051 | Nut, in die die Halteklammer einhakt |
| 7053 | Ausbuchtung in der Halteklammer |
| 71 | Dichtring zum Reflektor |
| 72 | elektrisch leitfähiges Gehäuse |
| 722 | Laschen |

| | |
|---|---|
| 73 | Dichtungsring zwischen Sockelplatte und Sockel |
| 74 | Sockelplatte |
| 741 | Sockelplattendom |
| 80 | Zündtransformator |
| 81 | Ferritkern |
| 811 | erste Ferritkernhälfte |
| 8110 | erste Hälfte des inneren Teils des Ferritkerns |
| 8112 | Seitenwand der ersten Ferritkernhälfte |
| 81121 | längliche Vertiefungen |
| 812 | zweite Ferritkernhälfte |
| 814-816 | Rückschlussferrite |
| 8120 | zweite Hälfte des inneren Teils des Ferritkerns |
| 8122 | Seitenwand der zweiten Ferritkernhälfte |
| 81221 | längliche Vertiefungen |
| 821 | Hohlzylinder |
| 822 | runde Platten |
| 823 | Schlitz |
| 824 | hohlzylindrischer Mittelkern |
| 825 | erste Platte |
| 826 | zweite Platte |
| 827 | Absatz |
| 85 | Kontaktkörper |
| 851 | erste Dachfläche |
| 852 | zweite Dachfläche |
| 86 | Primärwicklung |
| 861, 863, 865 | Zylinderförmige nach innen weisende Rundungen |
| 862, 864 | Laschen zur el. Kontaktierung |
| 8620, 8640 | Radien bzw. Rundungen am Enden des Blechbandes der Primärwicklung |
| 866-869 | Befestigungslaschen zur mech. Befestigung |
| 87 | Sekundärwicklung |
| 871 | inneres Ende der Sekundärwicklung |
| 872 | äußeres Ende der Sekundärwicklung |
| 910 | Zündelektronik |
| 920 | Betriebselektronik |
| 930 | Gesamtbetriebselektronik |
| 9210 | Gleichspannungswandler |
| 9220 | Wechselrichter |
| 9230 | Signalgenerator |

**Patentansprüche**

1. Zündtransformator (80) zum Erzeugen einer Zündspannung für eine Hochdruckgasentladungslampe (5), die einen Hochdruckgasentladungslampenbrenner (50) aufweist, mit einem Ferritkern (81) und mindestens einer Primärwicklung (86) sowie mindestens einer Sekundärwicklung (87), wobei die mindestens eine Sekundärwicklung (87) von einem isolierten Metallband gebildet wird, das derart auf dem Ferritkern (81) angeordnet ist, dass das Hochspannung führende Ende der mindestens einen Sekundärwicklung (87) innen liegend angeordnet ist, wobei der Ferritkern die Form einer Filmspule aufweist, und die Sekundärwicklung (87) wie ein Film auf den Ferritkern aufgewickelt ist, wobei der Ferritkern (81) zwei im wesentlichen parallele Seitenwände und einen Mittelkern aufweist, und die Außenkontur der Seitenwände rund oder im Wesentlichen quadratisch ist, und der Zündtransformator eine Primärwicklung (86) mit mindestens einer Windung aufweist, **dadurch gekennzeichnet, dass** die Primärwicklung (86) als bandförmiges, federndes Stanzbiegeteil so ausgeführt ist, dass die Sekundärwicklung (87) durch die Federkraft der Primärwicklung gesichert wird, und das äußere Ende der Sekundärwicklung (87) elektrisch mit der Primärwicklung (86) verbunden ist.

2. Zündtransformator (80) nach Anspruch 1, **dadurch gekennzeichnet, dass** der Ferritkern (81) zwei Ferritkernhälften (811, 812) aufweist, die zusammengesetzt die Form einer Filmspule ergeben, wobei der Mittelkern (8110, 8120) des Ferritkerns (81) eine hohlzylindrische Form aufweist und aus zwei Hälften (8110, 8120) besteht, und eine Ferritkernhälfte (811, 812) je eine Seitenwand und eine Mittelkernhälfte (8110, 8120) aufweist.

3.  Zündtransformator (80) nach Anspruch 1, **dadurch gekennzeichnet, dass** der Ferritkern (81) drei Teile aufweist, die zentrisch übereinander gelegt die Form einer Filmspule ergeben, wobei zwei der drei Teile im wesentlichen identisch sind und die beiden Seitenwände der Filmspule bilden und der dritte Teil eine hohlzylindrische Form aufweist, die den Mittelkern der Filmspule bildet, wobei der hohlzylindrische dritte Teil einen Schlitz in Längsrichtung aufweist.

4.  Zündtransformator (80) nach einem der Ansprüche 2 oder 3, **dadurch gekennzeichnet, dass** der Zündtransformator (80) einen Kontaktkörper (85) aufweist der sich im Inneren des hohlzylindrischen Bereichs des Ferritkerns (81) befindet, der Anfang des Metallbandes der Sekundärwicklung zwischen den beiden Kernhälften oder durch den Schlitz im hohlzylindrischen dritten Teil nach innen geführt ist und dort elektrisch mit dem Kontaktkörper verbunden ist, und der Kontaktkörper wiederum elektrisch mit einer Stromzuführung des Hochdruckgasentladungslampenbrenners verbindbar ist.

5.  Zündtransformator (80) nach Anspruch 4, **dadurch gekennzeichnet, dass** der Kontaktkörper (85) aus einem gebogenen Blechteil besteht, wobei das gebogene Blechteil aus einer im wesentlichen Rechteckigen Fläche besteht, die zylinderförmig zusammengebogen ist und zwei lateral abstehende Laschen aufweist, die sich im gebogenen Zustand gegenüberstehen und wie zwei Dachflächen gegeneinander geneigt sind, und an dem Ende, an dem sich die beiden Dachflächen (851, 852) berühren so ausgeformt sind, dass ein Stromzuführungsdraht (56) der Hochdruckentladungslampenelektrode (504) zentriert klemmbar ist.

6.  Zündtransformator (80) einem der vorhergehenden Ansprüche, **dadurch gekennzeichnet, dass** das Stanzbiegeteil der Primärwicklung (86) rund oder eckig ausgeformt ist, wobei im Fall der eckigen Ausformung an den Ecken das Stanzbiegeteil zylinderförmige, nach innen weisende Rundungen (861, 863, 865) aufweist, in die Rückschlussferrite (814-816) einklemmbar sind.

7.  Zündtransformator (80) nach Anspruch 6, **dadurch gekennzeichnet, dass** das Stanzbiegeteil der Primärwicklung (86) mindestens zwei spiralförmig übereinander liegende Windungen aufweist.

8.  Zündtransformator (80) nach einem der vorhergehenden Ansprüche, **dadurch gekennzeichnet, dass** das Stanzbiegeteil der Primärwicklung (86) lateral angeformte erste Laschen (866-869) aufweist, die der mechanischen Befestigung des Zündtransformators (80) dienen.

9.  Zündtransformator (80) nach einem der vorhergehenden Ansprüche, **dadurch gekennzeichnet, dass** das Stanzbiegeteil der Primärwicklung (86) an beiden Enden nach außen weisende Rundungen (8620, 8640) zur mechanischen Entlastung von am jeweiligen Ende lateral angeformten zweiten Laschen (862, 864) aufweist, die wiederum der elektrischen Kontaktierung mit einer Zündelektronik dienen.

10. Zündtransformator (80) nach einem der vorhergehenden Ansprüche, **dadurch gekennzeichnet, dass** der Zündtransformator mit einem geeigneten Mittel, insbesondere mit einem Tränklack, getränkt ist, oder mit Vergussmasse vergossen ist, um die mechanische Stabilität und die elektrische Isolationsfestigkeit zu erhöhen.

11. Zündtransformator (80) nach Anspruch 10, **dadurch gekennzeichnet, dass** die Seitenwände (8112, 8122) des Zündtransformators auf der der Wicklung zugewandten Seite zur Verbesserung des Tränkens oder Vergießens von außen nach innen verlaufende längliche Vertiefungen (81121, 81221) aufweisen.

12. Zündtransformator (80) nach Anspruch 2 oder 3, **dadurch gekennzeichnet, dass** das Verhältnis aus Durchmesser zu Höhe des Ferritkerns größer als 1 und kleiner als 9 ist, insbesondere dass es größer als 1,5 und kleiner als 5 ist.

13. Zündtransformator (80) nach einem der vorhergehenden Ansprüche, **dadurch gekennzeichnet, dass** der Zündtransformator eine Höhe von 5mm-10mm und einen Durchmesser von 15mm-35mm aufweist, insbesondere eine Höhe von 8mm und einen Durchmesser von 26mm aufweist.

14. Integrierte Gasentladungslampe (5) mit einem Zündtransformator (80) gemäß den Ansprüchen 1-13.

**Claims**

1.  Starting transformer (80) for generating a starting voltage for a high-pressure gas discharge lamp (5), which has a high-pressure gas discharge lamp burner (50), comprising a ferrite core (81) and at least one primary winding (86) and at least one secondary winding (87), wherein the at least one secondary winding (87) is formed by an insulated metal strip, which is arranged on the ferrite core (81) in such a way that that end of the at least one secondary winding (87) which conducts a high voltage is arranged on the inside, wherein the ferrite core has the form of a film coil, and the secondary winding (87) is wound onto the ferrite core as a film, wherein the ferrite core (81) has two substantially parallel side walls and a central core, and the outer contour of the side walls is round or substantially square, and the starting transformer has a primary winding (86) having at least one turn, **characterized in that** the primary winding (86) is in the form of a stripshaped, resilient punched and bent part such that the secondary winding (87) is secured by the spring force of the primary winding, and the outer end of the secondary winding (87) is electrically connected to the primary winding (86).

2. Starting transformer (80) according to Claim 1, **characterized in that** the ferrite core (81) has two ferrite core halves (811, 812), which, when assembled, give the form of a film coil, wherein the central core (8110, 8120) of the ferrite core (81) has a hollow-cylindrical form and consists of two halves (8110, 8120), and a ferrite core half (811, 812) has in each case one side wall and a central core half (8110, 8120).

3. Starting transformer (80) according to Claim 1, **characterized in that** the ferrite core (81) has three parts, which, when laid centrally one above the other, give the form of a film coil, wherein two of the three parts are substantially identical and form the two side walls of the film coil, and the third part has a hollow-cylindrical form, which forms the central core of the film coil, wherein the hollow-cylindrical third part has a slot in the longitudinal direction.

4. Starting transformer (80) according to either of Claims 2 and 3, **characterized in that** the starting transformer (80) has a contact body (85), which is located in the interior of the hollow-cylindrical region of the ferrite core (81), the start of the metal strip of the secondary winding is guided inwards between the two core halves or through the slot in the hollow-cylindrical third part and is connected there electrically to the contact body, and the contact body in turn is electrically connectable to a power supply line of the high-pressure gas discharge lamp burner.

5. Starting transformer (80) according to Claim 4, **characterized in that** the contact body (85) consists of a bent sheet-metal part, wherein the bent sheet-metal part consists of a substantially rectangular surface, which is bent together in the form of a cylinder and has two laterally protruding lugs, which are opposite one another in the bent state and are inclined with respect to one another as two top surfaces, and are shaped at the end at which the two top surfaces (851, 852) touch one another in such a way that a power supply wire (56) of the high-pressure discharge lamp electrode (504) can be clamped in centred fashion.

6. Starting transformer (80) according to one of the preceding claims, **characterized in that** the punched and bent part of the primary winding (86) is shaped so as to be round or angular, wherein, in the case of the angular shaping, the punched and bent part has cylindrical inwardly pointing rounded portions (861, 863, 865) at the corners, with it being possible for the magnetic return path ferrites (814-816) to be clamped into said rounded portions.

7. Starting transformer (80) according to Claim 6, **characterized in that** the punched and bent part of the primary winding (86) has at least two turns which lie one above the other in spiral form.

8. Starting transformer (80) according to one of the preceding claims, **characterized in that** the punched and bent part of the primary winding (86) has first lugs (866-869) which are integrally formed laterally and which are used for mechanically fastening the starting transformer (80).

9. Starting transformer (80) according to one of the preceding claims, **characterized in that** the punched and bent part of the primary winding (86) has outwardly pointing rounded portions (8620, 8640) at both ends for relieving the mechanical load on second lugs (862, 864), which are integrally formed laterally on the respective end and which are in turn used for making electrical contact with starting electronics.

10. Starting transformer (80) according to one of the preceding claims, **characterized in that** the starting transformer is impregnated with a suitable agent, in particular with impregnating varnish, or is potted with a potting compound in order to increase the mechanical stability and dielectric strength.

11. Starting transformer (80) according to Claim 10, **characterized in that** the side walls (8112, 8122) of the starting transformer have elongate depressions (81121, 81221) extending from the outside inwards on the side facing the winding for improving the impregnation or potting.

**12.** Starting transformer (80) according to Claim 2 or 3, **characterized in that** the ratio of the diameter to the height of the ferrite core is greater than 1 and less than 9, in particular greater than 1.5 and less than 5.

**13.** Starting transformer (80) according to one of the preceding claims, **characterized in that** the starting transformer has a height of 5 mm - 10 mm and a diameter of 15 mm - 35 mm, in particular a height of 8 mm and a diameter of 26 mm.

**14.** Integrated gas discharge lamp (5) comprising a starting transformer (80) according to Claims 1-13.

**Revendications**

**1.** Transformateur d'allumage (80) destiné à produire une tension d'allumage pour une lampe à décharge gazeuse à haute pression (5), qui présente un brûleur de lampe à décharge gazeuse à haute pression (50), avec un noyau de ferrite (81) et au moins un enroulement primaire (86) ainsi qu'au moins un enroulement secondaire (87), dans lequel ledit au moins un enroulement secondaire (87) est formé par une bande métallique isolée, qui est disposée sur le noyau de ferrite (81) de telle manière que l'extrémité dudit au moins un enroulement secondaire (87) conduisant une haute tension soit disposée à l'intérieur, dans lequel le noyau de ferrite présente la forme d'une bobine de film, et l'enroulement secondaire (87) est enroulé comme un film sur le noyau de ferrite, dans lequel le noyau de ferrite (81) présente deux parois latérales essentiellement parallèles et un noyau central, et le contour extérieur des parois latérales est rond ou essentiellement carré, et le transformateur d'allumage présente un enroulement primaire (86) avec au moins une spire, **caractérisé en ce que** l'enroulement primaire (86) est réalisé sous forme de pièce pliée découpée élastique en forme de bande, **en ce que** l'enroulement secondaire (87) est fixé par la force élastique de l'enroulement primaire, et l'extrémité extérieure de l'enroulement secondaire (87) est connectée électriquement à l'enroulement primaire (86).

**2.** Transformateur d'allumage (80) selon la revendication 1, **caractérisé en ce que** le noyau de ferrite (81) présente deux moitiés de noyau de ferrite (811, 812), qui assemblées prennent la forme d'une bobine de film, dans lequel le noyau central (8110, 8120) du noyau de ferrite (81) présente une forme cylindrique creuse et se compose de deux moitiés (8110, 8120), et une moitié de noyau de ferrite (811, 812) présente respectivement une paroi latérale et une moitié de noyau central (8110, 8120).

**3.** Transformateur d'allumage (80) selon la revendication 1, **caractérisé en ce que** le noyau de ferrite (81) présente trois parties qui, posées en position centrée l'une au-dessus de l'autre, prennent la forme d'une bobine de film, dans lequel deux des trois parties sont essentiellement identiques et forment les deux parois latérales de la bobine de film et la troisième partie présente une forme cylindrique creuse, qui forme le noyau central de la bobine de film, dans lequel la troisième partie cylindrique creuse présente une fente en direction longitudinale.

**4.** Transformateur d'allumage (80) selon l'une des revendications 2 ou 3, **caractérisé en ce que** le transformateur d'allumage (80) présente un corps de contact (85), qui se trouve à l'intérieur de la région cylindrique creuse du noyau de ferrite (81), le début de la bande métallique de l'enroulement secondaire est guidé vers l'intérieur entre les deux moitiés de noyau ou à travers la fente dans la troisième partie cylindrique creuse et y est connectée électriquement avec le corps de contact, et le corps de contact peut de nouveau être électriquement connecté à une arrivée de courant du brûleur de lampe à décharge gazeuse à haute pression.

**5.** Transformateur d'allumage (80) selon la revendication 4, **caractérisé en ce que** le corps de contact (85) se compose d'une pièce de tôle courbée, dans lequel la pièce de tôle courbée se compose d'une face essentiellement rectangulaire, qui est courbée sous forme cylindrique et qui présente deux attaches latéralement saillantes, qui se font face à l'état courbé et qui sont inclinées à la manière de deux pans de toiture et qui, à l'extrémité où les deux pans de toiture (851, 852) se touchent, sont façonnées de telle manière qu'un fil d'arrivée de courant (56) de l'électrode de la lampe à décharge à haute pression (504) puisse être pincé en position centrée.

**6.** Transformateur d'allumage (80) selon l'une quelconque des revendications précédentes, **caractérisé en ce que** la pièce pliée découpée de l'enroulement primaire (86) est de forme ronde ou polygonale, dans lequel, dans le cas d'une forme polygonale, la pièce pliée découpée présente dans les angles des arrondis cylindriques tournés vers l'intérieur (861, 863, 865), dans lesquels des ferrites de fermeture (814-816) peuvent être coincées.

**7.** Transformateur d'allumage (80) selon la revendication 6, **caractérisé en ce que** la pièce pliée découpée de l'enroulement primaire (86) présente au moins deux spires superposées en forme de spirales.

**8.** Transformateur d'allumage (80) selon l'une quelconque des revendications précédentes, **caractérisé en ce que** la pièce pliée découpée de l'enroulement primaire (86) présente des premières attaches formées latéralement (866-869), qui servent pour la fixation mécanique du transformateur d'allumage (80).

**9.** Transformateur d'allumage (80) selon l'une quelconque des revendications précédentes, **caractérisé en ce que** la pièce pliée découpée de l'enroulement primaire (86) présente aux deux extrémités des arrondis tournés vers l'extérieur (8620, 8640) pour le délestage mécanique de deuxièmes attaches (862, 864) formée latéralement à l'extrémité respective, qui servent de nouveau pour la mise en contact électrique avec une électronique d'allumage.

**10.** Transformateur d'allumage (80) selon l'une quelconque des revendications précédentes, **caractérisé en ce que** le transformateur d'allumage est imprégné avec un moyen approprié, en particulier avec une laque d'imprégnation, ou est surmoulé avec une masse de moulage, afin d'accroître la stabilité mécanique et la rigidité diélectrique.

**11.** Transformateur d'allumage (80) selon la revendication 10, **caractérisé en ce que** les parois latérales (8112, 8122) du transformateur d'allumage présentent sur le côté tourné vers l'enroulement des creux allongés (81121, 81221) s'étendant de l'extérieur vers l'intérieur pour l'amélioration de l'imprégnation ou du surmoulage.

**12.** Transformateur d'allumage (80) selon la revendication 2 ou 3, **caractérisé en ce que** le rapport du diamètre à la hauteur du noyau de ferrite est supérieur à 1 et inférieur à 9, en particulier supérieur à 1,5 et inférieur à 5.

**13.** Transformateur d'allumage (80) selon l'une quelconque des revendications précédentes, **caractérisé en ce que** le transformateur d'allumage présente une hauteur de 5 mm - 10 mm et un diamètre de 15 mm - 35 mm, en particulier une hauteur de 8 mm et un diamètre de 26 mm.

**14.** Lampe à décharge gazeuse intégrée (5) avec un transformateur d'allumage (80) selon les revendications 1 à 13.

57

5

52

53  703

702

70

220

72

210

80   920   910 74  73

FIG 1

FIG 2

FIG 3

FIG 4

FIG 5

FIG 6

FIG 7

FIG 8

702  71  70

703

74

FIG 9

FIG 10

FIG 11

FIG 12

FIG 13

87
822
868
867
864
862
822
866
821

FIG 14

82
822
823
822
821

FIG 15

825

86

827

824

826

FIG 16

824   825

826

FIG 17

FIG 18a

(Stand der Technik)

FIG 18b

(Stand der Technik)

FIG 19

FIG 20

FIG 21

FIG 22

FIG 23

FIG 24

9210     9220     910

+ 12V

$C_{ZW}$     VB     $C_{Rü}$     $C_{R2}$

0 V

$L_{TP}$

$C_{PP}$     $f_0$     $C_{R1}$

920

FIG 25

9210

C3

$T_{FB}$     9220

+ 12V

EMI
Filter     C1     Q     D     $C_W$     VB     Pulszünder     50

0 V

FIG 26

54

FIG 27

FIG 28

FIG 29

FIG 30

FIG 31

FIG 32

FIG 33

FIG 34

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19913942 C1
- DE 102004044368 A1
- WO 2007087818 A

**In der Beschreibung aufgeführte Nicht-Patentliteratur**

- **O. LANGENSCHEIDT et al.** The boundary layers of ac-arcs at HID-electrodes: phase resolved electrical measurements and optical observations. *J. Phys D,* 2007, vol. 40, 415-431